(19) Europäisches Patentamt
European Patent Office
Office européen des brevets

(11) Publication number: **0 029 327 B1**

(12) **EUROPEAN PATENT SPECIFICATION**

(45) Date of publication of patent specification: **19.12.84**

(51) Int. Cl.³: **H 04 N 1/00**, H 04 N 1/41

(21) Application number: **80303987.4**

(22) Date of filing: **07.11.80**

(54) **Apparatus and method for reproducing image and word data.**

(30) Priority: **08.11.79 US 92772**

(43) Date of publication of application:
**27.05.81 Bulletin 81/21**

(45) Publication of the grant of the patent:
**19.12.84 Bulletin 84/51**

(84) Designated Contracting States:
**DE FR GB IT NL**

(56) References cited:
**FR-A-2 374 796**
**FR-A-2 418 588**
**US-A-3 394 352**
**US-A-3 668 685**
**US-A-3 920 895**
**US-A-4 151 562**

**TELECOMMUNICATIONS & RADIO ENGINEERING, vol. 30/31, no. 1, January 1976, pages 35-39 Washington, U.S.A. V.A. UZILEVSKIY: "A photocomposing system for the transmission of newspapers over communications channels"**

(73) Proprietor: **XEROX CORPORATION**
**Xerox Square - 020**
**Rochester New York 14644 (US)**

(72) Inventor: **Vieri, Bruno J.**
**26520 Mazur Drive**
**Rancho Palos Verdes, Ca. 90274 (US)**
Inventor: **Rider, Ronald E.**
**2906 Via Victoria**
**Palos Verdes Estates, Ca. 90274 (US)**

(74) Representative: **Weatherald, Keith Baynes et al**
**European Patent Attorney Rank Xerox Limited**
**Patent Department 338 Euston Road**
**London NW1 3BH (GB)**

(56) References cited:
**IBM TECHNICAL DISCLOSURE BULLETIN, vol. 15, no. 8, January 1973, page 2367 New York, U.S.A. T. CASSADA et al.: "Graphic communication system incorporating scan resolution control"**
**NACHRICHTENTECHNISCHE ZEITSCHRIFT N.T.Z., vol. 26, no. 9, September 1973, pages 417-420 Berlin, DE. P.A. STERN: "Simple irrelevancy-reducing algorithms for the transmission of coarse facsimile data"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 029 327 B1

## Description

This invention is a system for printing multi-page documents of mixed orthographic (word) and imaginal data.

Prior systems for printing, copying or transmitting images and text have been functionally limited in various ways. Standard computer printers, or the printers associated with word processing systems, for instance, will accept only orthographic data in character-coded form for printing. The versatility of these printers may be enhanced by coupling the data sources and printers by telephone lines, but imaginal data cannot be input or printed.

Copiers and facsimile systems reproduce images, either locally or remotely, but do not handle character-coded data, and typical facsimile systems are limited to low resolution uses.

Newspaper phototypesetting systems, such as the one described in US—A—3 668 685 can receive character-coded text and compressed images; generate fonts; decompress the images, and assemble an entire newspaper page from a cathode ray tube onto film, but the various image and word data are stored separately in dedicated stores, and are fed selectively from those stores to the CRT so as to build up the page on film. Therefore the data representing the word and image information are not available in this known system in a form suitable for driving a raster output scanner or serial printer in order to produce a copy of an entire page.

Several systems have been introduced recently which can copy an original image, communicate with remote locations, and produce a hard copy, but in all cases, certain functional limitations remain. The IBM model 6670, for instance, can electrographically produce on a separate copier respectively an image received from a built-in platen and scanner, and character-coded data received through telephone lines, from magnetic media, or the like. This system, however, is limited in that an image placed on the platen of one unit cannot be transmitted to another unit since this image is not first reduced to a form which can be electronically transmitted, but is simply coupled optically to the output printer.

The problem in first converting the image into an electrical (digital) form and then using it to drive a printer or transmission line is that an unrealistically high bandwidth had been required to couple high resolution images because of the large information content.

In contrast, facsimile systems have long been used to transmit images, but the data rate and resolution, and therefore the speed and image quality, have been too low for use for the kind of document printing required in the office environment.

What is required is a system that can encode image information accept character-coded data, transmit and receive both kinds of data at high speed while preserving image quality, and merge and print to produce a final set of collated documents.

Accordingly the present invention provides a system and a method for merging text and image data to produce a bit map, and using a serial printer to convert the bit map contents into a printed page, which are as claimed in the accompanying respective claims.

The described embodiment comprises a raster input scanner which scans originals, converts the electrical output into digital form, and compresses the data for storage on a disk. At the same time character-coded data may be received from other office machines through telephone lines or the input of magnetic media. At this point, all the required data are available to the system computer in digital form and may be operated on in a variety of ways. Individual images may be cropped, reduced, and laterally repositioned. Text (orthographic images) may be generated in any font and type size. The results of these operations may then be merged into a bit map containing the data necessury for a full page. Finally, the result may be printed at the system raster output scanner or transmitted to a remote site. To guarantee that high quality images are transmitted in realistic times, data compression, discussed below, is employed. The result is a system which can perform the following system functions; a) electronic mail containing a mix of quality images and character-coded text, transmitted at relatively high speed, b) document make ready, the electronic composition of images and test under operator control, c) the automatic merging of images and text, and d) electronic pre-collation, a single reading in of text and images resulting in a sequenced plurality of collated output copies. This last function is equivalent to precollating copying when the input consists of only scanned images and to electronic printing when only character codes are input.

The present invention will now be described by way of example with reference to the accompanying drawings, in which:—

Figure 1 is an isometric view of the Image Input Terminal (IIT) of the present invention;

Figure 2 is a side view in cross section of the IIT;

Figure 3 is a top plan view of the IIT;

Figure 4 is an enlarged view showing details of the optical system for the IIT;

Figure 5 is an end view in section of the mounting mechanism for the IIT scanning arrays;

Figure 6 is a top view in section of the scanning array support;

Figure 7 is an exploded isometric view showing details of the scanning array support;

Figure 8 is a side view in cross section of the IIT automatic document handler;

Figure 9 is a top plan view of the document handler;

Figure 10 is an isometric view showing the document handler frame;

Figure 11 is a side view showing the platen cover mounting structure and document handler drive train;

Figure 12 is an enlarged view showing details of the platen cover mounting structure;

Figure 13 is a side view showing the document handler catch tray;

Figure 14 is a schematic view illustrating the IIT control system;

Figure 15 is a schematic view illustrating internal construction of a scanning array;

Figure 16A and 16b are timing diagrams showing the time/sequence operation of the scanning arrays;

Figures 17a and 17b are circuit schematics of the sensor board video image signal processing circuitry;

Figures 18a and 18b are schematic views of the scan electronics module timing and control logic;

Figure 19 is a schematic view of the master counter;

Figure 20 is a schematic view showing the principal component parts of the Image Processing Module (IPM);

Figure 21 is a schematic view of the IPM sample and hold circuitry;

Figure 22 is a schematic view of the control circuitry for the sample and hold circuit of Figure 21;

Figure 23 is a schematic view of the IPM interpolation/filter structure;

Figure 24 is a schematic view of the IPM thresholder;

Figures 25a and 25b are schematic views of the IPM screening circuits;

Figure 26 is a schematic view of the IPM video output register;

Figure 27 is a schematic view of the IPM analog-to-digital (A/D) converter for providing image gray scale output;

Figure 28 is a schematic view of the A/D video output register for gray scale image data;

Figure 29 is a schematic view of the control circuitry for the A/D converter shown in Figure 27;

Figure 30 is a schematic view showing elements of the MPU;

Figure 31 is a schematic view of the image size controller;

Figure 32 is a schematic view of the automatic gain control (AGC) logic;

Figure 33 is a schematic view of the shading and bad pixel deletion logic;

Figure 34 is a timing diagram illustrating Binary Rate Multiplier (BRM) operation;

Figure 35 is a block diagram of the video output board (VOB);

Figure 36 is a block diagram of the scanning motor drive circuitry;

Figure 37 is a block diagram of the system.

Figures 38 and 39 are diagrams showing the physical location of the components;

Figure 40 is a diagram of the boards and interconnections of the electronic sub-system;

Figure 41 is a diagram showing the interrelationship to the processor, image input terminal and compressor module;

Figure 42 is a diagram of the interface between the processor, the user interface board and the system control board;

Figure 43 is a diagram of the communications interface, and

Figure 44 is a diagram of the electronic output module.

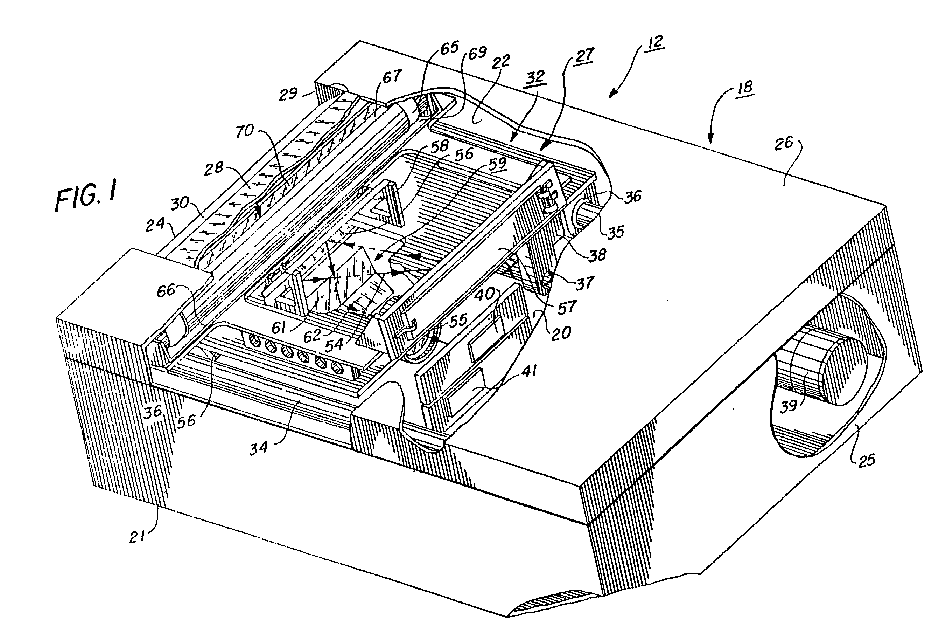

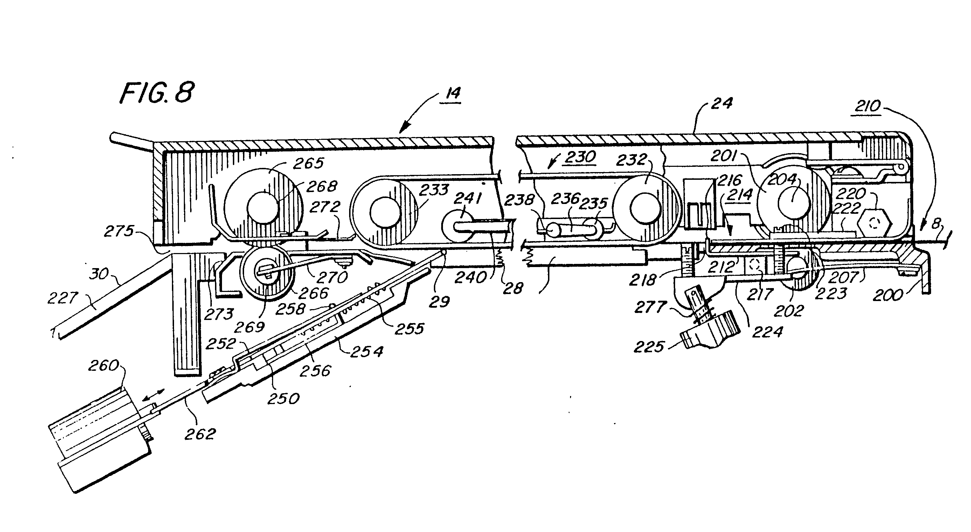

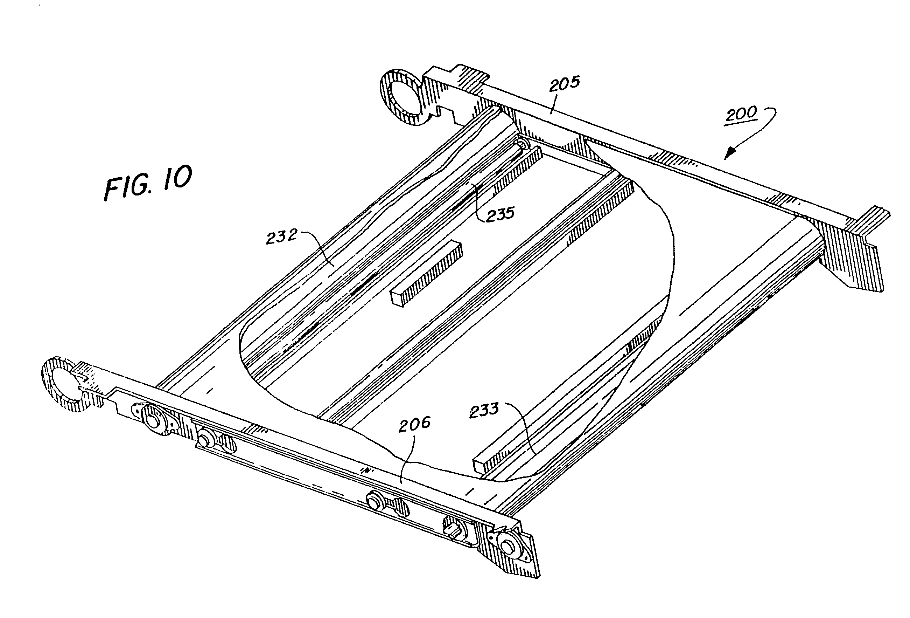

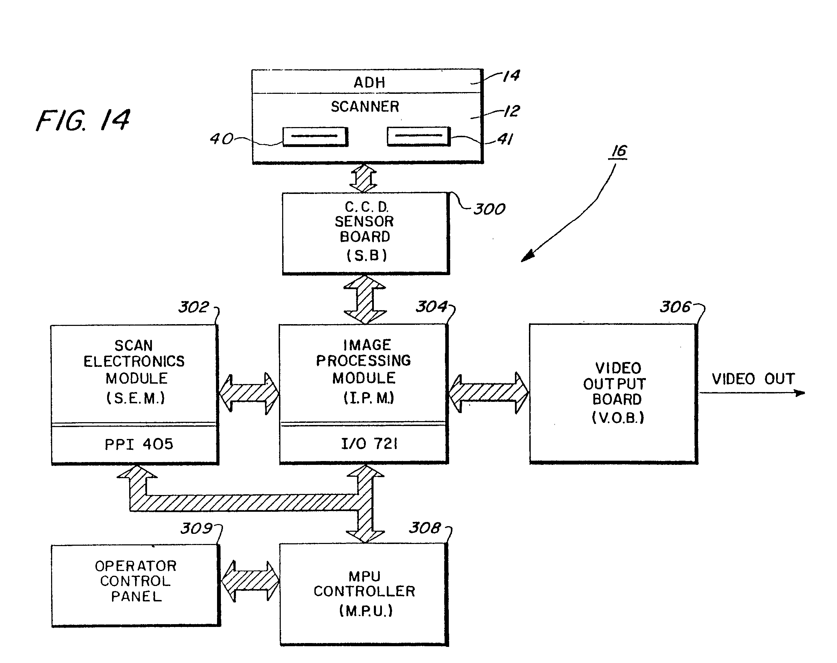

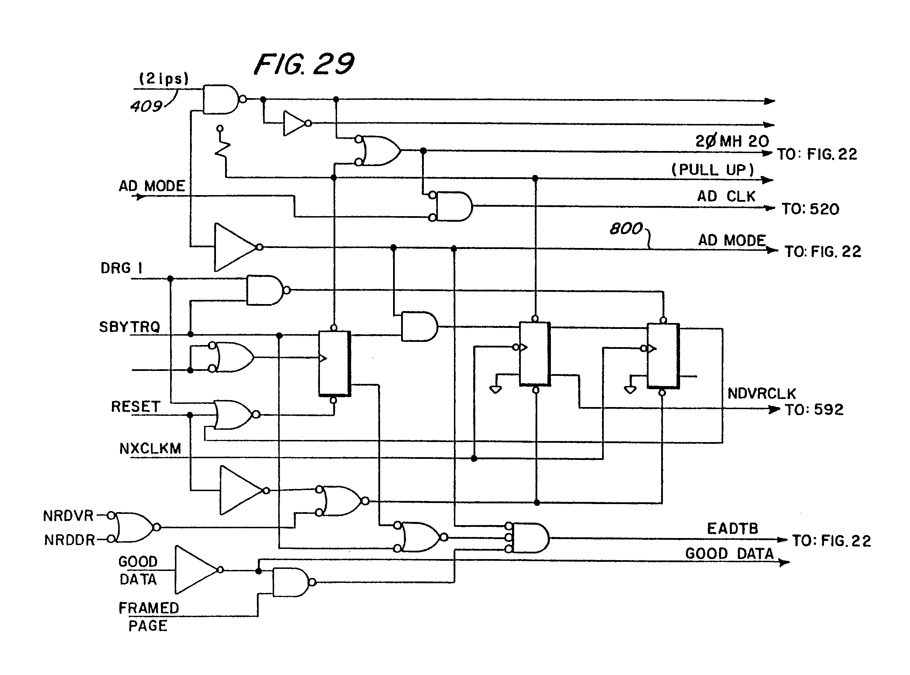

For purposes of description, the image input terminal 10 (hereinafter IIT) is conveniently divided into scanner section 12 for raster scanning an original document (Figures 1—7), a document handler 14 for bringing documents 8 to be scanned into registered position on platen 28 of scanner 12 (Figures 8—13), and control processing section 16 containing the various electronic components and circuits for controlling operation of scanner 12 and document handler 14, and for processing the image signals generated (Figures 14—36).

Referring particularly to Figures 1—4, scanner 12 includes a frame or housing 18 consisting of base 20, side walls 21, 22, front and rear walls 24, 25, and top wall 26. Base 20 and walls 21, 22, 25, 26 cooperate to form an interior chamber or compartment 27 within which a movable scan carriage 32 is disposed. Base 20 and walls 21, 22, 24, 25, 26 of housing 18 are planar, top wall 26 including a generally rectangular transparent glass or platen 28 through which the original document 8 to be scanned is viewed.

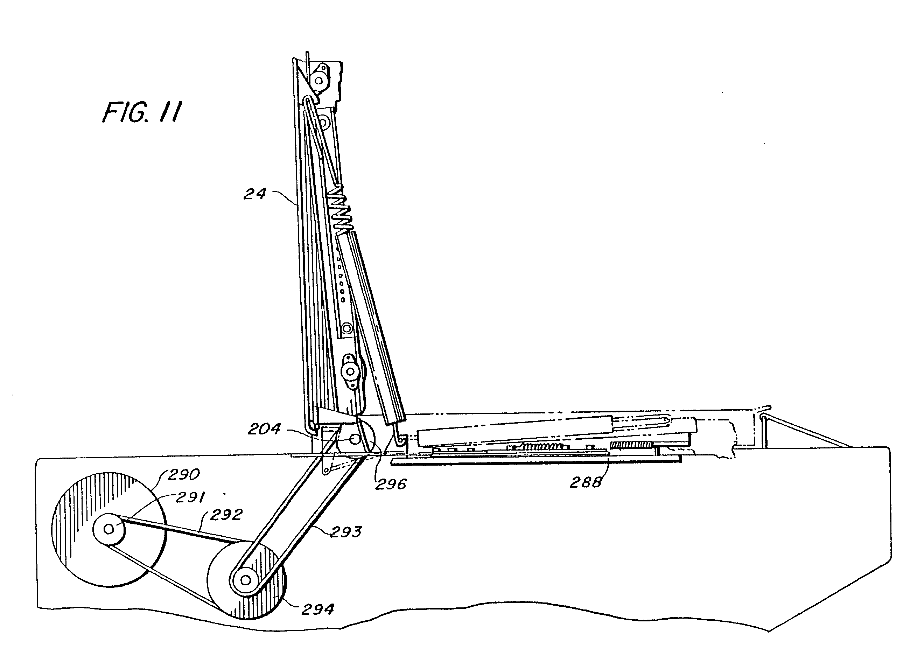

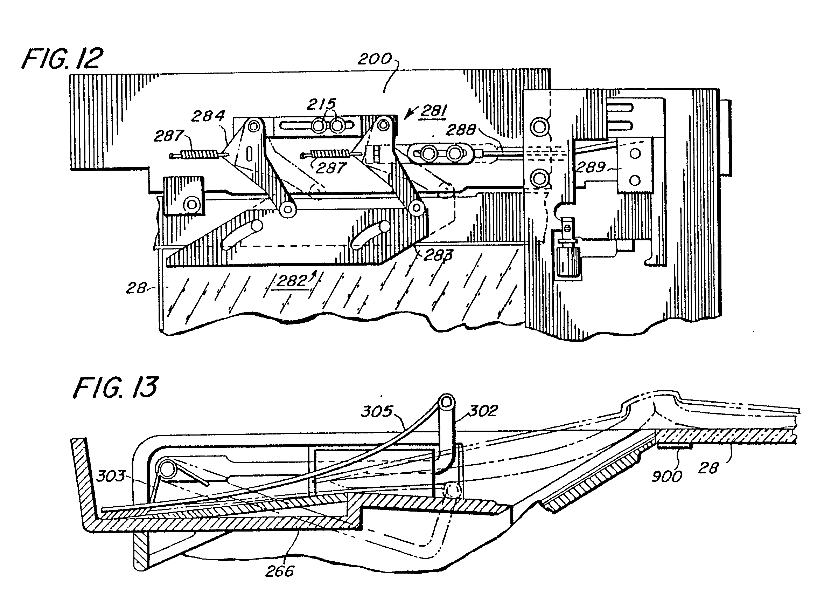

Document handler 14 normally overlays platen 28, the document handler 14 serving to bring one document at a time forward into registered position on platen 28. Following scanning of the document, the document is removed by document handler 14 to clear platen 28 for the next document as will appear more fully herein. Where document handler 14 is not used, the document to be scanned, i.e. a book (See Figure 13) is manually placed on platen 28 in registered position. Following completion of scanning, the document is manually removed. In this mode of operation, document handler 14 is swung to an out-of-the-way position or removed. See Figure 11. Preferably where document handler 14 is removed, a suitable platen cover (not shown) is provided to prevent glare and permit platen 28 to be covered when not in use to protect the surface thereof from scratches, dust, etc.

The portion 30 of top wall 26 between the end of platen 28 and front wall 24 is preferably beveled or sloped downwardly to provide a supporting surface facilitating scanning of bound originals such as books.

Scan carriage 32 is supported for longitudinal movement (in the Y direction) within compartment 28 of scanner 18 by means of parallel carriage support rods 34, 35. Carriage support rods 34, 35 are carried in front and rear walls 24, 25 of housing 18. To support carriage 32 on rods 34, 35, front and rear journals or bearings 36 are provided on the sides of carriage 32, bearings 36 slidably riding on rods 34, 35.

To impart scanning motion to carriage 32, a drive screw 37 is threadedly engaged with carriage 32 *via* nut 38. Reversible drive motor 39, which is supported on base 20 of housing 18 adjacent rear wall 25, drives screw 37 in either a clockwise (scan) or counter clockwise (return) direction to move carriage 32 longitudinally along carriage support rods 34, 35.

A pair of scanning or image arrays 40, 41, which may for example comprise Fairchild Model 121 H CCD Chips, are supported on carriage 32 adjacent one end thereof in predetermined space relation such that array 40 is above and to one side of array 41. Arrays 40, 41 each comprise a series (i.e. 1728) of individual photosensitive elements effective when exposed to the document being scanned to generate a single whose potential is proportional to the reflectance of the image area seen by the array element.

An optical system consisting of lens 55, scan mirror 56, and reflecting mirrors 57, 58, 59, cooperate to form an optical path 54 through which image rays reflected from a document on platen 28 are transmitted to arrays 40, 41. Lens 55 is mounted substantially centrally on carriage 32 in preset spaced opposing relation to arrays 40, 41. Mirrors 56, 57, 58, 59, which are generally rectangular in configuration, are mounted on carriage 32 in preselected angular dispositions to provide a folded optical path between platen 28 and lens 55. Mirror 59 has two facets 61, 62 disposed at predetermined angles with respect to one another such that mirror 59 serves as an object beam splitter to split the projected image into two images, one for each array 40, 41. During scanning, image rays reflected from the document on platen 28 pass downwardly to scan mirror 56 and from scan mirror 56 through mirrors 57, 58, 59 to lens 55 and arrays 40, 41.

To illuminate platen 28 and any document thereon, an elongated exposure lamp 65 is provided on carriage 32. Lamp 65, which extends in the direction generally perpendicular to the direction of movement of scan carriage 32, is disposed in a generally cylindrical lamp housing 66. A slit-like exposure aperture 67 in lamp housing 66 extends across the width of platen 28. The interior walls 69 of lamp housing 66 are preferably polished to reflect light from lamp 65 toward aperture 67 and platen 28.

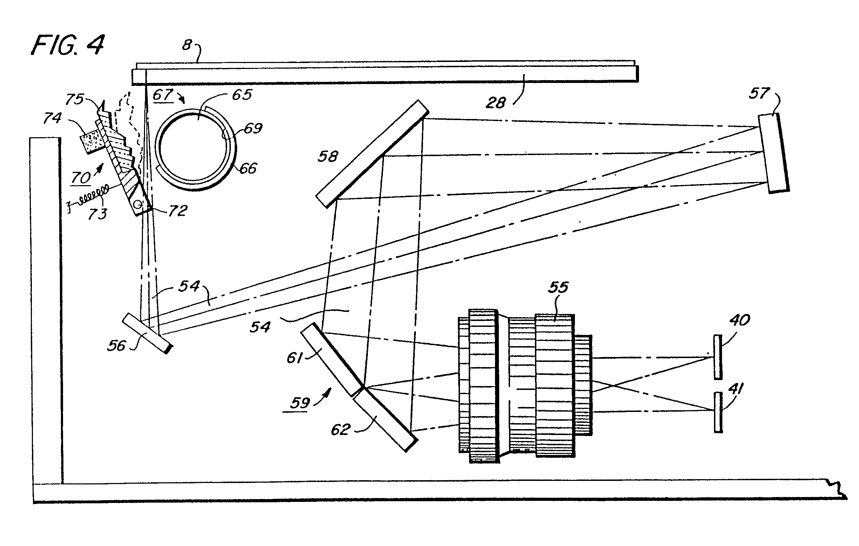

A reflector 70 is provided opposite aperture 67 to further reflect light emitted by lamp 65 onto platen 28 adjacent the image scan line. Reflector 70, which is disposed on the opposite side of optical path 54, is pivotally supported by pins 72 on carriage 32. Spring 73 biases reflector 70 in a counter clockwise direction into engagement with fixed locating stop 74 on carriage 32. The upper surface of reflector 70 is beveled at 75 and cooperates with the downwardly sloping interior portion 30 of top wall 26 on movement of carriage 32 to a home position to pivot or swing reflector 30 forwardly (to the dotted line position shown in Figure 4).

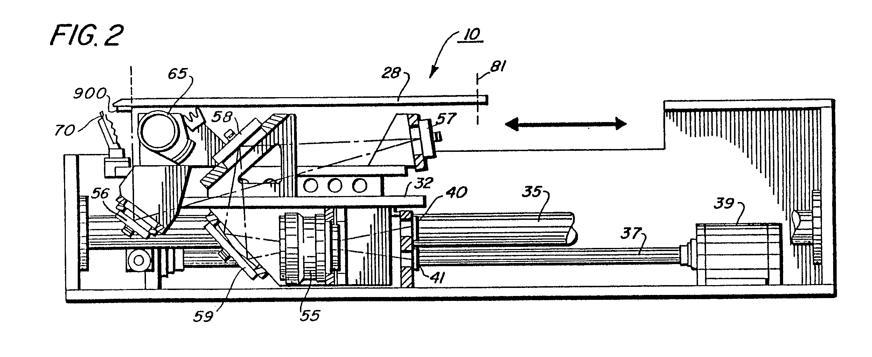

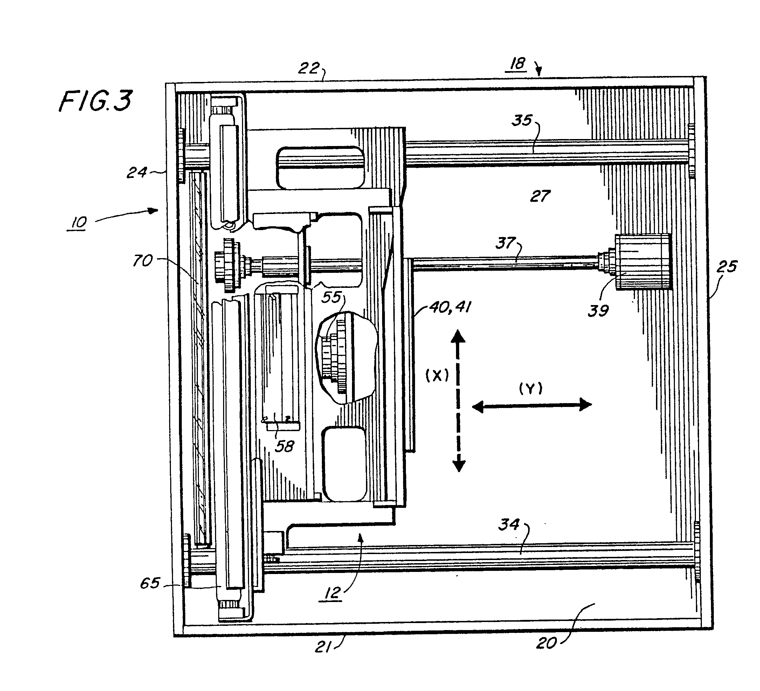

During operation, lens 55 and mirrors 56, 57, 58, 59, and exposure lamp 65 and reflector 70, move (in the Y direction shown by the solid line arrow of Figures 2 and 3) from the carriage home position to the end of scan 81 to scan the document 8 on platen 28. Light from exposure lamp 65 illuminates a line-like area i.e. the scan line, across the width of platen 28 (in the X direction shown by the dotted line arrow of Figure 3). As carriage 32 moves under platen 28, the line-like illuminated area travels the length of platen 28. Following completion of the scan, carriage 32 returns to the home position.

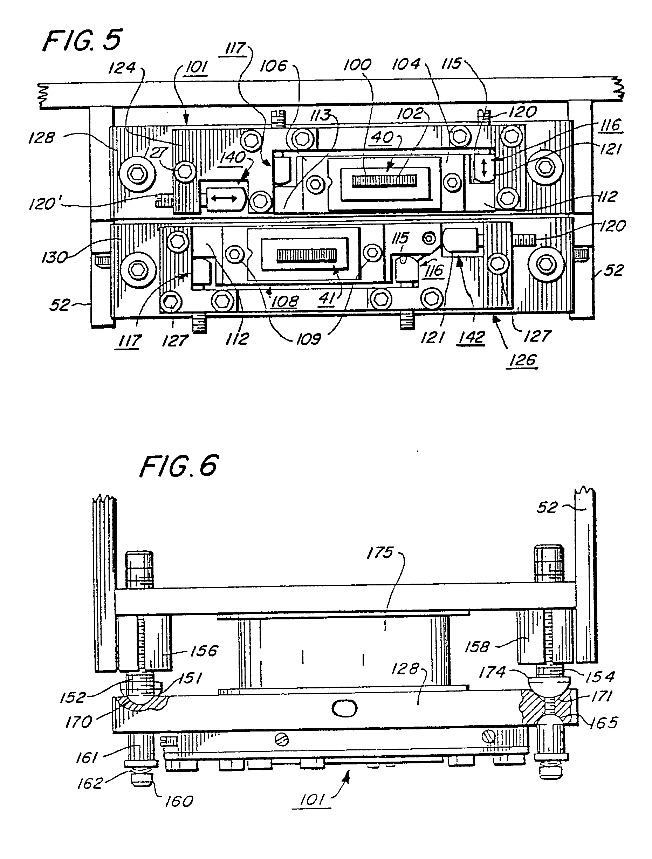

Referring particularly to Figures 5, 6, and 7, arrays 40, 41 comprise generally rectangular chips 100, the internal photosensitive or viewing elements of which extend longitudinally thereof to form a narrow viewing window 102. An adjustable array support assembly 101 is provided for each array. Each support assembly 101 includes a chip carrier 104 to which the array chip 100 is suitably attached as by means of adhesive. Carriers 104 are in turn attached to upper and lower floating blocks 106, 108 respectively as by means of screws 109.

Blocks 106, 108 are generally T-shaped with a central generally rectangular aperture 111 over which the array is secured, with outwardly extending side projections 112, 113. One interior face 115 of each projection 112, 113 rests against an adjustable support 116, 117. In the arrangement shown, upper block 106 is inverted relative to lower block 108 with the result that supports 116, 117 for upper block 106 ride against the upper side 115 of projections 112, 113 of block 106 while the supports 116, 117 for lower block 108 ride against the lower surface 115 of projections 112, 113 and block 108. Supports 116, 117 each comprise a threaded member 120 bearing a contact pad 121 at one end thereof for engagement with the surface 115 of the block 106, 108 associated therewith.

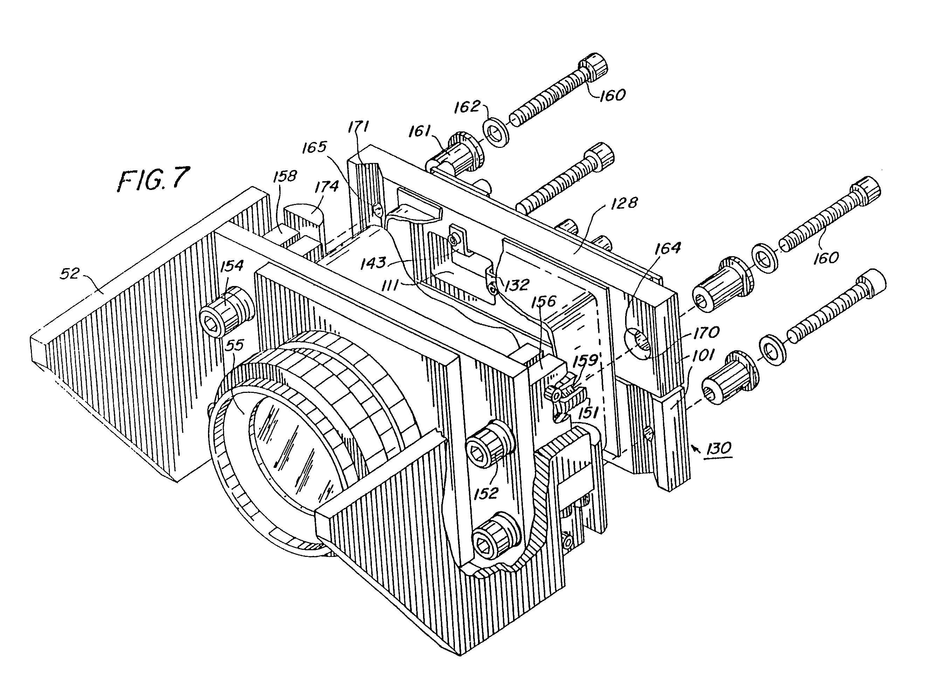

Supports 116, 117 are threadedly engaged in generally U-shaped upper and lower block support plates 124, 126 respectively. Plates 124, 126 are in turn attached as by means of screws 127 to base members 128, 130 respectively. Springs 132 bias blocks 106, 108 toward and into engagement with the supports 116, 117 associated therewith. See Figure 7.

As will be understood, rotation of threaded members 120 of supports 116, 117 displaces the block 106, 108 and array 40, 41 associated therewith in a generally vertical direction to raise or lower the array relative to the optical path against the bias of spring 132. Rotation of the threaded member of support 116 or 117 only, or simultaneous rotation of the threaded members of both supports 116, 117 in opposite directions, effects a rotation or turning movement of the array supporting blocks to adjust the angle of the array relative to the horizontal.

To provide for adjustment of arrays 40, 41 in a direction parallel to the horizontal, an adjustable support 140, 142 is threadedly disposed in the upstanding end of each plate 124, 126 with contact pads 121′ thereof projecting into engagement with the outer end of projections 113 of upper and lower blocks 106, 108. Spring 143 (Seen in Figure 7) biases blocks 106, 108 axially into contact with the adjustable support 140, 142 associated therewith.

Rotation of the threaded member 120′ of support 140 or 142 displaces the block 106, 108 associated therewith axially in a direction parallel to the horizontal against the bias of spring 143 to adjust the position of the array 40 or 41 relative to the optical path.

Each array support assembly 101 is attached to the scan carriage frame 52 opposite lens 55 by means of a pair of externally threaded screw members 152, 154 and cooperating locking screws 160. Screw members 152 and 154 are threadedly engaged in internally threaded blocks 156, 158 carried on carriage frame 52. The terminal ends 151 of screw members 152, 154 facing the array support assemblies 101 are hollow and internally threaded at 159 for receipt of the externally threaded locking screws 160. Spacers 161 and spring washers 162 are provided on each blocking screw 160 to position the array support assemblies in predetermined lateral position relative to the locking screws. Holes 164, 165 in base members 128, 130 of array support assemblies 101 permit locking screws 160 to pass therethrough into threaded engagement with screw members 152, 154.

A generally spherically shaped recess 170 is provided in the face of each base member 128, 130 coaxial with hole 164. A vertical generally V-shaped recess 171 is provided in the face of each base member 128, 130 opposite hole 165. The terminal end 151 of screw member 152 is rounded off for receipt in recess 170 of base member 128, 130. Screw member 154 has a vertical semi-circular segment 174 rotatably disposed on the terminal end thereof for receipt in V-shaped recess 171 of block members 128, 130.

Alignment of arrays 40, 41 perpendicular to the optical path and focusing thereof is effected by selective rotation of screw members 152, 154 following attachment of the array support assemblies 101 to the ends of screw members 152, 154 and the carriage frame 52 by locking screws 160. Tightening of locking screws 160 draws the spherical end of screw member 152 in the spherical recess 170 and segment 174 on screw member 154 into V-shaped recess 171.

Simultaneous rotation of both screw members 152, 154 in the same direction moves the array support assembly 101 toward or away from lens 55 to adjust the array focus. Rotation of screw member 152 only causes the array support assembly 101 to pivot or rotate about the cylindrical segment 174 on screw member 154 to adjust the angular disposition of the array support assembly 101 relative to the optical path. To shield arrays 40, 41 from extraneous light, a flexible diaphragm 175 is disposed between lens 55 and the array support.

Referring now to Figures 8—10, document handler 14 includes a generally rectangular frame member 200 on which cooperating document input pinch rolls 201, 202 are rotatably supported. Upper pinch rolls 201 are carried on input roll drive shaft 204 journaled in sides 205, 206 of frame member 200. The lower pinch rolls 202 are supported in cantilever fashion by spring members 207 secured to the rear wall of frame member 200. Pince rolls 201, 202, which are selectively disengageable so that a document 8 to be scanned may be readily placed between them, cooperate to advance the document inserted into document feed slot 210 in cover 24 forward to a wait station whereat the document is preregistered. For this purpose, a pivotally supported registration gate 212 with cooperating pivotally supported upper chute 214 is provided.

Gate 212, which includes plural spaced apart registration stop fingers 216, is supported on shaft 217 so that the fingers 216 project through openings 218 in frame member 200. Upper registration chute 214 is also arranged to be pivoted about a shaft 220 on frame member 200. When registration fingers 216 are in their operative or raised position, chute 214 is lowered to limit the thickness of a document which can be inserted in document feed slot 210. Chute 214 is biased downwardly (in a counter-clockwise direction) about the pivot axis of shaft 220 by gravity.

Upper chute 214 includes arm 222 coupled *via* adjustable set screw 223 to actuating member 224. Solenoid 225 is driveably connected to actuating member 224.

In operation, where solenoid 225 is not actuated, spring 227 biases registration gate pivot shaft 217 so that gate 212 is raised to intercept the leading edge of the document inserted into the document feed slot 210. On a disposition of a document in document slot 210 and against the registration fingers 216, solenoid 225 is actuated to lower the registration fingers 216. At the same time input rolls 201, 202 close to advance the document sandwiched therebetween forward into the nip of document transport belt 230. It will be understood that actuating member 224 connected to the registration member pivot shaft 217 works through set screw 223 to pivot chute 214 upwardly to facilitate movement of the document therethrough.

Platen transport belt 230 is supported within the frame assembly 200. Frame assembly 200 is pivotally supported at one side of platen 28 by input pinch roll drive shaft 204.

The platen belt transport 230 is comprised of a single belt which is stretched about the input drive pulley 232 and the exit idler pulley 233. Both input and exit pulleys 232, 233 are journaled for rotation in sides 205, 206 of frame assembly 200. Internally of the belt 230 an input backup roll 235 is pivotally supported. Input backup roll 235 is rotatably arranged at one end of a frame member 236 which in turn is pivotally supported about shaft 238 secured between sides 205, 206 of the frame assembly 200. A second pivotally supported frame member 240 is pivotally arranged at one end about shaft 238 and rotatably supports a registration backup roll 241 at its free end.

Backup rolls 235, 241 are urged against the interior of belt 230 by the weight of the parts to obtain the requisite driving force between belt 230 and the document 8 being advanced.

Platent belt transport 230 advances the document 8 onto platen 28 and against platen registration edge 29 to register the document into position for scanning by scanner section 12. Referring particularly to Figure 8, registration edge 29 comprises a plate-like member 250 which is comparatively thin and sufficiently flexible to conform to the beveled wall 30 adjoining the front edge of platen 28. Registration edge 29 is supported for movement in a plane parallel to beveled wall 30 to enable edge 29 to be retracted after the document has been registered. This permits the document to be removed from the platen 29 at the end of the copy cycle.

Springs 252 bias the registration member 250 against the platen edge. The registration member 250 is arranged for sliding movement on the registration gate frame 254. Tension springs 255 bias registration member 250 toward a retracted position against stop member 256, member 250 being slotted at 258 for receipt of stop members 256. Registration members 250 is raised to bring the registration edge 29 thereof into position to intercept the leading edge of the document by means of a solenoid 260 which is connected to member 250 by link 262.

When raised to the document intercept position, the register edge 29 engages belt 230 to raise the register backup roll 241 slightly off the surface of platen 28 to create a registration pocket. This reduces the normal force of belt 230 against the document as the document is advanced toward register edge 29.

After the document has been registered, solenoid 260 is engaged and register edge 29 is withdrawn to the retracted position shown in Figure 8. This permits register roll 241 to drop back into engagement with the document through the belt 230 to facilitate advance of the document from platen 28 by the belt transport 230. If a second document has been preregistered against fingers 216, the document is fed onto platen 28 simultaneously with the removal of the previous document from platen 28.

The document is advanced by transport belt 230 into the nip of output roll pair 265, 266. Roll 265 is supported on rotatable output roll drive shaft 268. Lower rolls 266 are idler rolls and are supported on individual shafts 269. Spring 270 biases rolls 266 into engagement with the rolls 265. Guide chutes 272, 273 serve to guide the document into the nip of rolls 265, 266 and through discharge opening 275 to document tray 266.

To permit document 8 to be located in registered position on platen 28 manually, a document register edge 282 is provided. Referring particularly to Figures 11, 12, parallelogram type linkage 284, secured to frame 200 provides parallel sliding movement of registration plate 283. Tension springs 287 bias the parallelogram linkage 284 such that the registration edge 282 thereof is in operative position on platen 28. Cable 288 couples linkage 284 to actuating member 289 mounted on the document handler cover 24.

When document handler 14 is raised, cable 288 is slack and manual registration edge 282, under the influence of springs 287, is operatively positioned on platen 28 to register a document placed thereon. When document handler 14 is closed, actuating member 289 pulls cable 288 taut to retract registration edge 282 to an out-of-the-way position.

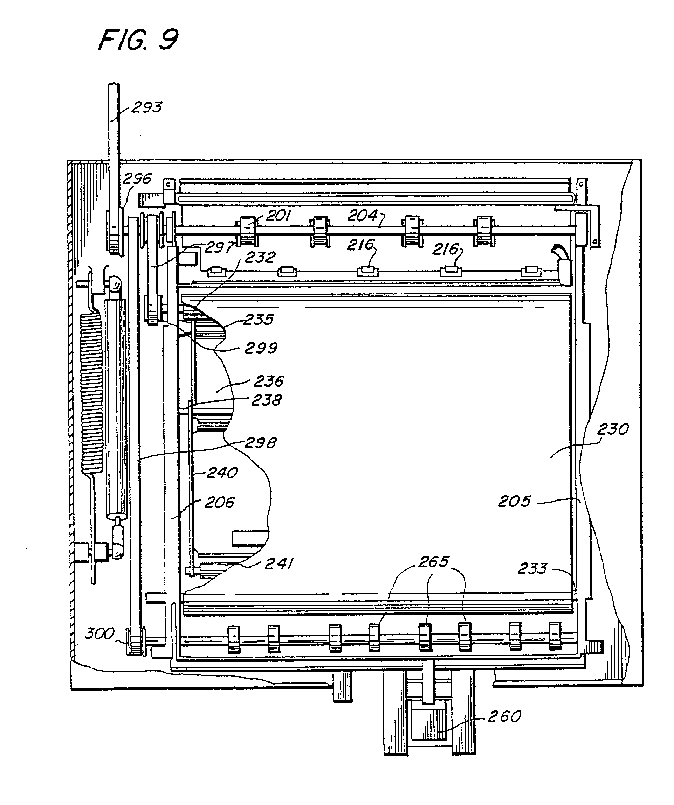

Referring particularly to Figures 9 and 11, a drive motor 290 is connected to document handler 14 *via* clutch and pulley 291, timing belts 292 and 293, and intermediate pulley pair 294 as shown in Figure 11. Timing belt 293 is coupled to shaft 204 of roll 201 through pulley 296. Timing belts 297 and 298 coupled shaft 204 to pulley 299 on platen transport belt drive roll 232 and pulley 300 of document discharge rolls 265.

Referring to Figure 13, a pivotally supported document decelerator support bar 302 is provided in tray 266. Spring 303 biases bar 302 upwardly. 'Mylar' strips 305 on bar 303 serve to decelerate documents exiting from document handler 14.

Referring to Figure 14, control section 16 may be conveniently divided into CCD sensor board (SB) 300, scan electronics module (SEM) 302, image processing module (IPM) 304, video output board (VOB) 306, MPU controller board (MPU) 308 and operator control panel 309. As will appear more fully herein video image signals or pixels produced by arrays 40, 41 are initially processed on SB 300 following which the analog image signals are input to IPM 304 for further processing. Processing of the image signals is regulated by clock signals derived from SEM 302 and commands from MPU 308. MPU 308 in turn, responds to instructions by the user through control panel 309.

Following processing, the image signals, are output by IPM 304 to VOB 306. From VOB 306 the image signals may be further processed and/or stored in memory, transmitted, or input to a suitable copy producing apparatus, the latter to provide copies of the document or documents originally scanned.

IIT 10 is operable in one of several modes in accordance with the instructions of the user or operator. In addition, a DEFAULT MODE is automatically invoked whenever a system overload occurs, as for example, when compressing the image signals.

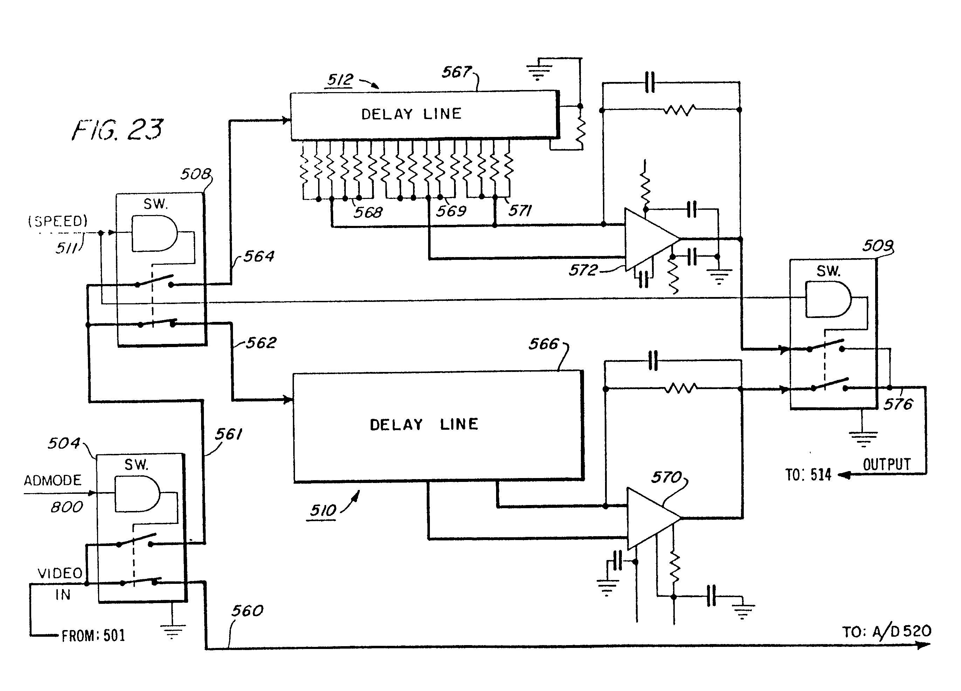

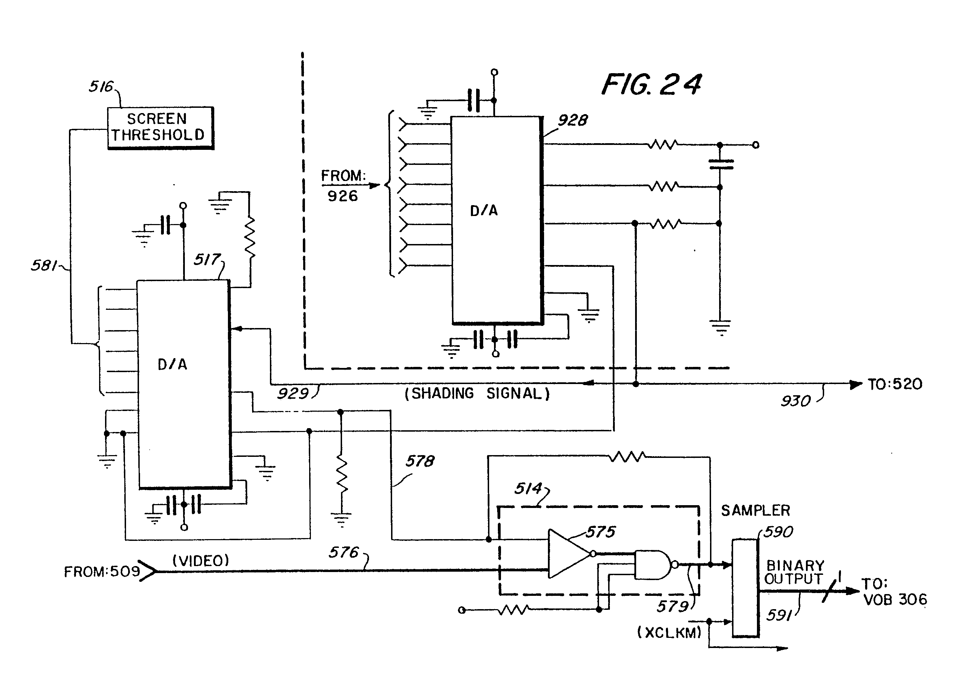

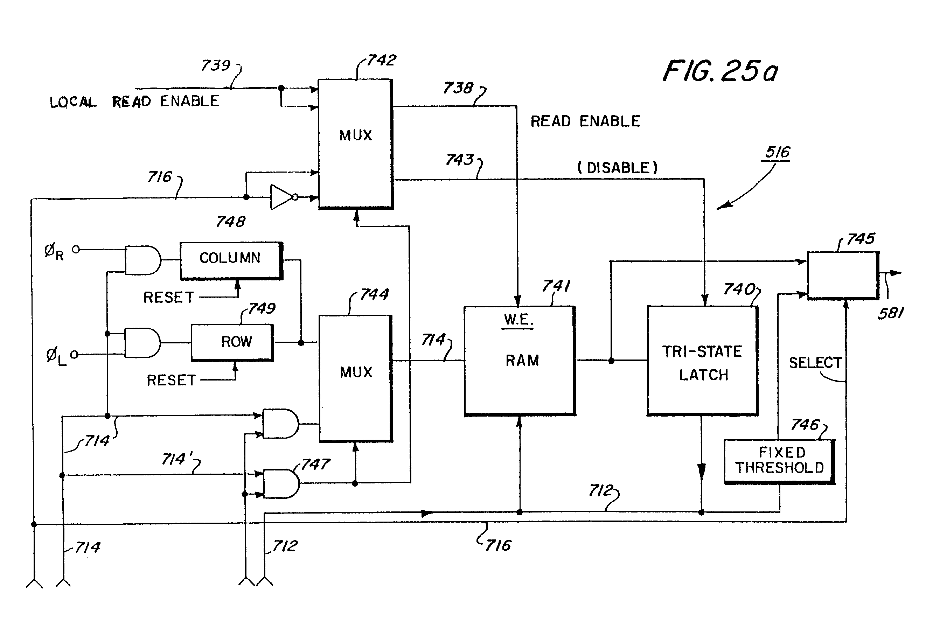

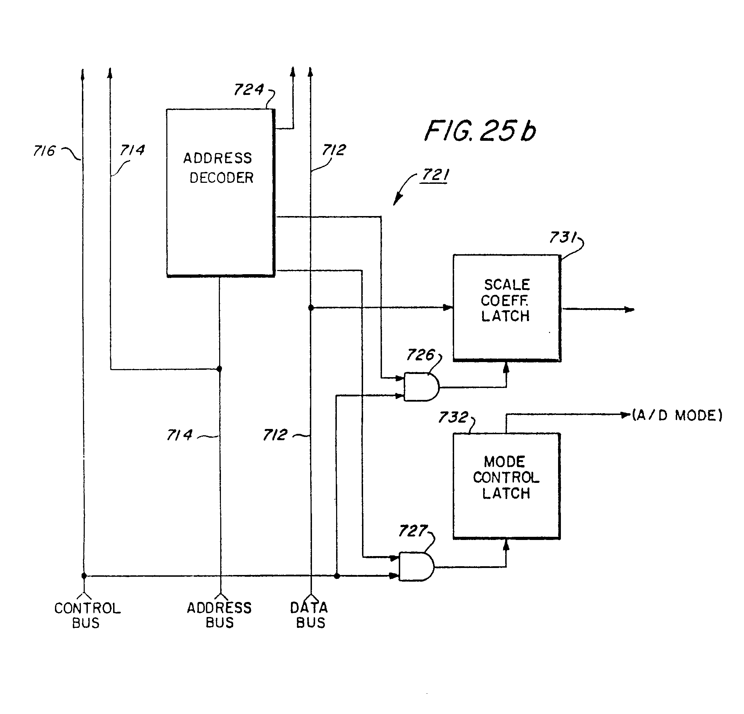

The operational modes of IIT 10 comprise a LINE INPUT MODE, PICTORIAL INPUT MODE, PICTORIAL ENHANCEMENT MODE, and DEFAULT MODE. The LINE INPUT MODE is used to scan documents which are comprised mainly of line type graphical information. In this mode, the analog image signals are compared with a preset threshold value to provide an image signal output by IIT 10 in binary (i.e. 1 bit per pixel) form. Scanning is effected at a relatively high speed and image output resolution after processing is relatively high. One scanning speed is 125 mm per second (mmps) for both scan carriage 32 (Y-direction) and arrays 40, 41 (X-direction). This results in an image resolution of nine pixels per mm (in the X direction) by 19 lines per mm (in the Y direction). Interpolators 510, 512 and Sampler 590 (Figures 23, 24) cooperate to double the number of pixels (in the X-direction) to 19 pixels per mm as will appear. Scale coefficient latch 731 (Figure 25) permits dropping of selected pixels to provide reduced size images as will appear.

The PICTORIAL INPUT MODE is used for scanning documents containing predominantly continuous tone pictorial information. In this mode, scanning is conducted at a relatively low speed. One suitable scanning speed is 50 mmps for both scan carriage 32 and arrays 40, 41. This results in image resolution during scanning of nine pixels per mm (in the X direction) by 19 lines per mm (in the Y direction). As in the case of the LINE INPUT MODE, the image signals are interpolated to double the image resolution in the X direction. This results (in the example given) of an image output resolution of 19 pixels per mm (in the X direction) by 19 lines per mm (in the Y direction). In this mode of operation, the analog image signals are screened electronically to provide a binary (i.e. 1 bit per pixel) output.

The PICTORIAL ENHANCEMENT MODE is used for scanning documents containing predominantly half tone pictorial information or continuous tone pictorial information where it is desired to retain gray scale information for subsequent processing. In this mode, scanning is done at a relatively low speed in both X and Y directions with reduced image resolution. For example, in this mode scanning may be at a rate of 50 mmps for scan carriage 32 and at the rate of 25 mmps for arrays 40, 41. This results in an image resolution of nine pixels per mm (in the X direction) by nine lines per mm (in the Y direction). The image output is quantized, coded 6-bit gray scale as will appear.

The DEFAULT MODE may occur when an overload is detected on the system. In response thereto, a rescan of the document is automatically requested with interpolation omitted. Rescanning is effected at a relatively high speed, for example at 125 mmps with resolution of nine pixels per mm (in the X direction) by 19 lines per mm (in the Y direction). The output is in 1-bit binary form from either thresholding or screening, depending on the operational mode selected.

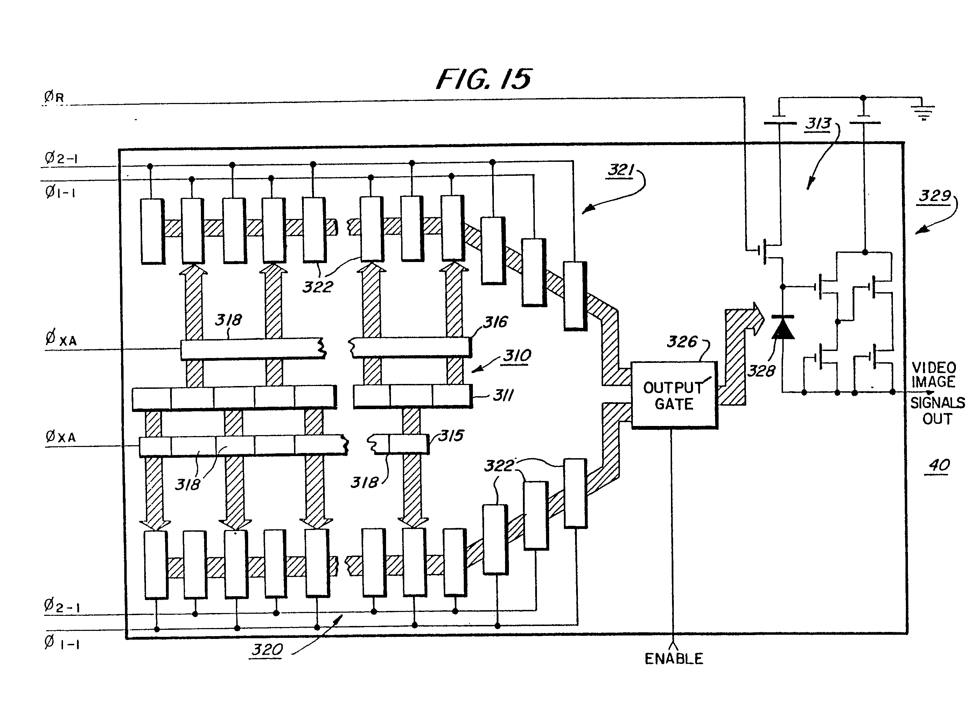

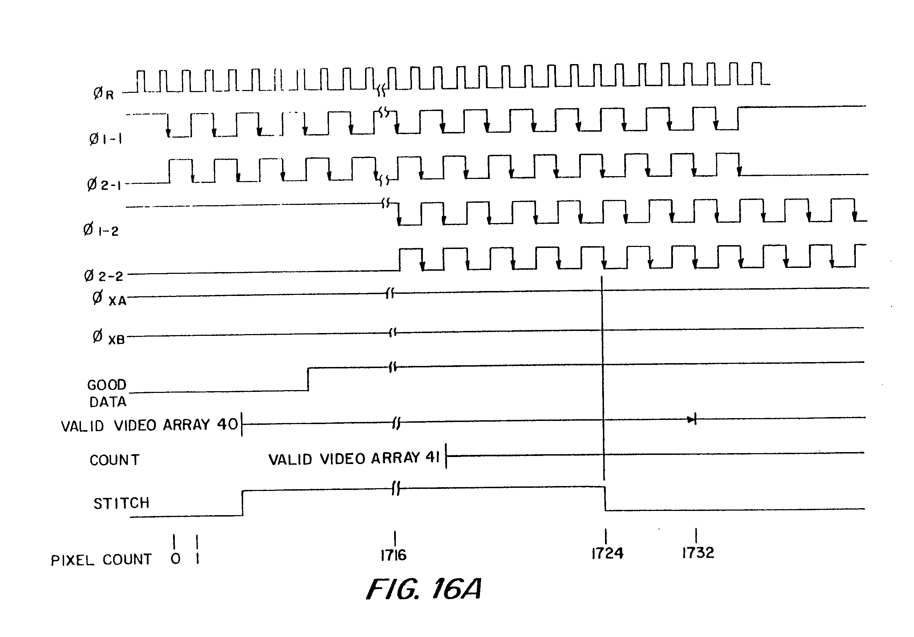

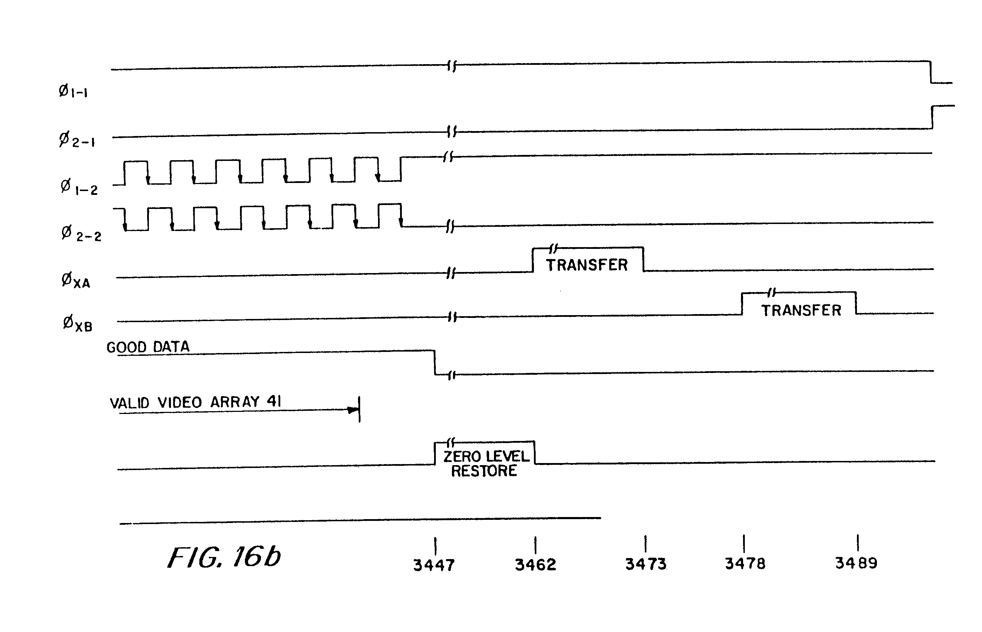

Referring particularly to Figures 15 and 16, the exemplary CCD type arrays 40, 41 each include a succession (i.e. array) of photosensitive elements 311 on the narrow center portion of silicon chip 313. Elements 311 are flanked on either side by rows 315, 316 of transfer gates 318. Registers 320, 321, which comprise parallel input-serial output analog registers, are disposed on either side of the rows 315, 316 of transfer gates.

Transfer gates 318 switch the output of the individual photosensitive elements 311 to phase gates 322 of shift registers 320, 321. The total number of transfer gates used in each row 315, 316 is equal to one half the total number of photosensitive elements 311 with alternate, i.e. odd-numbered photosensitive elements coupled through row 315 of transfer gates to shift register 320 and even-numbered photosensitive elements coupled through row 316 of transfer gates to shift register 321.

The total number of phase gates 322 in shift registers 320, 321 is equal to the number of photosensitive elements 311 that comprise each array and as a result, only alternate shift register phase gates are coupled to the photosensitive elements 311. Arrays 40, 41 function to convert the graphical image of a document 8 to a series of electronic image signals or pixels. On exposure of the photosensitive elements 311 to the illuminated document over a preset time interval (termed the "integration" period), a charge proportional to the luminous energy reflected from the document is generated. Following integration the charges on the photosensitive elements are transferred *en masse* to phase gates 322 of shift registers 320, 321 on enablement of transfer gates 315, 316 by a transfer signal $\phi_{XA}$, $\phi_{XB}$.

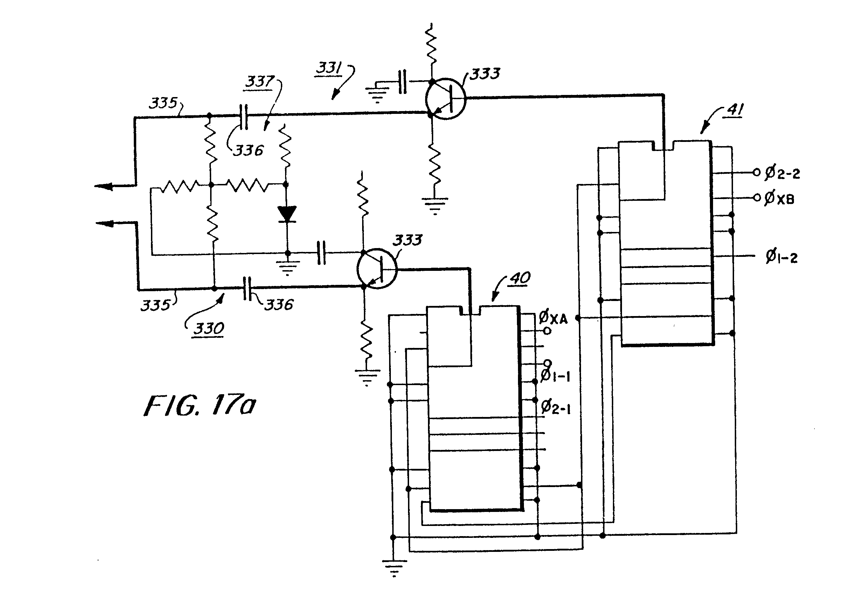

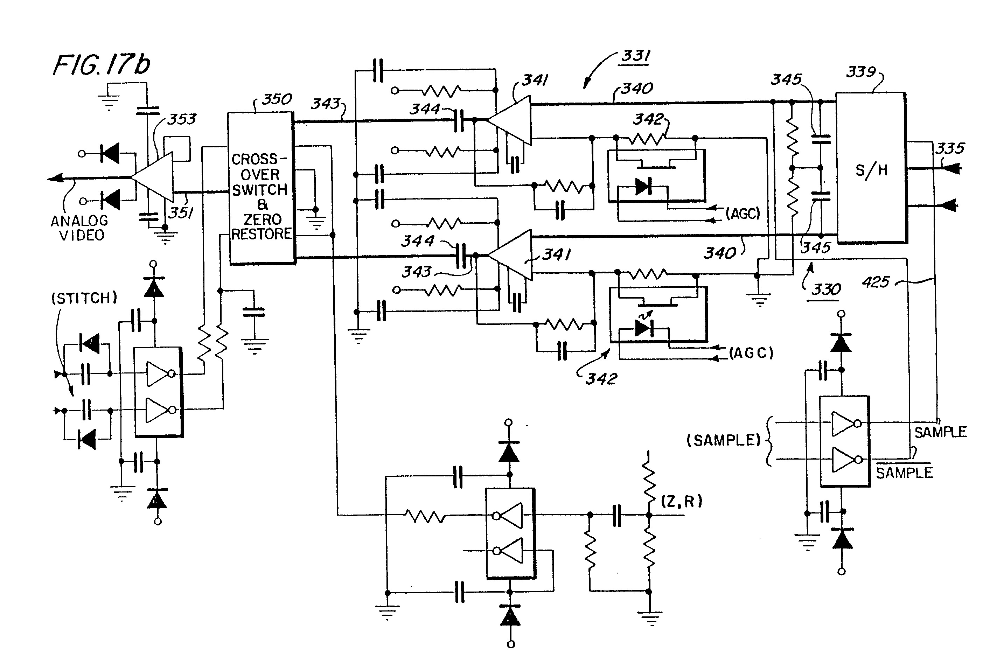

Following transfer of the charges from the charge coupled cells to alternate gates of registers 320, 321, the resulting images signals are shifted by means of clock driving pulses $\phi$1-1, $\phi$2-1, $\phi$1-2, $\phi$2-2 (Figure 16) serially along registers 320, 321 (i.e. from left to right in Figure 15) to output gate 326. There image signals and offset signals from the matching phase gates of the adjoining registers are summed and output via holding diode 328 of amplifier section 329 to emitter followers 333 (Figure 17) where initial signal processing commences. Referring particularly to Figures 16, 17, image signals produced by arrays 40, 41 are output along separate signal channels 330, 331 of SB 300 before being combined at crossover switch 350 (Figure 17b) to provide an uninterrupted stream of video image signals (analog video) for each line scanned. During this stage certain initial signal processing occurs. Inasmuch as the component parts of each signal channel 330, 331 are the same, only channel 330 is described in detail herein.

Operating clock signals ($\phi_R$, $\phi$1-1, $\phi$1-2, $\phi$2-1, $\phi$2-2, $\phi_{XA}$, $\phi_{XB}$, GOOD DATA, SAMPLE, AGC, STITCH) are derived from SEM 302. Time 0 is arbitrarily chosen as a time a particular array starts to clock out video image signals. It should be understood, however, that certain other events, principally scanning or integration, and charge transfer (where the image signals are transferred from photosensitive elements 311 to shift registers 320, 321), occur in the preceding cycle, i.e. from count 3462—3473 and count 3478—3489 (Figure 16b).

As described earlier, the viewing fields of arrays 40, 41 overlap one another to assure an uninterrupted stream of video image signals. On clocking out of the image signals from shift registers 320, 321 crossover from one array (i.e. 40) to another (i.e. 41) is made at a preselected point within the overlapping viewing fields. The unused or excess image signals from both arrays 40, 41 are discarded.

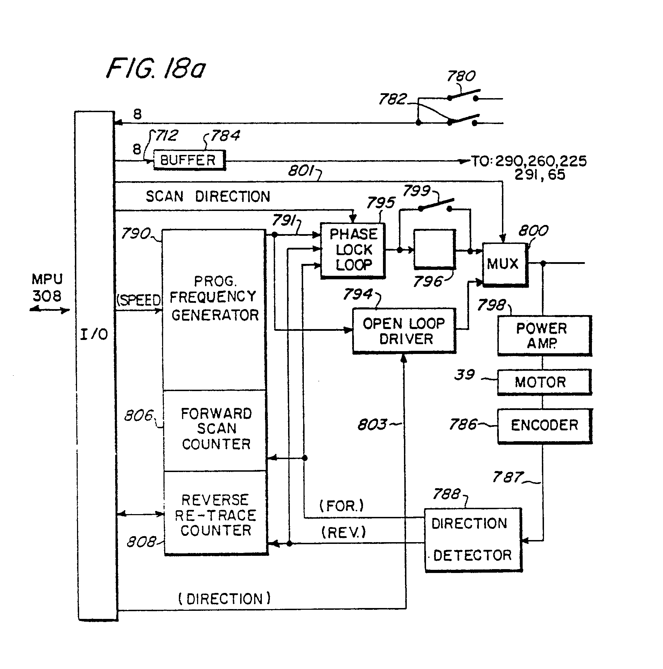

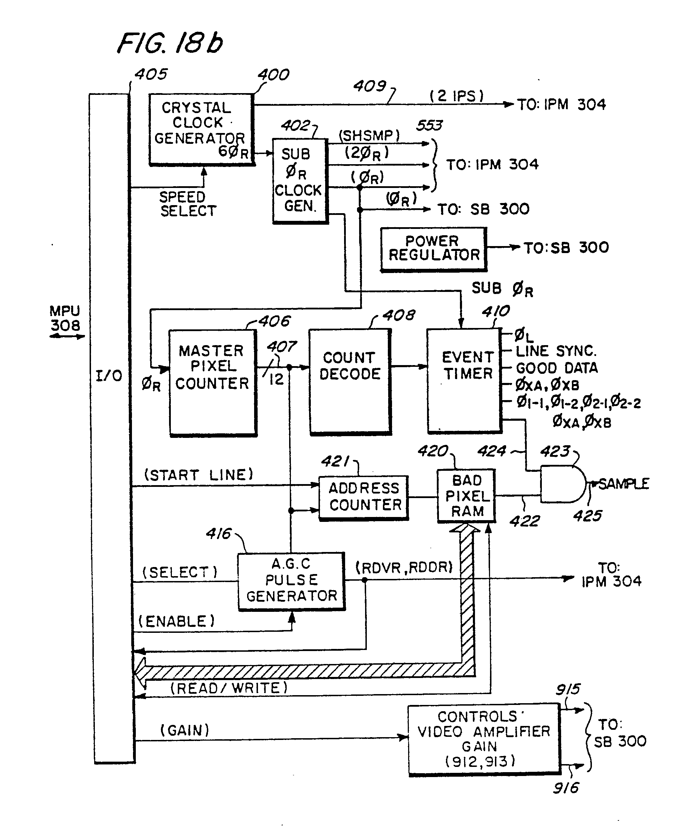

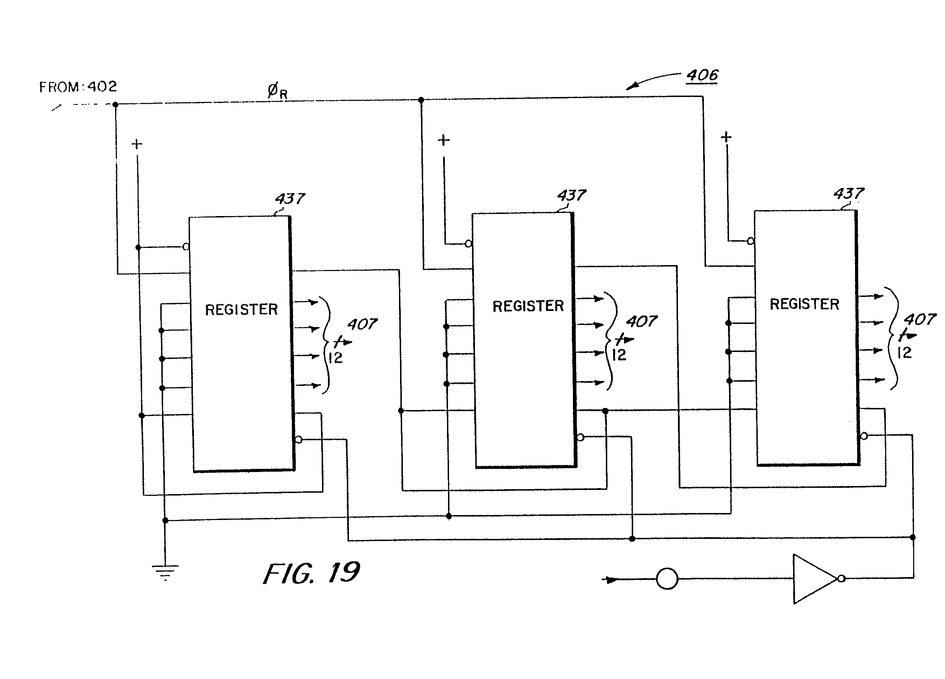

All events are clocked from a master counter 406 (Figure 18, 19). With counter at zero, image signals in shift registers 320, 321 of array 40 are clocked out by clock pulses $\phi$1-1, $\phi$2-1 until a count of 1732 is reached. Clock pulses $\phi$1-2, $\phi$2-2 start at count 1716. At count 1724 the stitch signal (STITCH) goes low to trigger crossover switch 350 and couple array 41 to output lead 351.

With the crossover point selected in the example at count 1724, array 40 has 8 unused pixels (1724—1732) and array 41 has 8 unused pixels (1716—1724). These unused pixels are discarded.

Referring particularly to Figures 17a and 17b, video image signals output by the arrays are fed to emitter follower 333 which provides current gain and serves as a low impedance driver for sample and hold circuit 339. Follower 333 may for example, comprise a Texas Instruments 3904 transistor. The signal output of follower 333 passes *via* lead 335 and blocking capacitor 336 to sample and hold circuit 339. Capacitor 336 serves to block out the relatively large DC offset of the arrays. A predetermined bias is provided by bias circuit 337.

Sample and hold circuit 339 may for example, comprise a Signetics SD 5000 circuit. Circuit 339 responds to a periodic signal (SAMPLE) to periodically sample and hold the video image signals for a preset time interval. The output of sample and hold circuit 339 is fed *via* lead 340 to the non-inverting input of differential amplifier 341 which may for example, comprise a National Semiconductor LH 0032 amplifier. Amplifier 341 serves to modify the video image signal level in response to a gain signal (AGC) determined in accordance with the operating characteristics of each array by automatic gain control circuit 342, as will appear.

The image signal output by amplifier 341 is passed *via* lead 343 and blocking capacitor 344 to crossover switch 350 which as described couples one or the other array 40 or 41 to output amplifier 353 in response to a stitching signal (STITCH).

To restore channel 331 to a zero signal level prior to the next integration, a zero level restore (ZR) signal is input to switch 350 following the last image signal. In the exemplary arrangement shown in Figure 16, the ZR signal is input to switch 350 from count 3447 to 3462 to complete a circuit coupling crossover switch 350 to ground.

Referring particularly to Figure 18b, SEM 302 provides clock and timing signals for operating the various components of IIT 10. SEM 302 includes a clock pulse generator 400 which may for example, utilize a pair of crystals (50.31 MHz and 20.13 MHz) and a flip flop divider (not shown) for generating base multiple frequency clock pulses corresponding to different IIT scanning rates. As will appear, IIT 10 may be operated at one of several scanning rates which, in the example described, comprise rates of 25, 50 and 125 mmps.

Selection of the IIT operating mode by the user or operator through control panel 309 determines the scanning rate. A control signal (SPEED SELECT) corresponding to the scanning mode selected is input by MPU 308 to clock generator 400 of SEM 302 to select the output clock signal frequency of clock generator 400. SEM 302 is coupled to MPU 308 through programmable peripheral interfaces (PPI) 405, which may for example, comprise Intel Model 8255A-5SR-PPI's.

The signal output (6$\phi_R$) of clock pulse generator 400 is input to subclock generator 402. Subclock generator 402, which may comprise suitable flip-flop based logic circuitry (not shown) divides the clock signals (6$\phi$) input by clock pulse generator 400 into operating clock signals $\phi$R, 2$\phi$R, SHSMP (SAMPLE COMMAND) respectively. Clock signals $\phi$R, 2$\phi$R, and SAMPLE COMMAND are input to IPM 304 and clock signal $\phi$R which is the reset signal corresponding to the pixel rate for arrays 40, 41, is further input to master counter 406 of SB 300 (Figure 19).

As described earlier, master counter 406 controls operational timing of arrays 40, 41. Referring particularly to Figure 19, master counter 406 includes plural registers 437 responsive to clock signals ϕR from subclock generator 402 to provide a 12-bit clock signal output to bus 407 and count decode logic 408. Bus 407 is also coupled to programmable pulse generator 416 and address circuit 421 of bad pixel RAM 420.

Count decode logic 408 incorporates plural (e.g. 4) 6-bit to 8-bit registers with attendant NOR gate array (not shown) for decoding the clock signal input thereto from master counter 406 to provide a plurality of timed controlled signals to event timer 410.

Event timer 410, which may comprise flip-flop based logic (not shown) for subdividing the input pulses thereto, provides the enabling signal (GOOD DATA) and clock pulses ϕXA, ϕXB to IPM 304 and clock pulses ϕ1-1, ϕ2-1, ϕ1-2, ϕ2-2, ϕXA, ϕXB and sample signal (SAMPLE) to SB 302 as described heretofore in connection with Figure 16.

The function and purpose of programmable pulse generator 416 and bad pixel RAM 420 will appear hereinbelow.

The pulse clock frequency corresponding to 50 mmps (20.13 MHz) generated by clock pulse generator 400 is output *via* lead 409 to A/D converter 501 of IPM 304 as will appear.

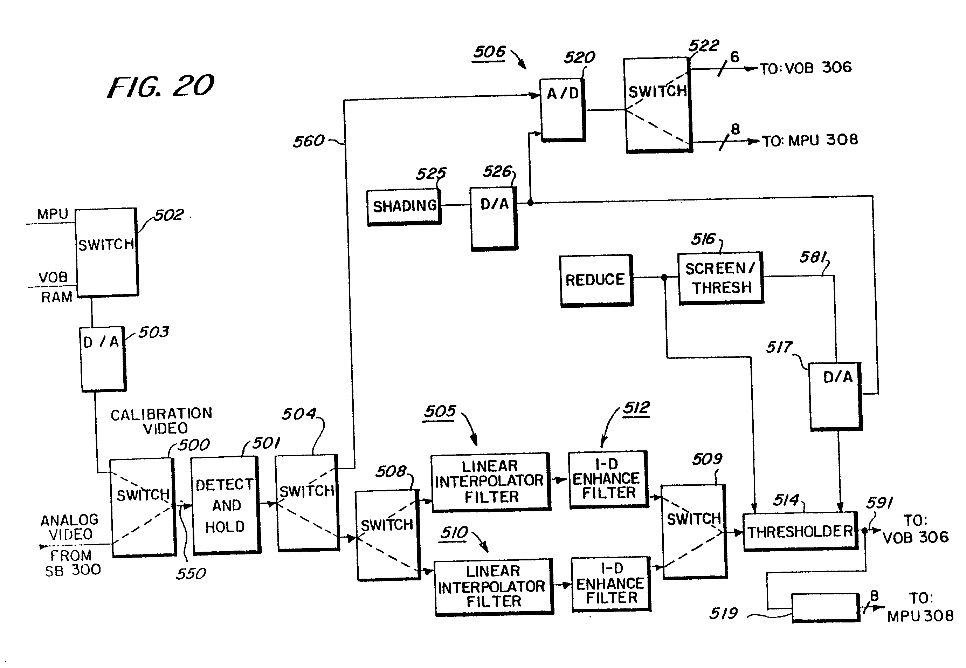

Video image signals (Analog Video) from SB 300 (see Figure 17) are input to IPM 304 for further processing prior to output to VOB 306 and/or MPU 308. Referring particularly to Figure 20, the flow of image signals through IPM 304 is there illustrated. A selector switch 500 permits the user to select the signal input source to be coupled to Sample and Hold (S/H) circuit 501 from either SB 300 or from IIT test-calibration selector switch 502. Image signals from S/H circuit 501 are input to either threshold-screen processing section 505 or A/D conversion section 506 depending on the setting of selector switch 504 by the operator. Where PICTORIAL ENHANCEMENT MODE is selected, switch 504 is set to route image signals to A/D conversion section 506. Where LINE INPUT MODE or PICTORIAL INPUT MODE is selected, switch 504 is set to route the image signals to threshold-screen processing section 505.

Threshold-screen processing section 505 has selector switches 508, 509 for routing the image signals to either high speed (i.e. 125 mmps) interpolator 510 (LINE INPUT MODE), or low speed (i.e. 50 mmps) interpolator 512 (PICTORIAL INPUT MODE). The image signals from selector switch 509 are input to thresholder 514 where the signals may be either thresholded or screened, depending upon the output of screen-threshold circuit 516. D/A converter 517 converts the digital threshold-screen output of circuit 516 to analog signals for use by thresholder 514. The output of the thresholder 514, which is in bit-serial form, is routed either to VOB 306 or to serial-parallel converter 519. From converter 519, the signal output, in 8-bit form, is input to MPU 308.

Image signals routed to A/D processing section 506 are input to A/D converter 520 whereat the signals are converted from analog to 6-bit digital. The output of A/D converter 520 is fed to selector switch 522 which routes the signals to either VOB 304 or MPU 308.

To accommodate illumination vagaries and fall-off of the exposure lamp, a shading compensation circuit 525 is provided. The output of circuit 525 is input *via* D/A converter 526 to both thresholder 514 and to A/D converter 520 for modifying the image data as will appear.

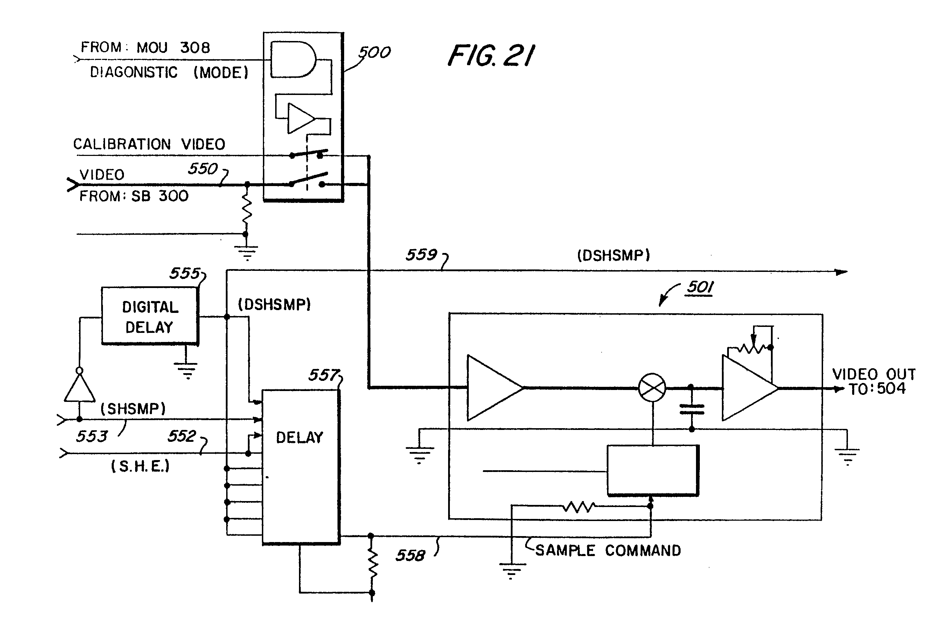

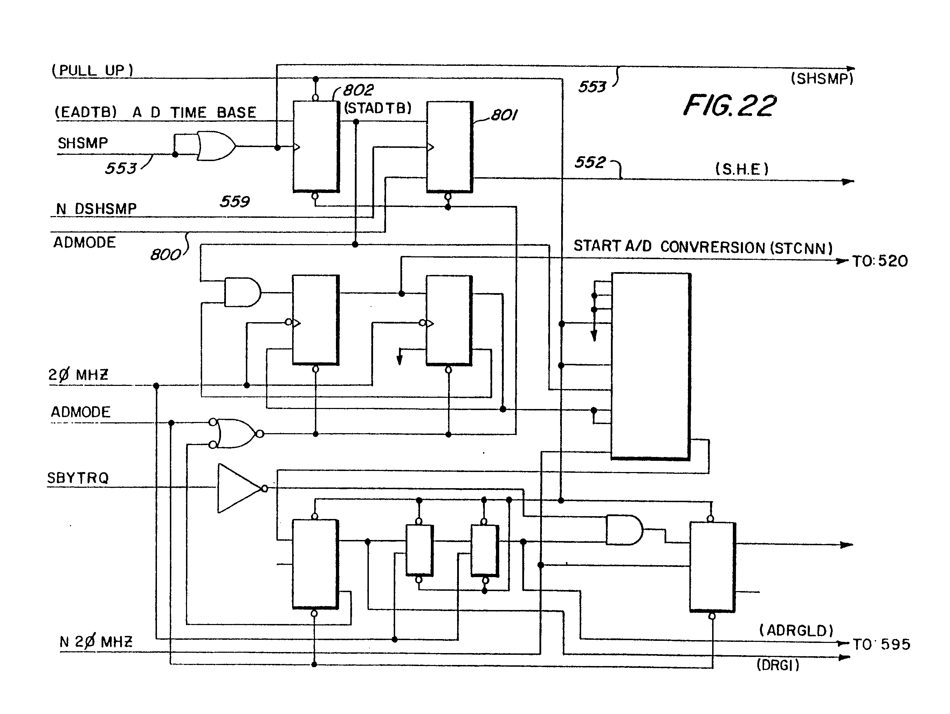

Referring particularly to Figures 21 and 22, S/H circuit 501 serves as both a low pass filter to remove noise from the image signals and to periodically sample and hold the image signal level sampled over a preset time interval. S/H circuit 501 may for example, comprise a Datel SHM-UH sample and hold circuit.

Video image data from SB 300 are input to S/H circuit 501 in lead 550 *via* selector switch 500. Sample and hold enabling signal (SHE) in lead 552 inhibits a sample command (SHSMP) if the A/D conversion by A/D converter 520 is not completed when operating in the PICTORIAL ENHANCEMENT mode. Enabling signal SHE is derived from flip-flop pair 801, 802 (Figure 22) in response to the signal EADTB representing the operational timing of A/D converter 520 in the context of sample command clock signals SHSMP and DHSMP. Selection of this mode by the operator generates an enabling signal (A/D MODE) in lead 800 to flip-flop 801. The sample command (SHSMP) signal in lead 553 is derived from subclock generator 402 of SEM 302 (Figure 18b) to operate flip-flop pair 801, 802 and activate S/H circuit 501 in timed synchronization with the input of video image signals such that each signal is sampled a predetermined distance between successive clock reset pulses. In the exemplary arrangement shown, samples are taken at 5/6 the distance between reset pulses. To correlate the sample command with the operating characteristics of S/H circuit 501, the sample command (SHSMP) signal is input to tapped digital delay 555 which for example, may comprise a Data Delay Model DDU-4. Digital delay 555 is set to delay the sample command signal for a preset interval to provide delayed sample command signal (DSHSMP). Both sample and delayed sample command signals (SHSMP, DSHSMP) are AND'd together in register 557 to provide a timed signal (SAMPLE COMMAND) to S/H circuit 501 through lead 558.

The sample command clock signals DSHSMP and SHSMP drive flip-flops 801, 802 to provide timed generation of sample and hold enabling signal (SHE).

Referring particularly to Figure 23, the image signals output by S/H circuit 501 are routed by selector switch 504 to lead 560 and A/D converter 520 (Figure 20) if PICTORIAL ENHANCEMENT MODE is selected or to lead 561 and selector switch 508 when either LINE INPUT MODE or PICTORIAL INPUT MODE is selected. Selector switch 508, in turn passes the signals to either lead 562 and high speed interpolator 510 (LINE INPUT MODE) or to lead 564 and low speed interpolator 512 (PICTORIAL INPUT MODE) in response to scan speed (SPEED) signal in lead 511. The scan speed signal it will be understood is dependent upon the operational MODE selected.

Interpolators 510, 512 each comprise analog data delay lines 566, 567. A linear interpolation filter is implemented by taking equally related subpixel taps 568, 569 over two adjacent pixels and summing the output to give a continuous analog signal which is later resampled by sampler 590 (Figure 24) at a frequency double the pixel clock frequency to double the number of image signals (i.e. from nine to 19 pixels per mm). An enhancement filter, which in the example shown is a 3-pixel enhancement filter is also included. The filter is implemented using delay lines 566, 567 and differential amplifiers 570, 572. Amplifiers 570, 572 weigh the combined signals of taps 568, 571, representing the outside pixel sum, with the sum of the center pixel taps 569. The outputs of differential amplifiers 570, 572 are selectively coupled to thresholder 514 by selector switch 509 in response to the scan speed (SPEED) selected.

Data delay lines 566, 567 which may for example, comprise Data Delay Devices No. 2214—4006 are identical except that delay line 567 for low speed interpolator 512 is longer than delay line 566 for high speed interpolator 519. Differential amplifiers 570, 572 may comprise RCA Model CA3100 OP AMPS.

Referring particularly to Figure 24, image signals output from processing section 505 are fed to analog signal comparator 575 of thresholder 514 *via* lead 576. Comparator 575, which may comprise a Signetics NE 521 analog signal comparator, compares the image signals on a pixel by pixel basis with threshold-screen signals provided in lead 578. Where the level of the image signal is above the level of the threshold-screen signal in lead 578, a binary signal output of 1, representing a black image area, is generated in output lead 579. Where the image signal level is equal to or below that of the signal in lead 578, a binary output signal of 0, representing a white image area is generated.

Threshold-screen signals in lead 578 are provided by D/A converter 517 in response to a 6-bit fixed threshold or screen pattern input thereto from screen/threshold circuit 516 through lead 581. Referring particularly to Figure 25a, circuit 516 has screen values stored in RAM 741. The output of RAM 741 is coupled to control switch 745. Fixed threshold values are supplied by MPU 308 to threshold latch circuit 746. The output of latch 746 is coupled to control switch 745. A control signal (SELECT) from MPU 308 sets control switch 745 to output either screen values from RAM 741 or the fixed threshold value from threshold latch circuit 746 to lead 581 and D/A converter 517 in response to the operational mode selected, i.e. PICTORIAL or LINE INPUT MODE.

Bi-directional communication is provided between RAM 741 and MPU 308 through tristate latch 740. During scanning, a local read/enable signal is input to multiplexer 742 through lead 739. Multiplexer 742 applies a read/enable signal to the $\overline{WE}$ pin of RAM 741 and an output disable (DISABLE) signal to latch 740 through leads 738, 743 respectively. A second multiplexer 744 is addressed by column and row counters 748, 749 respectively driven by clock signals $\phi_R$, $\phi_L$ in synchronism with the pixel stream and scan line indexing respectively.

Scan line clock signals ($\phi$L, LINE SYNC) are derived asynchronously from the main clock decoding circuitry of SEM 302. Because of the relationship, velocity of scan carriage 32 must be kept accurate and stable.

Column counter 748 addresses columns 0—7 and then self resets to effect reading of the thresholds along one scan line in blocks of 8 pixels at a time. Row counter 749 addresses the matrix rows comprising each scan line, i.e. during the first scan line the first row is addressed, during the second scan line, the second row, etc. Counter 749 repeats after each block of 8 scan lines.

Where a fixed threshold is called for (LINE INPUT MODE), the threshold is loaded by MPU 308 and latched. Control switch 745 is triggered to input the fixed threshold value output by latch circuit 746 to output lead 581. Counters 748, 749 are reset to zero count and inhibited.

In the MPU access mode, as for example, where new screen threshold values are to be written into RAM 741, MPU 308 sends a logic high signal through address line 714′ and gate 747 to multiplexers 742, 744. The signal input switches multiplexers 742, 744 to select MPU control bus 716 and MPU address bus 714 instead of the local read/enable signal in lead 739 and column/row counters 748, 749. MPU 308 thereafter applies through control bus 716 a logic high or logic low signal to multiplexer 742 to signal *via* $\overline{WE}$ line 738 for MPU read or write respectively in RAM 741.

The binary image signals output by comparator 575 to lead 579 are fed to sampler 590 which may comprise a flip-flop where the signals are sampled at a selected clock rate (XCLKM) to multiply the number of image signals. A stream of binary image signals from sampler 590 is output *via* lead 591 to VOB 306. Sampler 590 also controls the size of the output image as will appear.

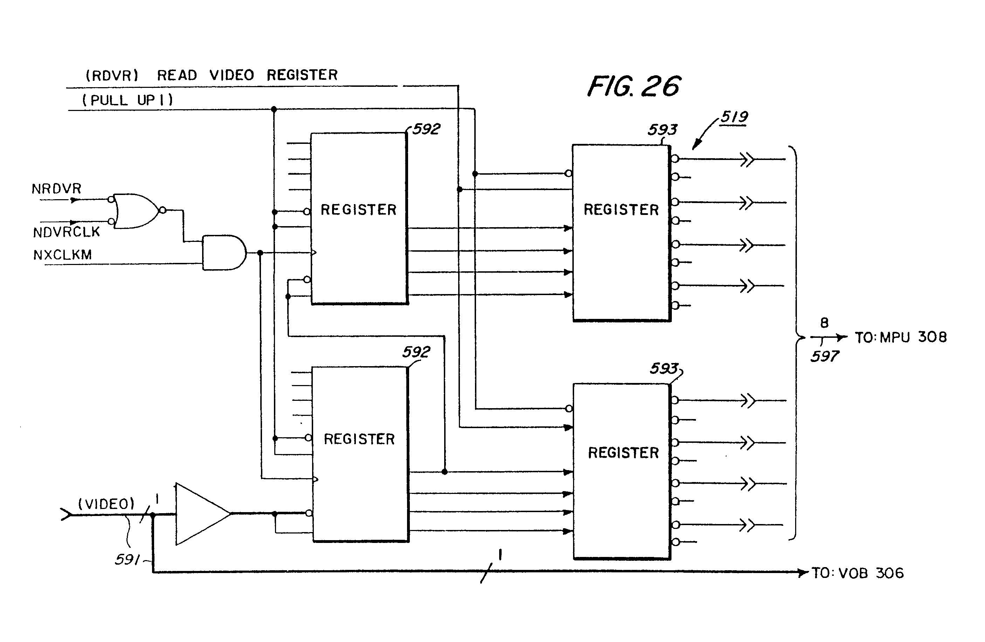

Referring to Figure 26, image signals from comparator 575 are also input to video register pairs 592, 593 of serial-parallel converter 519 where the binary image signals are converted to parallel 8-bit image data. Image data from converter 519 are output through bus 597 to MPU 308 in response to a read signal (RDVR) from MPU 308.

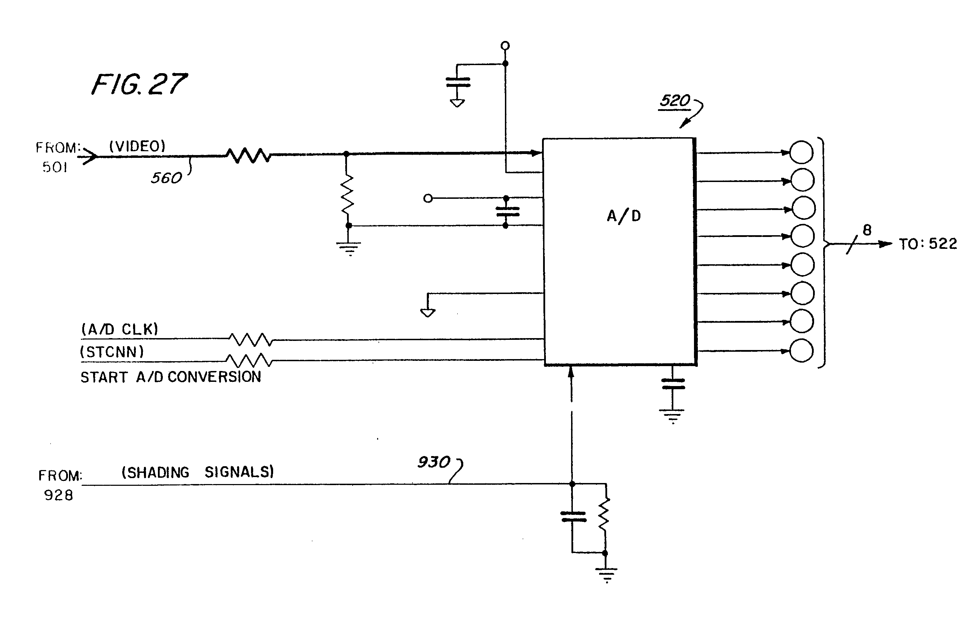

Image signals output by sample and hold circuit 501 may be routed by selector switch 504 to lead 560 and A/D converter 520 when PICTORIAL ENHANCEMENT MODE is selected by the operator. Referring particularly to Figures 27—29 and 22, A/D converter 520, which may comprise a TRW Model TDC-100UA/D converter, serves to convert the analog image signals into 8 bits of digital information. Where the image data is output to VOB 306, the least two significant bits are dropped to provide a 6-bit output to VOB 306. Data output to MPU 308, normally for calibration or diagnostic purposes, is in 8-bit form. Image data output to either VOB 306 or MPU 307 is selected by switch 522. Switch 522 comprises A/D register pair 595 to which the image data from A/D converter 520 are output. Image data from A/D register pair 595 are output to VOB 306, and to MPU register pair 597. On a read signal (RDDR) from MPU 308, MPU register pair 597 provide single byte image data to MPU 308. Image data from video register pairs 592, 593 (See Figure 26) and from MPU register pair 597 are input to MPU for calibration, diagnostic, etc. purposes.

Referring particularly to Figures 22, 27, and 29, A/D converter 520 is enabled by a start A/D conversion signal (STCNN) responsive to establishment of the A/D time base (STADTB) and clocked at the low speed clock signal (2$\phi$MHz) derived from output lead 409 of clock generator 400 (Figure 18b). Clock driving pulses (A/D CLK) for A/D converter 520 are similarly derived from the low speed clock signal output of generator 400 in response to an A/D Mode input Signal from MPU 308.

Inasmuch as the operational speed of A/D converter 520 is limited, only image pixels up to a predetermined maximum pixel rate (e.g. 25 mmps) can be converted by A/D converter 520. Where the input pixel rate is above the predetermined maximum rate, only selected pixels of each scan line may be converted.

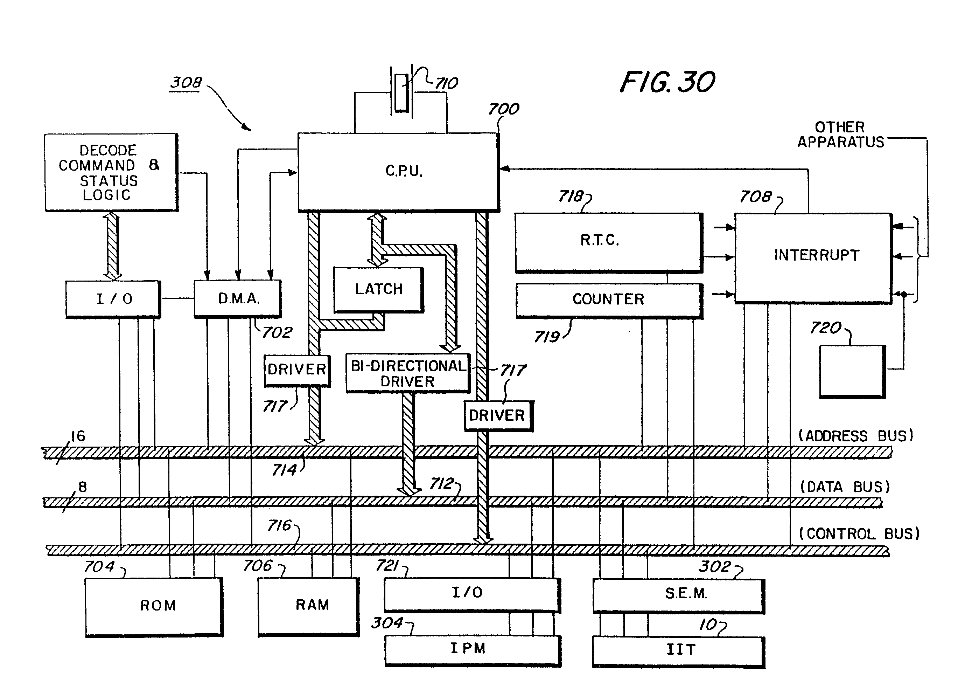

Referring to Figure 30, MPU 308 controls the sequence of events in IIT 10 in accordance with a predetermined software program. MPU 308 includes a suitable CPU chip 700 such as an Intel Model 8085 CPU chip manufactured and sold by Intel Corporation, DMA controller 702, ROM memory 704, RAM memory 706, and interrupt controller 708. Crystal oscillator 710 provides clock signals for MPU 308 and for the Y scan servo loop speed reference (SPEED) of SEM 302. See Figure 18a. Operating control software resides partially in ROM 704 with the remainder softloaded into RAM 706.

MPU 308 is interfaced with the various operating components that comprise IIT 10 *via* SEM module 302, and with IPM module 304 *via* IPM interface 721 through 8-bit bidirectional data bus 712, 16-bit address bus 714, and control bus 716. Suitable bus drivers 717 are provided.

Interrupt controller 708 serves to permit a routine in progress to be interrupted, and to preserve the environment of the interrupted routine with return to the point of interruption. Interrupt controller 708 also permits IIT 10 to be coupled with other apparatus (for example, data storage facilities, copy printer, etc.), the interrupt serving to control a DMA channel allocated for data and/or command transfers between IIT 10 and such other apparatus, to verify data received, and to interrupt and perform such data/unload commands, flags, etc. as may be required.

A second interrupt source, real time clock (RTC) software module 718 includes procedures for updating a 32-bit counter 719 at each interrupt, for computing the end time of an event by adding the count of counter 719 to a user specified value, comparing the RTC counter with a user specified time, and reading counter 719.

System control over IIT 10 is exercised by a software scheduler having procedures for initializing, scheduling, and transmitting various operational tasks or programs. Tasks which communicate with one another through system control tables are scheduled by calling a scheduler procedure and identifying appropriately the task to be scheduled. IIT 10 is controlled by entering commands at the operator's console or panel 309, or by commands from other associated units *via* a direct memory access (DMA) channel allocated therefor. Commands entered are interpreted and processed.

Operational control programs for IIT 10 include monitoring operator panel 309, operating scanner section 12 and document handler 14, analyzing instructions received, calibration, and system initialization. Additional software programs have control procedures for individual component initialization and verification, for loading and verifying halftone screen RAM 741, for shading, for MPU initialization and self test, and for bad pixel deletion.

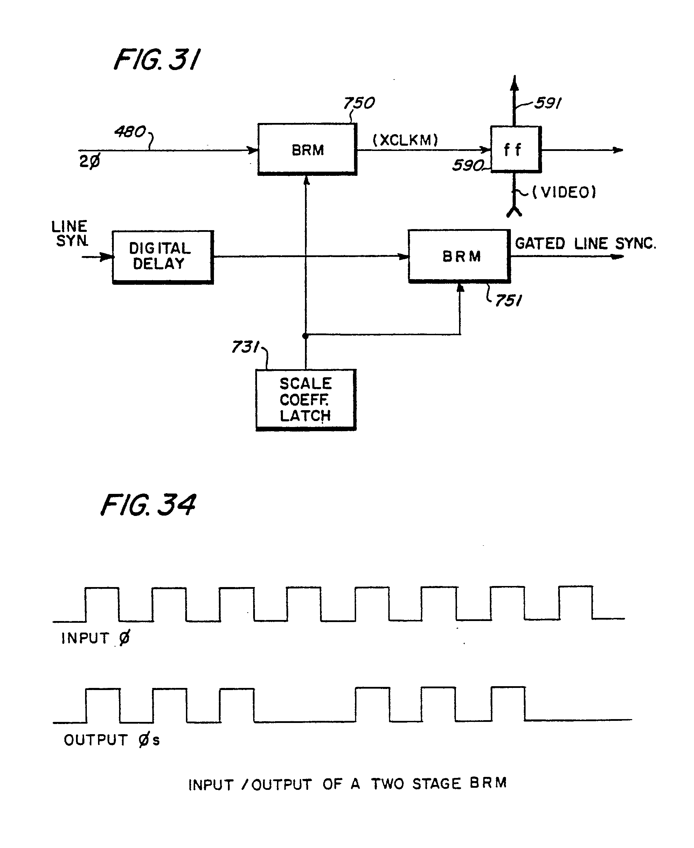

Referring to Figure 25b, IPM interface 721 includes address decoder 724 for decoding address data input thereto through address bus 714, the output of decoder 724 being input to AND gates 726, 727 and 747. Control signals from MPU control bus 716 are input to a second input of gates 726, 727. The output of gates 726, 727 regulate enablement of scale coefficient latch 731 and mode control latch 732 respectively. When triggered, the signal output of scale coefficient latch 731 sets the programmable multiplier of Binary Rate Multipliers (BRM's herein) 750, 751 (Figure 31) for the image pixel resolution and magnification selected by the user. Mode control latch 732, when triggered, provides the signal (AD mode) identifying the operational mode of IIT 10.

Referring particularly to Figures 20 and 31, the signal outputs of scale co-efficient latch 731 controls the setting of BRM's 750, 751 which in turn control both the image resolution, i.e. the number of pixels in each line and the number of lines and, therefore the image size. BRM 750, which controls the number of pixels in each scan line (i.e. the X dimension) has a clock signal $2\phi$ from SEM 302 corresponding to the maximum pixel rate per line input thereto. The output signal of BRM 750 (XCLKM) is input to sampler 590.

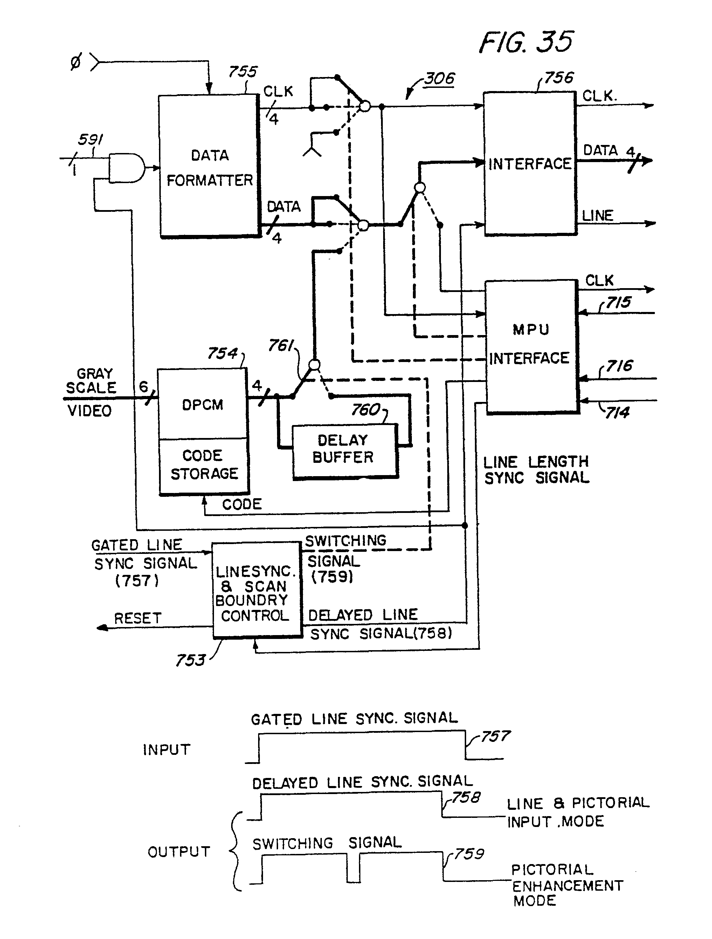

BRM 751, which controls the number of lines scanned (i.e. the Y dimension), has line clock signals (LINE SYNC), representing the maximum number of lines to be scanned, input thereto. The signal output of BRM 751 (GATED LINE SYNC) is input to X-scan boundary control 753 (Figure 35).

It will be understood that BRM's 750, 751 which may for example, comprise Texas Instrument's model 7497 BRM's each incorporate a programmable multiplier enabling a selected output frequency, which is a factor of the input frequency, to be obtained, depending upon the control signal input. To provide the selected output frequency, BRM's 750, 751 drop selective clock cycles from the input clock frequency.

To accomplish both X and Y dimension scaling, the nearest neighbor algorithm is applied. By applying an input CLK with frequency $\phi$ to a BRM, the output clock frequency $\phi_s$ is given by:

$$\phi_s=\frac{M\cdot\phi}{64}$$

where $0\leq M\leq 63$ i.e. 6 bits binary coded decimal.

If two devices are cascaded, the output frequency is then:

$$\phi_s=\frac{M_1\cdot\phi}{64}+\frac{M_2\cdot\phi}{4096}$$

To realize the output clock frequency $\phi_s$, selected clock cycles of the input clock $\phi$ are dropped in a manner identical to the nearest neighbor algorithm. Figure 34 illustrates an exemplary relationship between input and output clocks for an $M_1=48$ and $M_2=0$. This results in an output clock frequency of $\phi_s=0.75\phi$.

Applying the line sync clock to the input of BRM 751, the output clock (GATED LINE SYNC) will have selected cycles deleted. Gating the binary video output with this clock will, therefore, remove selected lines according to the programmed multiplier $M_1$ and $M_2$. In the example shown, every fourth line is deleted.

Applying a clock frequency of $2\phi$ to the X-dimension BRM 750, the output clock (XCLKM) will be the required clock, scaled from $2\phi$ for both X-dimension interpolation and image scaling. In the example shown, every fourth pixel is deleted.

Referring to Figure 35, VOB 306 contains the image signal and line sync signal formatting functions in the form of differential pulse code modulator (DPCM) 754, serial to parallel binary video formatter 755, line sync signal and scan boundary control 753, and DPCM data formatting and 9-wire output interface 756.

DPCM 754 serves to compress the 6-bit digital data input from A/D converter 520 to 4 bits with subjectively inconspicuous error to provide a bit rate that corresponds with the speed limits of typical data storage devices. In addition, formatting the data in 4-bit nibbles simplifies transmission and further compression. The algorithm applied to accomplish DPCM is to compute a difference value $d_n$.

$d_n=X_n-X_{n-l}-e_{n-l}$

where $X_n$=present video sample value;

$X_{n-l}$=previous video sample value;

$e_{n-l}$=previous error in quantizing the value $d_{n-l}$; and

$$e_n=q_n-d_n$$

The difference value $d_n$ is then quantized to a value $q_n$ according to a preset mapping table. An exemplary mapping table is shown in Table I. Referring thereto, mapping is effected by mapping from the value $d_n$ in the first column (Difference) to the corresponding value $q_n$ in the third column (Quantization). The quantized difference value $q_n$ is mapped to a 4-bit nibble using the corresponding 4-bit $M_n$ in 4th column (4-bit code). As seen in Table I, the difference values $d_n$ with magnitudes larger than 32 are coded to the same $q_n$ values for both positive and negative values of $d_n$ to use the 4-bit codes more efficiently. Later decoding employs the equation $X_n=X_{n-l}+q_n$.

For the values of $q_n$ larger in magnitude than 32, adding the incorrect sign $q_n$ to $X_{n-l}$ will result either in a negative $X_n$ or in a larger than scale (64) positive $X_n$ which are both physically incorrect. In this case both the positive and negative values of $q_n$ are added to $X_{n-l}$ and the value of $X_n$ that is positive and within the range (64) is chosen as the output for $X_n$. Both encoding the decoding algorithms presume initial zeros i.e. $X_{n-l}$, $e_{n-l}$ are initially zero for encoding and $X_{n-l}$ is zero for decoding respectively. The following example illustrates the algorithms.

Assume input samples are $X_0=10$, $X_1=54$ and $X_2=12$

Encoding:

$d_0=10-0=10$ $q_0=11$ $e_0=1$ $M_0=0100$
$d_1=54-10-1=43$ $q_1=47$ $e_1=4$ $M_1=1110$
$d_2=12-54-4=-46$ $q_2=-47$ $e_4=-1$ $M_2=1110$

Decoding:

$M_0=0100$ $q_0=11$ $X_0=11+0=11$
$M_1=1110$ $q_1=\pm47$ $X_1=11+47=58$
$X_1=58$ (positive $<64$)
or $X_1=11-47=-36$
$M_2=1110$ $q_2=\pm47$ $X_2=58+47=105$
$X_2=(105$ is $>64)$
or $X_2=58-47=11$

Thresholder 514, in LINE or PICTORIAL INPUT MODES provides 1 bit/pixel output. This data is formatted to 4-bit nibbles by formatter 755 which may comprise plural serial-to-parallel registers. Pixel clock $\phi$ is input to formatter 755 and similarly divided by 4. Both the formatted image and clock signals are output to interface 756.

Line Sync Signal and X-Scan Boundary Control 753 serve to delay the line sync signal 757 input to control 753 to provide a Delayed Line Sync Signal 758 delayed by a period equal to all the delays encountered in the video path i.e., from filtering, sampling, thresholding DPCM, etc. in each mode of operation. The delayed line sync signal 758, which synchronizes the output with valid data, is also used to determine the scan boundary in the X-dimension. This is accomplished by dropping the line sync signal 758 to logic zero at the actual end of a scan line. Scan boundary in the Y-dimension is determined by SEM 302 and the output.

Additionally, control 753 generates a switching signal 759 that divides the scan line output of DPCM 754 into two parts. This last function is applied only in the PICTORIAL ENHANCEMENT MODE.

For this purpose, each line of DPCM data (a scan line) is formatted into two equal parts using first in-first out (FIFO) buffer 760 and switch 761. The first half line is made equal to one half the scan line (in number of pixels), after which the line sync signal is dropped to logic 0 for a period of time equal to a few pixels. The line sync signal is then raised back to logic 1 indicating, the start of the next half line. On dropping of the first sync signal to logic 0, the output of DPCM 754 is coupled to buffer 760 by switch 761. Buffer 760 delays the image data comprising the one half line by a period equal to the period during which the line sync signal dropped to logic zero, avoiding any loss of image data. By dividing the scan line into two equal parts, the number of bits per line is kept within the limit acceptable to the output.

For example, if the maximum number of pixels/line is 3440, X-dimension interpolation by interpolator 510 or 512 doubles the number of pixels to 6880 pixels/line. The output therefore is binary video (i.e., 1 bit/pixel) totaling 6880 bits/line.

In the PICTORIAL ENHANCEMENT mode, which uses DPCM 754, the number of pixels output is equal to the number of pixels scanned, i.e., 3440 per line. Since DPCM 754 provides 4 bits/pixel, the number of bits/scan line output by the DPCM is 13760 bits/line, which is double the number for the other operational modes. By dividing the scan line into two parts in this mode (PICTORIAL ENHANCEMENT MODE) each line part contains the same number of bits as a scan line in the other modes (LINE INPUT and PICTORIAL INPUT MODES).

TABLE I
DPCM LOOK-UP (6—4 bits)

| Difference ($d_n$) | No. In group | Quantization ($g_n$) | 4 Bit code ($M_n$) |
|---|---|---|---|
| +63 | | | |
| . | | | |
| +58 | 11 | +58 | 1111 |
| . | | | |
| +47 | 11 | +47 | 1110 |
| . | | | |
| +37 | 9 | +37 | 0111 |
| . | | | |

TABLE I (contd.)
DPCM LOOK-UP (6—4 bits)

| Difference ($d_n$) | No. In group | Quantization ($g_n$) | 4 Bit code ($M_n$) |
|---|---|---|---|
| +28 | 9 | +28 | 0110 |
| . | | | |
| +19 | 9 | +19 | 0101 |
| . | | | |
| +11 | 7 | +11 | 0100 |
| . | | | |
| +5 | 5 | +5 | 0011 |
| . | | | |
| +2 | 1 | +2 | 0010 |
| +1 | 1 | +1 | 0001 |
| 0 | 1 | 0 | 0000 |
| −1 | 1 | −1 | 1000 |
| −2 | 1 | −2 | 1001 |
| . | | | |
| −5 | 5 | −5 | 1010 |
| . | | | |
| −11 | 7 | −11 | 1011 |
| . | | | |
| −19 | 9 | −19 | 1100 |
| . | | | |
| −28 | 9 | −28 | 1101 |
| . | | | |
| −37 | 9 | −37 | 0111 |
| . | | | |
| −47 | 11 | −47 | 1110 |
| . | | | |
| −58 | 11 | −58 | 1111 |

Where the image signals output by IIT 10 exceeds the capability of the output device (as for example a storage disk) to assimilate the image signals, a suitable overload signal (not shown) indicating overload of the output device input sets IIT 10 into DEFAULT MODE. In this mode, a control signal from MPU 308 returns scan carriage 32 to home position to initiate a new scan at relatively slower speed. In the exemplary arrangement shown, scan carriage 32 is operated at a speed of 50 mmps in the DEFAULT MODE with arrays 40, 41 operated at 25 mmps. Effectively, this results in arrays 40, 41 scanning every other line to provide an output image resolution of 240 lines per inch by nine pixels per mm.

Control over scanning operation of IIT 10 and document handler 14 is exercised by MPU 308 in accordance with instructions from the user or operator through control panel 309. Referring to Figure 18a, document handler 14 incorporates a cover interlock switch 780 for generating a document handler enabling signal when cover 24 thereof is closed. Where documents are to be manually fed, cover 24 of document handler 14 is raised (as shown in Figure 11) opening interlock switch 780 and disabling document handler 14.

One or more document presence switches 782 are disposed adjacent document feed slot 210 and document handler 14 to detect insertion of a document to be fed therein. As described heretofore, documents to be fed are manually inserted into slot 210 following which document handler 14 advances the document into registered position on platen 28. In addition, one or more document jam switches (not shown) may be disposed at convenient places along the document path.

Operating control data from MPU 308 are distributed to motor 290, solenoids 225, 260, and clutch 291 of document handler 14, and to exposure lamp 65 of IIT 10 through buffer 784. Buffer 784 is loaded with control data from MPU 308 through data bus 712 such that when a document has been inserted into feed slot 210 of document handler 14, solenoid 225 is actuated to drop fingers 216, start motor 290 and engage clutch 291. Motor 290 drives rollers 201, 202 and feed belt 230 to advance the document into registered position on platen 28. Following registration of the document, scan motor 39 is energized to move scan carriage 32 and scan the document. On completion of the scanning cycle, a signal from MPU 308 actuates solenoid 260 to drop registration gate 29, start motor 290 and engage clutch 291 to operate feed belt 230 and exit rollers 265, 266 to remove the document from platen 28 and into output tray 267.

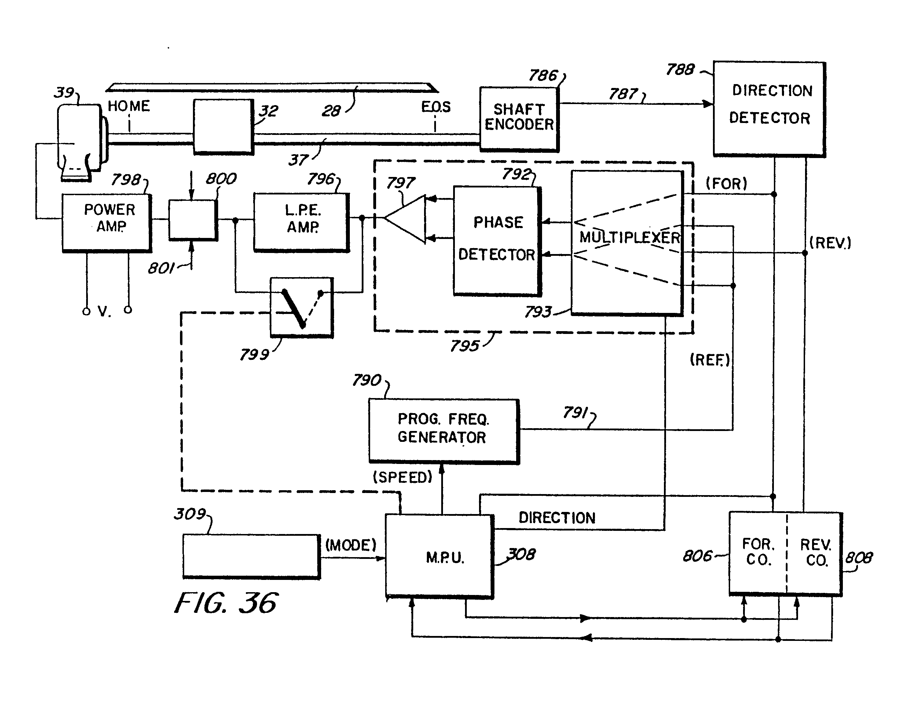

Referring particularly to Figures 18a and 36, an encoder 786 is provided on the output shaft of scan carriage motor 39. Encoder 786 generates quadrature, i.e. 90°, out of phase signals in lead 787 reflecting rotation of motor 39 in either a forward or reverse direction. Direction detector 788 uses the 90° phase relationship of the input signals from encoder 786 to determine the direction of rotation of motor 39 and hence the direction of movement of carriage 32, detector 788 providing either forward (FOR) or reverse (REV) control pulses to forward (SCAN) and reverse (RETURN) position counters 806, 808 respectively. Forward (FOR) and reverse (REV) position counters 806, 808 count down from a home position in preset increments (i.e. 1000 counts per inch of travel of scan carriage 32) from a maximum count, counters 806, 808 being set to the maximum count at the carriage home position. To determine carriage home position, motor 39 is energized in the reverse (REV) direction to move carriage 32 backwards until the carriage abuts a carriage bumper (not shown). Counters 806, 808 are then zeroed and set to the predetermined maximum count. As will be understood, the count on counters 806, 808 reflects the position of carriage 32 which may be determined at any point during scan by subtracting the count on forward counter 806 from the count on reverse counter 808.

Programmable frequency generator 790 generates a frequency signal (REF) which is input *via* lead 791 and multiplexer 793 to phase detector 792 of phase lock loop 795 for phase locked motor operation. Multiplexer 793 is controlled by signals (DIRECTION) from MPU 308, multiplexer 793, during scan, coupling the forward (FOR) control pulses of direction detector 788 together with the forward reference signal (REF) to phase detector 792, and during carriage return, coupling the reverse (REV) control pulses of detector 788 together with the reverse reference signal (REF) to phase detector 788. As will appear, phase detector 792 compares the frequencies of forward (FOR) and reverse (REV) control pulses with the reference signal (REF) input by frequency generator 790. The frequency of the reference signal (REF) output by generator 790 is set by control signals from MPU 308 in response to the operational mode selected by the user. Generator 790 also serves as a variable duty cycle generator for open loop driver 794 (Figure 18a).

Control over scan carriage motor 39 is exercised through phase locked loop section 795, the output of phase detector 792 thereof being input to adder 797 which sums the outputs of phase detector 792 in accordance with a predetermined formula. The signal output of adder 797 is input *via* loop filter 796 to power amplifier 798 controlling power input to motor 39. Loop filter 796 comprises a low pass active filter with predetermined gain (e.g. 2.5), filter 796 being tuned to roll off at 100 Hz to filter out transients.

In operation, a signal (DIRECTION) from MPU 308 sets multiplexer 793 in accordance with the direction in which scan carriage 32 is to move, i.e., in the forward (SCAN) direction. MPU 308 loads a succession of different frequency selecting signals, into frequency generator 790. Generator 790 responds by outputting to phase comparator 792 reference signals (REF) at the frequencies selected. For startup purposes, the first reference signal frequency is relatively low (e.g. 1 kHz) with subsequent reference signals being increased stepwise in frequency. As the speed of scan carriage 32 approaches the operating speed desired, the frequency steps are reduced from relatively large (coarse) steps to relatively small (fine) steps.

Phase detector 792 compares the frequency of the reference signal (REF) from frequency generator 790 with the frequency of the signal representing the speed at which scan carriage 32 moves as determined by shaft encoder 786. Where a difference exists, an error signal is generated. The error signal is input through filter/amplifier 796 to power amplifier 798 to energize carriage drive motor 39. Motor 39 accelerates carriage 32 in the desired direction. The increase in the speed of carriage 32 in turn increases the frequency of the signal output by shaft encoder 786 until the frequency of the reference signal (REF) and the frequency of the signal from shaft encoder 786 match, at which point the error signal output by phase comparator 792 falls to zero interrupting power to motor 39.

The above procedure is repeated periodically (e.g. at intervals of 0.001 seconds) until scan carriage 32 reaches the desired operating speed. Thus, as can carriage 32 accelerates, MPU 308 periodically steps up the frequency of the signal output by generator 790. Phase lock loop 795 responds to energize carriage drive motor 39 and accelerate carriage 32 until the carriage has been stepped through the speed plateaux represented by each successive reference signal to the final predetermined carriage speed.

It will be understood that the final carriage speed in the scan direction is dependent upon the operating mode selected as described heretofore. The return (RETURN) speed of scan carriage 32 is the same for all operating modes.

With scan carriage 32 at desired operating speed, and the frequency of the reference signal output by frequency generator 790 constant, phase lock loop 795 serves to maintain carriage 32 at the desired operating speed. Should scan carriage 32 slow, phase detector 792 detects the change in frequency between the signal output of shaft encoder 786 and the reference signal output by generator 790 and generates an error signal energizing motor 39.

As scan carriage 32 approaches the End of Scan (EOS), a signal from MPU 308 closes switch 799 to short out filter/amplifier 796 thereby providing a gain of zero. With gain set to zero, power to carriage motor 39 is interrupted, stopping scan carriage 32.

Phase comparators 792 may comprise a Motorola MC 4044 Phase Frequency Comparator which generates an output proportional to the phase or frequency difference between the encoder signal and the reference signal (REF) input by generator 790 while shaft encoder 787 may comprise a Model 992—500 OCLP manufactured by Disc Instruments. Counters 806, 808 may comprise Intel 8253 16-bit down counters while adder 797 may comprise a 741 Differential Amplifier. Programmable frequency generator 790 preferably consists of a crystal clock and programmable counters.

When it is desired to operate scan motor 39 in an open loop fashion as for example during calibration, a signal in lead 801 activates a multiplexer 800 to switch from the output of phase lock loop section 795 to the output of open loop driver 794. The speed and direction of movement is controlled by a signal from MPU 308 *via* lead 803. Forward and reverse counters 806, 808 permit MPU to monitor the position of scan carriage 32 as described earlier.

Referring to Figure 2, a reflective calibration strip 900 of predetermined reflectivity is mounted on platen 28 on the underside thereof along the platen leading edge. Disposition of calibration strip 900 on the underside of platen 28 provides a defocused image for arrays 40, 41 and reduces interference of dust, dirt, scratches and other defects that may occur on the video calibration signal generated by arrays 40, 41. Preferably the reflectivity of strip 900 is chosen to provide an optical signal equivalent to a 50 percent reflective document placed on platen 28.

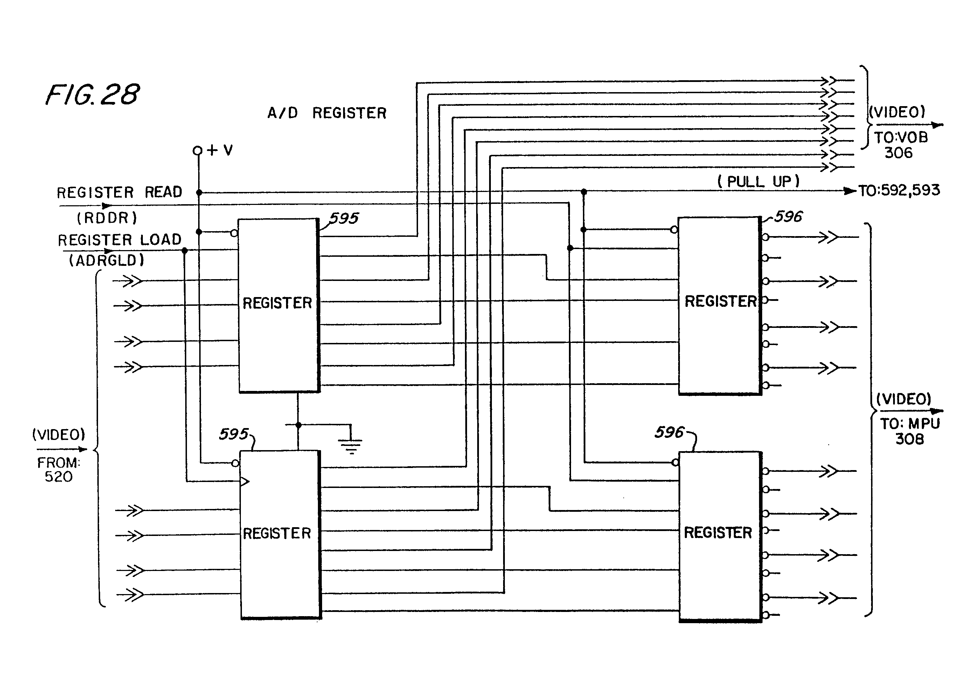

The video calibration signals obtained from reading calibration strip 900 may be taken from either video output registers 593 of screen/threshold section 505 (Figure 26) when calibrating IIT 10 for LINE INPUT and PICTORIAL INPUT MODES, or from video output registers 596 of AD section 506 (Figure 28) when calibrating IIT 10 for PICTORIAL ENHANCEMENT MODE. It will be understood that the particular MODE calibrated is dependent upon the MODE selected by the operator. The video calibration signals are input to MPU 308 for processing.

Additionally, calibration video, which may be either fixed level video from MPU 308 or video calibration signals from VOB 306, may be introduced into IIT 10 to verify operation of IPM 504. Referring particularly to Figure 20, selector switches 500, 502 are preset by the user or operator to couple either MPU 308 or VOB 306 to sample and hold circuit 501 of IPM 504. The calibration video introduced into IPM 504 from either MPU 308 or VOB 306 is passed through digital-to-analog (D/A) converter 503 to convert the video signals from digital to analog.

In order to correlate the image output levels of arrays 40, 41 with one another, automatic gain control (AGC) is provided. The amount of gain required is determined by comparing the voltage output of arrays 40, 41 when reading calibration strip 900 with a desired level or threshold value.

At startup before scan is initiated, scan carriage 32 is brought to the position where arrays 40, 41 are disposed below calibration strip 900. Movement of carriage 32 into position where arrays 40, 41 are opposite strip 900 is effected by the operator through suitable carriage forward (FOR) and reverse (REV) controls (not shown) on operator control panel 309. MPU 308 responds to produce the appropriate carriage forward or reverse signal (DIRECTION) to open loop driver 794 (Figure 18b) to energize scan carriage drive motor 39 and move carriage 32 in the direction desired.

With arrays 40, 41 disposed below calibration strip 900, strip 900 is scanned a plurality of times in each operational mode. As will be understood from the previous description, the video signals generated by arrays 40, 41 pass through amplifiers 341 in signal channels 340, 341 to crossover switch 350 of SB 300 (Figures 17a, 17b). From SB 300, the video signals pass to IPM 304 and either A/D conversion section 506 and A/D registers 596 (Figure 28), or to high speed interpolator 510 or low speed interpolator 512 (Figure 20) and output registers 593 (Figure 26) depending on the operational mode selected. From registers 596, 593, the image signals may be input to MPU 308 in response to register read signals RDDR or RDVR.

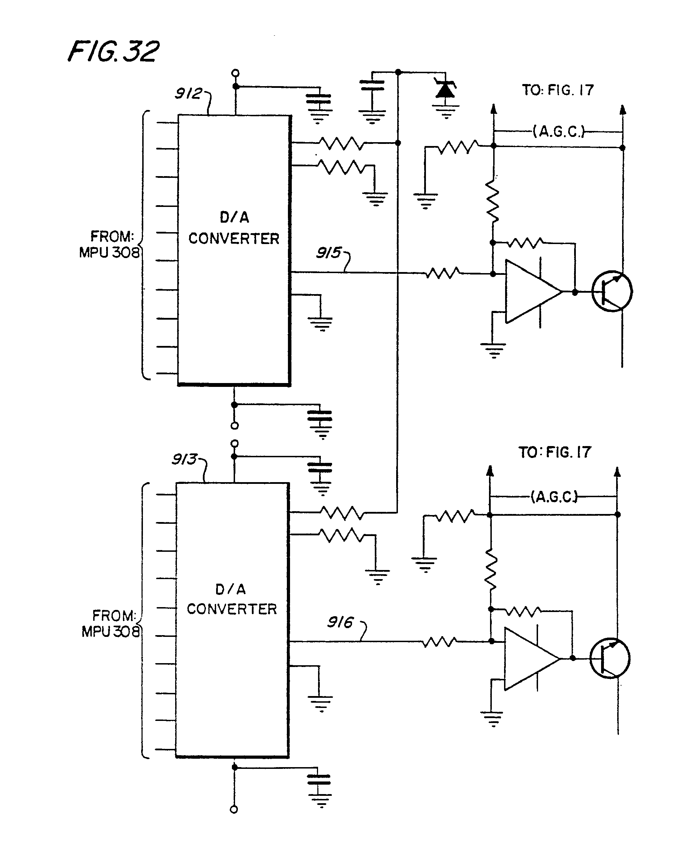

The data derived from each array 40, 41 are interatively adjusted to obtain the optimum gain value for each array for each operational mode in accordance with a suitable program. In a preferred program, the output of D/A converters 912, 913 (Figure 32) to amplifiers 341 of signal channels 340, 341 is initially stepped up in relatively large increments (i.e. in blocks of 16) until the desired signal output gain is attained. Normally however, because of the coarse nature of the steps, the signal output of the amplifier 912 or 913 associated with the array 40 or 41 whose gain is being set, will exceed the signal output gain desired. The converter 912 or 913 is then stepped down in smaller increments (i.e. in blocks of 4) until the signal output gain equals or re-crosses the signal output level desired. The aforedescribed process continues with smaller and smaller increments until the signal output gain of the amplifier 912 or 913 for each array 40 or 41 equals the signal output gain desired.

The above process is carried out for each array 40, 41 for each operational mode and the gain settings derived stored in RAM 706 (Figure 30) for use during subsequent scanning operations.

In a preferred arrangement, the gain is determined by monitoring the signal output of the last four photosensitive elements before crossover of array 40 and the first four photosensitive elements after crossover of array 41. It will, however, be understood that other photosensitive elements or other groups of photosensitive elements may instead be used for this purpose.

Referring to Figure 18b, AGC pulse generator 416 is driven by the clock pulse output of pixel counter 406. As described, counter 406 provides clock pulses for clocking out image pixels from arrays 40, 41. MPU 308 generates at the desired pixel count, an enabling signal activating pulse generator 416. The signal output pulses of generator 416 (RDVR; RDDR) enables video output registers 593 (Figure 26) or 596 (Figure 28) respectively to input image data from registers 593 or 596 to MPU 308, depending upon the operational mode selected.

In the example alluded to heretofore (Figure 17), where crossover from array 40 to array 41 takes place at pixel count 1724, MPU 308 actuates AGC pulse generator 416 at pixel count 1720 through 1728 to transfer image pixels from the last four photosensitive elements of array 40 together with the first four photosensitive elements of array 41 to MPU 308.

MPU 308 averages the block of image pixels from each array and compares the averaged signals with a predetermined signal or threshold level. A gain signal representing the difference between the calibration image pixels and the predetermined signal level is produced for each array.

Referring to Figure 32, the gain signal from MPU 308 is input to D/A converters 912, 913 for arrays 40, 41 respectively. D/A converters 912, 913 convert the digital gain signal output by MPU 308 to an analog signal which is input *via* leads 915, 916 respectively to amplifiers 341 of the signal processing channels 330, 331 associated therewith (Figure 17b). The gain signal serves to regulate the amplitude ratio or gain of amplifiers 341 to provide a uniform image signal level from each array.

On each scan, arrays 40, 41 scan across calibration strip 900 to provide updated gain control information to MPU 308 prior to scanning the document 8 on platen 28. The updated calibration signals generated by the last four photosensitive elements of array 40 and the first four photosensitive elements of array 41 are input to MPU 308 where, as described, the calibration signals from each array are averaged to provide an updated gain signal for each array 40, 41. The updated gain signals are input to RAM 706 to update the existing gain signals stored therein.

Since scan carriage 32 is moving relative to calibration strip 900 when updating of the gain control signals is taken place, the interval within which corrections in gain level can be made is limited. This in turn restricts the number of adjustments in gain level that can be made per array. In the exemplary arrangement shown, the interval is such that only changes in gain setting of one step can be made. However, as long as any drift or change in array performance is relatively minor, the aforedescribed updating will maintain the desired array operating level. If a substantial change in array performance takes place, several scans may be required before the desired gain level is restored.

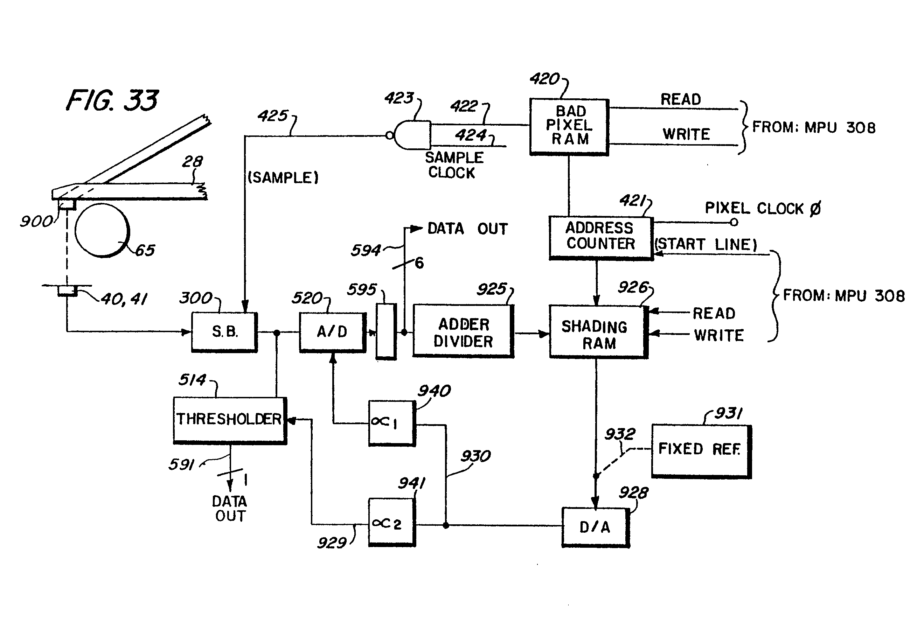

The image data obtained from scanning calibration strip 900 are also employed to compensate the video image output signals of arrays 40, 41 for illumination system profile irregularities such as may be caused by cosine 4th law, profile of scanning lamp 65, vignetting, etc. Referring particularly to Figure 33, the aforesaid compensation, termed Shading herein, takes image pixels produced by scanning calibration strip 900 from A/D video register 595 in blocks of predetermined size (i.e. 16) and inputs the pixels to adder/divider circuit 925 which provides an average pixel value representative of the pixel block. The averaged pixels or shading signals are stored in Shading RAM 926 for later use on a write signal from MPU 308.

During operation, the contents of Shading RAM 926 are cyclically addressed by address counter 421, which is enabled at the start of scan (START LINE) to sequentially address the shading signals held therein. Counter 421 is driven in synchronism with the stream of image pixels by pixel clock $\phi$. A read signal (READ) from MPU 308 enables RAM 926 for this purpose.

The shading signals from shading RAM 926 are input to D/A converter 928 (Figure 24) which converts the digital shading signals to analog signals. The output of D/A converter 928 is input *via* lead 929 to D/A converter 517 of thresholder 514 (shown in Figure 24) where the shading signals are, in effect, multiplied by the analog threshold/screen signals output by converter 517, and *via* lead 930 to A/D converter 520 (shown in Figure 27) of A/D section 506 where the shading signals are, in effect, multiplied by the input image signals.

To accommodate differences between A/D converter 520 and thresholder 514, a proportionality constant is introduced in the shading signals output by D/A converter 928. For this purpose, attenuating circuits 940, 941, which comprise suitable resistor networks are disposed in leads 930, 929 respectively. Attenuating circuits 940, 941 serve to multiply the shading signal output by D/A converter 928 by a preselected proportionality constant.

Where desired, e.g. for test purposes, a source 931 of digital shading signals may be provided with manually controlled selector switch 932 for selectively coupling shading signal source 931 with D/A converter 928.

As can be understood, certain photosensitive elements 312 in the multitude of photosensitive elements that comprise arrays 40, 41 may be or become inoperable or below par. In this situation, the image signal output by the affected photosensitive element or elements may be faulty, or have sensitivity characteristics significantly different from the image signals output by neighboring photosensitve elements. To identify and accommodate bad or faulty photosensitive elements, a bad pixel deletion control is provided. As described, SEM 302 (Figure 18b) supplies a control signal (SAMPLE) to sample and hold circuit 339 on SB 300. Referring to Figure 17b, in normal operation, one sample signal is generated for each video image signal and triggers sample and hold circuit 339 which samples and holds the video image signal input thereto for a preset time interval in output lead 340. Capacitor 345, which is coupled to output lead 340, charges each time to a voltage level corresponding to that of a sampled video image signal.

The bad pixel deletion control interrupts input of the control signal (SAMPLE) to sample and hold circuit 339 to prevent circuit 339 from sampling the next video image signal. In this condition, the previous video image signal output by sample and hold circuit 339, which is held on capacitor 345, forms the video image signal output to differential amplifier 341.

To identify bad or faulty elements, calibrating strip 900 is scanned in each of the LINE INPUT, PICTORIAL INPUT, and PICTORIAL ENHANCEMENT MODES, and the image data output to MPU 308. MPU 308 compares the image signal output of each photosensitive element of arrays 40, 41 with a predetermined minimum voltage level or threshold. Where the image signal is above the minimum threshold value, and hence acceptable, a binary signal (e.g. 1) is loaded into bad pixel RAM 420 (Figure 18b) by MPU 308. Where the image signal is below the minimum threshold value and hence unacceptable, a binary signal (e.g. 0) is loaded into RAM 420. In the calibration mode, MPU 308 generates a write (WRITE) signal enabling data to be loaded into RAM 420.

During scanning operation, a read signal (READ) from MPU 308 enables reading of the data stored in RAM 420. Address counter 421 which is driven by pixel clock signals from pixel counter 406 and is reset at the start of scan of each line by a signal (START LINE) from MPU 308, sequentially addresses RAM 420 and the control data therein. The output of RAM 420 is input through lead 422 to AND gate 423. A sample signal is periodically generated by event timer 410 and input to gate 423 through lead 424. The output of gate 423 (SAMPLE) is input to sample and hold circuit 339 through lead 425.

Where the signal input from Bad Pixel RAM 420 is high (e.g. 1), AND gate 423 is enabled and on a pixel clock signal $\phi$, gate 423 is triggered to generate a sample (SAMPLE) signal in lead 425 to SB 300. As described, the sample (SAMPLE) signal triggers S/H circuit 339 to sample the next video image signal.

Where the signal input from Bad Pixel RAM 420 is low (e.g. 0) indicating a "bad" photosensitive element, gate 423 remains in a blocking condition to prevent output of a sample (SAMPLE) signal. As a result, the previous image signal, which is retained by capacitor 345, is output.

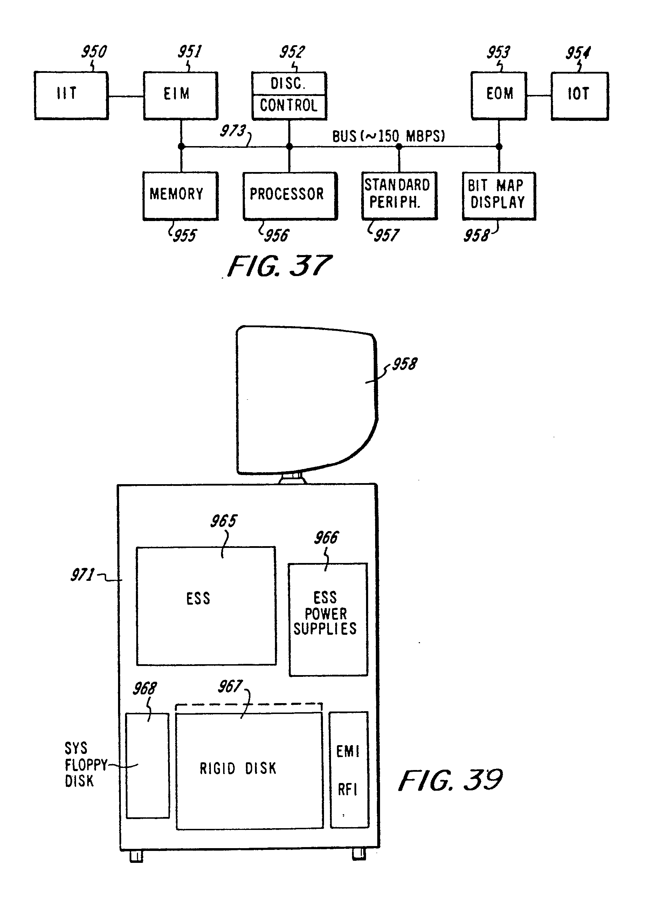

The general system functions are enabled by the system architecture shown in block diagram form in Figure 37.

The Image Input Terminal (IIT) 950 comprises a platen on which an original image is placed, and a raster input scanner (RIS) which translates the image, line by line, into a series of analog voltages through the use of charge coupled devices (CCD's). These analog pulses are converted into digital form and compressed using a predictor and data compressor in the electronic input module (EIM) 951 and then entered into the memory 955 of the processor 956. To minimize scan and store times, the computer data bus 971 runs at a 150 Mbit/sec. rate. The compressed image data representing up to several hundred pages can be temporarily stored on the disc memory 952.

As is common in printing systems, an inproved copy can be produced from a continuous tone original by halftone screening the image data prior to printing. In one version of this described embodiment, this screening process takes place in the electronic circuits of the IIT 950, where the analog voltage is converted in a thresholding process to a one bit per pixel data stream, according to a prescribed eight-by-eight pixel matrix. These halftone data are then operated on by a predictor and encoder to compress the data prior to transmission or storage. An eleven-bit, two-line, one-shot predictor and a set of run length codes, both optimized for the mix of line and halftone data produced by this system, are used in the compressor, but the system will operate satisfactorily, although less efficiently, with any well known halftone screening and run length coding process, and with or without a predictor.

Because of a limited effective bandwidth in the mass storage elements, the system must maintain a predetermined minimum compression ratio representing a compromise between image quality on one hand and practical memory performance on the other. The minimum compression ratio required for the described system is 2:1 averaged over a portion of a page, for example equivalent to 64 scan lines. This compression ratio will not be met for the most complex images, that is, those that are least compressible. In order to guarantee a 2:1 compression ratio, therefore, the general compression process is discounted under two conditions.

First, the compressor may actually expand the data. A code word in this system is a minimum of four bits long, so that if too many one-bit run lengths are encountered on a line, an expansion of data results. The solution to this problem is to inspect each line after compression, and to use the raw data if an actual expansion of data occurred. In this case, the raw data are flagged to indicate to the output module that it is not to be decompressed.

Second, during the scanning and encoding of a complex page it may be that the compression ratio averaged over a predetermined buffer allocation is less than the guaranteed compression ratio of 2:1. In this case, every other line of raw data is dropped and the remaining raw data processed through the system in the normal way. The result is the loss of some quality for the affected page.

In this case, the data is flagged to indicate to the output module that this is reduced-resolution data, and that and each line is to be duplicated after decompression.

If a further reduction in data volume is required, because of an additional reduction in effective memory bandwidth in case of exceptional system loads, provision is made for the input page to be rescanned with reduced resolution in both axes. In this case every other line and every other pixel bit of raw data are dropped and the remaining raw data are processed through the system in the normal way. The result is a further loss of image quality for the affected page. In this case also the data are flagged to indicate to the output module that this is reduced-resolution data, but with a code which causes duplication of each pixel and each line after decompression.

The above reduced-resolution mode is also used for faster transmission through communication channels, when slightly reduced quality is acceptable.

The use of a predictor prior to compression results in longer run lengths and greater compression, but because a two line predictor is used, there is a great probability that any error will be propagated from line to line throughout the entire page. Since the occurrance of an error in any storage or transmission operation is probable, a prediction break is required. At the end of a predetermined number of lines, the predictor uses an all-white line instead of the actual previous line in its two line predictor. The result is a slight reduction in the predictor efficiency but a guarantee that any error will not propagate through more than the predetermined number of lines. This predictor break is also flagged for the output module.

Standard peripherals 957 communicate with the processor 956 and memory 955 through the bus 971. In this system the main peripheral is a floppy disk 968 memory device for storing processor 956 software.

Bit maps are retrieved from storage and organized by the processor 956. Images are decompressed as necessary and merged with orthographic material in the electronic output module (EOM) 953. The EOM 953 contains a depredictor and a decompressor to recreate the original video and a band buffer to supply the output to the output printer (IOT) 954.

The processor 956 also constructs bit maps to be displayed to the operator on the bit map display 958, a CRT in this embodiment.

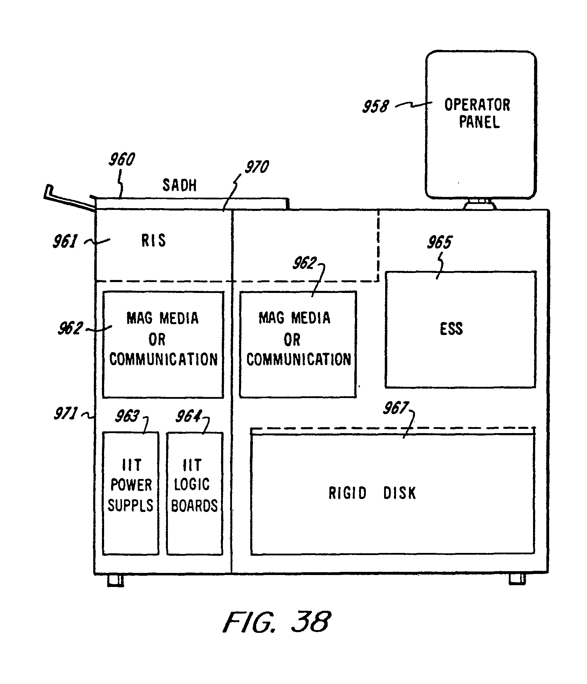

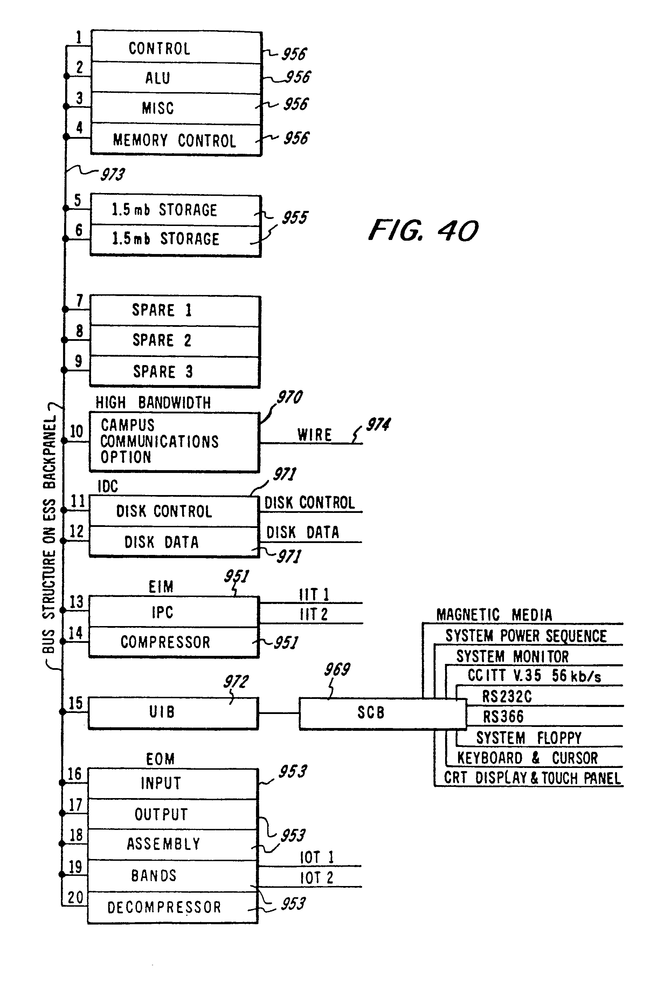

The physical locations of the system components are shown in Figures 38 and 39. The operator panel 958 or bit map display in this embodiment is a typical CRT display, but instead of the usual keyboard for the input of information by the operator, the edges of the CRT faces are fitted with sets of light sources and sensors for detecting the presence of a pointer of any kind, typically the operator's finger. By displaying the likeness of a control panel on the CRT, and by detecting the position of a finger touching a control panel "button", the system can be controlled.

The image input documents are placed on the platen 970 by the operator, perhaps with the aid of the semi-automatic document handler (SADH) 960 where they are scanned by the raster input scanner (RIS) 961. Character coded data are input to the system by inserting magnetic media into the magnetic media input unit 962, or coupling an alternative communications input unit 962 to remote text sources by communication lines. The communications unit may also exchange bit map image data, compressed for efficient transmission, with a remote compatible system.

The input image terminal (IIT) which includes the RIS 961 also comprises the IIT power supplies 963 and the IIT logic boards 964 which control the RIS 961 and process the RIS output electrical signals, finally converting them into digital form.

The electronic sub-system (ESS) 965 receives the RIS 961 output, and compresses it prior to communication to a remote data sink or to storage on the disk 967. In terms of this figure, the printer is a remote terminal of the ESS 965. For the printing of a document, the ESS 965 will decompress the data prior to transmitting it to the printer.

The system floppy disk 968 has three main uses. It can be used as a user input device, similar to the magnetic media input unit 962, allowing the user to input text material; and it can be used to input system generation data at site installation time. The system generation and diagnostic programs are run on the processor which is part of the ESS 965. The ES power supplies 966 provide power to the ESS 965 boards.

Figure 40 schematically depicts the signal paths between modules in the twenty-slot ESS card cage and the system control board (SCB) 969 which is located external to the card cage. Starting at the top, the first four cards comprise the processor 956, a general purpose microprogrammable computer with memory bandwidth capabilities in excess of 150 Mbits/sec.

Card slots 6 and 7 each contain a 1.6 Mbits of MOS memory 955. This is the storage portion of the processor virtual memory system. It can be expanded as required within the available card space. The processor has a real address limit of 16M bits.

Card slot 10 optionally contains a 10M bit/sec packet switched high bandwidth campus communication option, campus here being defined as a building or closely spaced group of buildings connected by a high bandwidth communication wire.

Card slots 11 and 12 contain the Imaginal Disk Controller 971 (IDC). The IDC 971 differs from most other disk controllers in two major aspects. First, it uses a novel Hamming error correction technique that allows real time correction of disk burst errors up to 16 bits long. This is necessary since the data is compressed on the disk and errors would seriously degrade copy quality. Second, the controller is designed to run either a single channel (CDC disk 9730—80) from which 8.2 Mb/s continuous data may be obtained, or a 5-channel parallel disk from which 34 Mb/s continuous data may be obtained.

Card slots 13 and 14 contain the Electronic Input Module 951 (EIM) which is the primary source of imaginal data for the ESS. The EIM 951 has two primary functions. First, it provides the interface between the processor 956 and the IIT 950. This involves logic for power control, command, status, and data reception. Second, the EIM 951 provides for real time data compression in order to save both bandwidth and storage in the ESS system.

Card slot 15 contains the User Interface Board 972 (UIB) which is directly connected to the System Control Board 969 (SCB). The UIB 972 has two functions. First, it is a bit-map based display controller for the user interface (UI). Thus, it gets video data from the processor memory 955 system and transmits these data to the UI *via* the SCB 969. The second function of the UIB 972 is to provide control and data channels between the processor 956 and the SCB 969.

The SCB 969 is mounted external to the ESS card cage, since it must run on an independent power system, does not interface to the processor bus directly, and has too many connectors to fit in a standard ESS card cage slot. The SCB 969 is, in fact, a small 8085 based micro computer system. It performs a number of services for the ESS such as: power sequencing, power and temperature monitoring, processor boot diagnostics, UI control both for the CRT and touch panel, system floppy disk control, keyboard and cursor interface, CCITT V.35 56 Kb/s communications, RS232C low speed communications and RS366 auto-dialing interface. It also provides a general purpose, slow speed, mag media interface which may be connected to a variety of peripherals such as a card reader, cassette tape reader or floppy disk reader.

Slots 16, 17, 18, 19 and 20 contain the Electronic Output Module (EOM) 953 which is the primary image generating module in the ESS. Part of the EOM 953 forms the dual of the EIM 951 in that it provides the interface between the processor 956 and the IOT 954 and also provides for real time data decompression at rates of up to 100 Mb/s. Beyond this, the primary function of the EOM 953 is to compose images from instructions contained in the processor data structures. The EOM 953 has many capabilities, including: generate arbitrary orthographic pages from compressed fonts, decompress full or partial imaginal pages, shift and/or crop imaginal images such as pictures, logos, signatures, or full imaginal pages, and compose arbitrary combinations of the above on a single page. The EOM 953 can either be run as a real time image generator or can work in parametric time, returning its data to the processor 956.

The ESS package typically contains the following: ESS power system 963, 964 of Figure 38, 39 including power monitors, temperature monitors, and cooling fans, ESS card cage 965 with electronics as shown in Figure 40, system control board 969, system floppy disk 968, rigid disk 967 (either single channel or five-channel parallel), operator interface and touch panel 959, and optional mag media 962.

The arrangement of Figure 40 is flexible in many respects. IIT input image data may be fed directly onto the bus 973 in raw form, or may be compressed first. Also, if the image data were stored in raw form, it may be compressed as a background computer task while the computer is performing other functions. Two IIT ports, IIT1, IIT2, are shown, allowing the EIM to interface with two image input terminals on a time shared basis. Of course, the data is usually compressed before being put on the bus 973 to reduce the input bandwidth requirement.

The EOM, similarly, may decompress data on or off-line, merge image and text information into composite bit maps and output the result to two image output terminals.

The low speed communication functions are handled through the User Interface Board 972 (UIB) and the system control board 969 (SCB). The UIB 972 is one board in the ESS card cage and the SCB 969 is a board located adjacent to this card cage. Since the keyboard/display has a low speed alpha-numeric communication capability to the bus 973, the other low data rate (56 Kbits/sec or less) communications may use the same link. These would include the CCITT V.35, RS232C and RS366 telephone line communication links, the output of the floppy disk, the cursor data and system signals. The remaining communication link, the high data rate wire 974, connects to the bus and requires its own interface board 970 as shown.

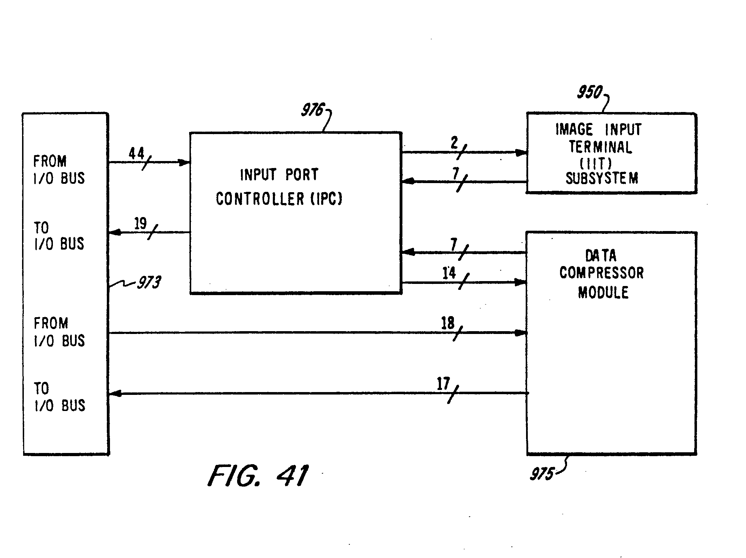

Figure 41 is a simplified block diagram showing the optional paths of data between the bus 973, the compressor 975, the input port controller 976 (IPC) and the IIT 950. As shown, raw data may be transmitted from the IIT 950 directly through the input port controller 976 to the bus 973 or may be compressed in the data compressor module 975 prior to being coupled to the bus 973. Also, data may be exchanged directly between the bus 973 and compressor 975 for compression.

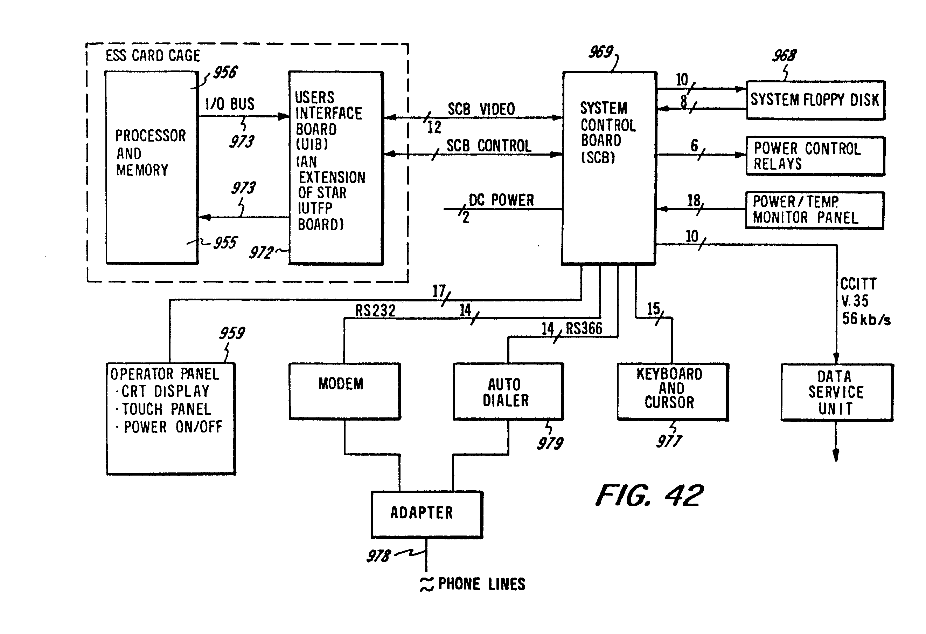

Figure 42 is a more detailed block diagram of the relationships between the processor 956, the UIB 972 the SCB 969 and the various peripheral devices. As shown, the system floppy disk 968, various power and system status monitoring, and the CCITT V.35 lines are coupled through the SCB 969 and UIB 972 to the I/O bus 973. The keyboard and cursor 977, if either are used, are also attached to the SCB 969.

This system, in its electronic image mail mode, allows a document set to be delivered *via* telephone lines 978. In operation, the operator identifies the document set and intended mail recipient by name, address or by any other identifier recognizable by the system. The processor will then do a table look-up in its memory, and transmit the phone number of the remote printer, one digit at a time, to the auto dialer 979. When the connection is made, the document set is then transmitted through the modem 980. The touch panel, display and power status 959 are connected to the SCB 969 through a separate set of lines as shown.

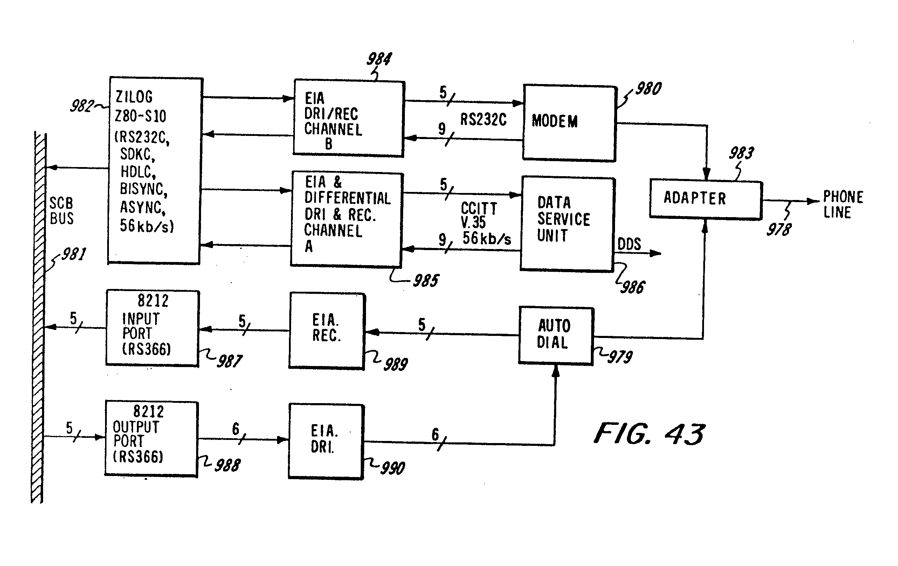

The specific communication links are shown in Figure 43. In operation, when the central processor initiates a data transfer to a remote site, a first set of signals will be coupled from the processor through the UIB to the SCB and more specifically to the I/O data bus 981 of the 8085 processor in the SCB 969. This set of signals will include the telephone number as described above. The SCB will then enable two communication functions, the data channel and the auto-dial interface.

The data channel comprises a ZILOG Z80-SIO part 982 which generates and formats signals for the common protocols including those shown. The data connection includes driver/receiver 984, a modem 980 and an adapter 983, which are commonly supplied by the telephone line 978. This completes the low speed, 110 to 19.2 Kbit/sec., RS 232 channel.

The Z80—SIO chip 982 also drives a CCITT V.35 high speed, 56 Kb/s, channel through the second driver and receiver 985 and Data Service Unit 986, which communicates over a Digital Data Service (DDS) line provided by the telephone company. The EIA (Electronic Industry Association) driver/receiver units 984, 985 are standard commercial parts, examples being the TI 75188 and 75189 parts, which constitute a standard communication channel driver and receiver.

The auto-dial circuit comprises input and output ports on the SCB bus, 987, 988, and the EIA drivers and receivers 989, and 990 which drive a commercially available autodial unit 979. This unit also connects to the adapter 983 as shown so that the data and connecting signals are properly coupled to the telephone line 978.

The receiving circuit is similar to the transmitter circuit as shown in Figure 43, the telephone line 978 is coupled to an auto-dial circuit and a data circuit through an adapter.

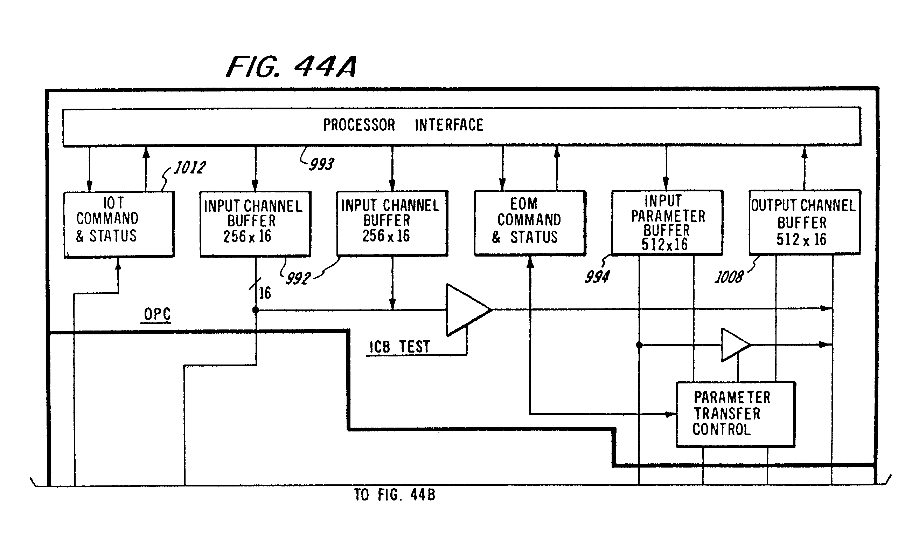

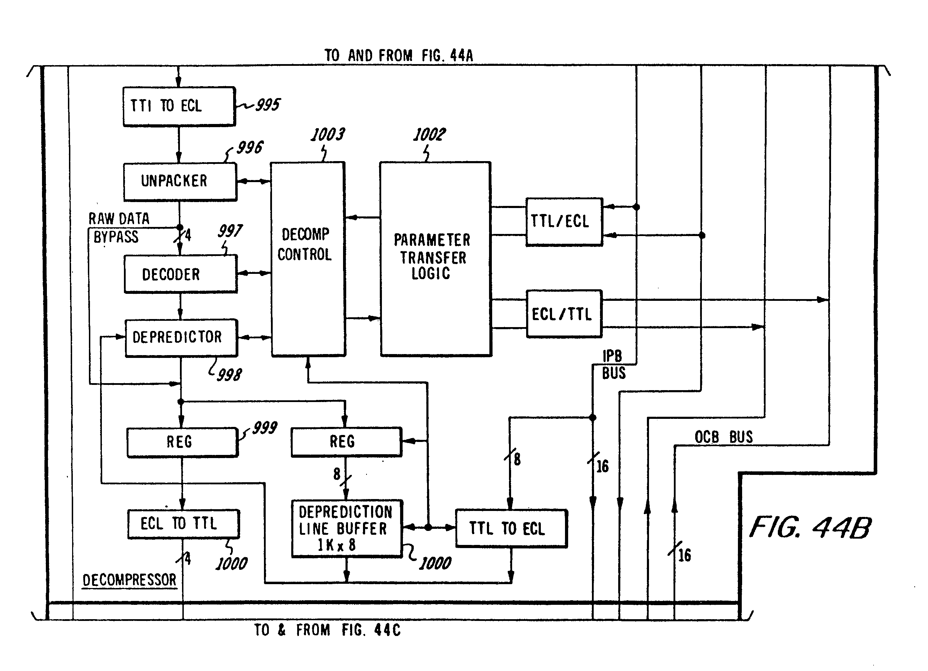

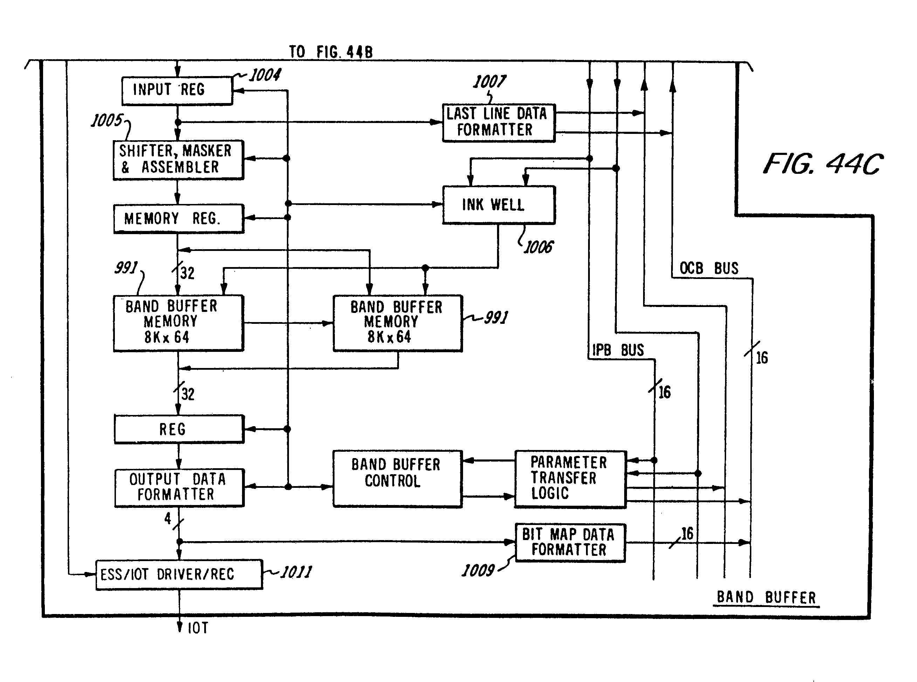

The main purpose of the Electronic Output Module (EOM), shown in Figure 44, is to take information from the system disk, transform it into video and couple it out to the image output terminal (IOT). The main sections of this EOM are the output port controller (OPC), the decompressor and the band buffer.

Generally, the output data are assembled in two band buffers 991, each capable of storing a band of output video up to 64 lines wide, bands being defined as vertical strips of the output copy, from right to left. In this system, a band represents approximately one-eighth of an inch.

This output data are initially stored on the disk in compressed form. Also, the various image and text portions of the final page are usually stored separately. Therefore, the main functions of the EOM are the decompression and merging of this data.

The procedure is to receive data from the processor interface initially at the input channel buffers 992, couple it through the decompressor section and load one of the band buffers 991 while the other band buffer 991 is driving the IOT. Each data element (a character, a line, etc.) will usually occupy a portion of several bands and each band is constructed from merged data separately, so a method for segmenting input data is required. More specifically, prior to printing, the data exists as a compressed and coded system of data elements or structures where each element is assigned a band number and a location within that band. Then, at print time, each band is constructed by receiving each element of that band into the EOM, decompressing it and loading it into a band buffer 991. Each stored data element is stored on disk along with the XY coordinates of its upper left hand corner, the width and height, and a pointer to font data elsewhere in memory if it is a font, to enable this merge function.

The signal sequence for the input of a set of characters which appear for the first time in any particular band is initiated by an EOM request, coupled to the processor through the processor interface 993, for the first block of data parameters. This parameter block will be loaded into the input parameter buffer 994 which will control the EOM into the appropriate state to accept the data. A parameter block comprises sixteen words, each sixteen bits wide. Next, the compressed data will be coupled through the input channel buffer 992 in sixteen-bit words.

At this point, font and image data are subject to different signal processing procedures. With a font, it is known beforehand how many blocks of data are required to print one band of a font. This information is generated at the time the processor software font compressor is run to generate the font set. For an image, it is not known how many sixteen word blocks of data will be required to finish the band because the compression ratio for an image is a variable. Therefore, when fonts are being handled, a font in this system being defined as a data structure having sixteen blocks of data or less per band, then the data is sequentially loaded into one of the input channel buffers 992. When completely loaded, the remainder of the hardware functions, unpacking, decoding, etc., will be initiated.

While the data in the first input channel buffer 992 is being unloaded, the second one is available, and may be loaded with the next block of parameters and the next character.

If, instead of a font, an image is being operated on, both input channel buffers 992 are used. After an initiating block of parameters is received, data are alternatively loaded into and unloaded from both input channel buffers 992 until the image data are exhausted. In this case, there is no parameter and data look-ahead as there can be with the handling of a font.

The output of each input channel buffer 992, in sixteen-bit words, is coupled through a TTL to ECL level shifter 995 to the unpacker 996, decoder 997 and depredictor 998 where the original video is recreated by reversing the original encoding process.

In the original encoding process, the video was first operated on by a predictor to lengthen the average run length. The predictor in this described system uses a two-line, six-element predictor for fonts and a two-line, eleven-element predictor for image data, but any predictor can be used in this application.

Next in the original encoding process, the video was encoded using a modified run length code which resulted in four, eight-and twelve-bit code words. Finally, these words were packed into sixteen-bit data words and stored on disk. The unpacker 996, decoder 997 and depredictor 998 reverse these steps to form the original video. The output of the depredictor 998 is then buffered in the register 999 shown and converted to TTL levels in the ECL to TTL converter 1000.

The deprediction line buffer 1001 contains enough memory to store the previous scan line so that the elements from the previous line may be used in the deprediction process. A problem arises at the beginning of a band, when the previous line may not be available. This happens when the processing of a block of data goes beyond a band boundary. In this case, the system status is saved and restored later, but the previous line of data in the depredictor is lost. To provide these data, the parameter block of data provided to the input parameter buffer 994 at the beginning of a band includes the previous line of video data.

The signal flow for the saved states is from the input parameter buffer 994 through the parameter transfer logic 1002 and decompressor control 1003 to the various registers, followed by the last scan line of video. However, the last line is not all immediately coupled to the depredictor 998, but is coupled in eight-bit bytes as required. The input parameter buffer 994, is, therefore, not available for receiving the next set of parameters until the first line of band buffer data is completely depredicted. On subsequent lines, data stored in the deprediction line buffer 1001 are used to supply the last line of data.

The above process assumes that, at the beginning of a band, the last line of the last band is no longer in the deprediction line buffer 1001. This would be true, for instance, if the decompressor was used to process fonts between the processing of two bands of image video. Then the last line of image video would have to be replaced before the first line of the next band could be depredicted. However, if no merge of data is taking place, and the previous line remains, the next parameter block of data will contain only the state information. In this case, the operation is faster since the last line need not be transferred to the computer for temporary storage, and re-transferred back to the decompressor for the next band.

After a band starts, then data are coupled through the pipeline comprising the unpacker 996, decoder 997 and depredictor 998 from one of the input channel buffers 992 on a demand basis, in sixteen-bit words.

In the band buffer section of Figure 44 the input register 1004 receives data in four-bit nibbles while the band buffers 991 have a thirty-two bit word size. Further, the four-bit words are bit-addressable within the scan line. Therefore, the shifter masker and assembler 1005 is provided to position the beginning of each four bits of data anywhere within the thirty-two bit band buffer word location, which results in the ultimate placing of data in any position on the scan line.

Data bits are either written, or not written, into the band buffers 991, but the color of the data is determined by the electronic ink well 1006, the choices being black, white or no ink. Data are merged at this point. For instance, simply loading text data in either color over image data will result in the merging of these data forms on the copy.

The last line data formatter 1007 couples the last line of a band back to the processor through the output channel buffer 1008 when this data must be saved for a future deprediction process (a state save). The registers are implemented so that the previous states of all registers are loaded into the output channel buffer 1008 at the same time that the new states are loaded in through the input parameter buffer 994. If the band has been completed, no save is necessary, but if more data must be merged into the same band, a state save is necessary. More specifically, the band buffer 991 keeps track of the width of the data. If this width goes to zero, then the data have been completely used and no save is necessary. If a save is necessary, then the output channel buffer 1008 outputs its first nine words of register data, followed by the last line of data. When the assembly of each band is complete, it is then output to the IOT.

An alternative path is to couple the fully assembled video band to the processor through the bit map data formatter 1009 in sixteen-bit words for future printing. This is necessary when the image process is unusually complex and takes more time than is allotted. Since the IOT printer runs at one speed, and the data merge occurs in real time, an incomplete merge would result in a "broken" page. When this alternate path is used, the merge process proceeds until finished, and the data are then coupled through the bit map data formatter 1009 to the processor where they are stored in compressed form. Now, the page can be printed in real time because the merging is complete and the EOM can process the entire page as if it were a single image coming from the input scanner. In this case, the printing of the first page will take longer than usual, but subsequent copies will be produced at the printer's rated speed. This path is also useful for testing purposes, since it exercises the entire system, and the results can be seen on the system CRT.

The ESS/IOT driver/receiver 1011 adjusts voltage levels between the IOT and the IOT command and status register 1012. The operation of this register is independent of the remainder of the EOM, and is used to couple commands directly between the IOT and the processor.

## Claims

1. A system for merging text and image data comprising: an input scanner (950) for scanning an original image to produce uncompressed image data; a compressor (975) for compressing said uncompressed image data prior to transmission or storage; a decompressor (953) for decompressing said compressed image data; a storage medium (962) for receiving character-coded word data, and a font generator for converting character-coded data into fonts, characterised by an output module for assembling said fonts and decompressed image data into a bit map, a bit map being defined as a block of memory corresponding to several lines of raster-output-scanner (ROS) output, and wherein each consecutive bit of memory corresponds to each consecutive dot on the raster, the fonts and images being loaded into said bit map in the positions in which they will appear on the final output, and a serial printer for printing out, line by line, the bit map contents.

2. The system of claim 1, characterised by a data bus (973) connecting said compressor (975), the storage medium (962) and the output module, and a processor (956) coupled to said data bus (973) for controlling said system.

3. The system of claim 2, characterised by a store (955) coupled to said data bus (973) for storing character-coded word and compressed image data.

4. The system of claim 2 or 3, characterised by a display (958) and an information input matrix (959) coupled to said data bus (973) to enable an operator to input control information to said processor (956).

5. The system of claim 3 or 4, characterised in that said compressor (975) further comprises a signal path (976) for coupling said input scanner (950) and said data bus (973) to enable the immediate storage in store (955) of image data in uncompressed form, and in that the signal path (976) between said memory (955) and compressor (975) is bidirectional, to allow the subsequent compression and storage of said uncompressed storage image data.

6. The system of claim 5, characterised by a communication link (969) for bidirectionally coupling said data bus (973) to a remote site to perform an electronic mail function by transmitting and receiving stored data.

7. The system of claim 5 or 6, characterised in that said compressor (975) is adapted to couple uncompressed image data from said scanner (950) to said data bus (973) if the compressor has expanded said data, and in that said output module (953) is adapted to merge said uncompressed image data into said bit map.

8. The system of any of claims 5 to 7, characterised in that said compressor (975) is adapted to attain a predetermined compression ratio by deleting the necessary amount of uncompressed image data and coupling the remaining uncompressed image data to the data bus (973) if the compression of said image data does not result in at least the predetermined amount of compression, and in that said output module (953) is adapted to replicate the remaining uncompressed image data to replace the deleted image data prior to said merging.

9. The system of claim 6 or any claim dependent therefrom, characterised in that said communication link (969) comprises telephone lines.

10. The system of claim 3 or any claim dependent therefrom, characterised in that said store (955) is adapted to store data equivalent to a plurality of bit maps to enable a plurality of multi-page documents to be printed by said printer (954) in collated order.

11. The system of claim 3 or any claim dependent therefrom, characterised in that said output module (953) is coupled through said data bus (973) to said compressor (975) to allow the compression and storage in said store, and subsequent decompression and printing of said bit map.

12. A method of producing a copy medium bearing image and word data from an original image and character-coded word inputs, comprising scanning the original image to produce raw image data, compressing said raw image data prior to storage or transmission, decompressing said compressed image data, creating word data in character-coded form and converting said character-coded word data into fonts, characterised by merging said decompressed image data and said fonts into a bit map, a bit map being defined as a block of memory corresponding to several lines of raster-output-scanner (ROS) output, and wherein each consecutive bit of memory corresponds to each consecutive dot on the raster, loading the fonts and images into said bit map in the positions in which they will appear on the final output, and printing said bit map by means of a serial printer.

13. The method of claim 12, characterised by the intermediate step of temporarily storing said compressed image data and said character-coded text.

14. The method of claim 13, characterised by the intermediate step of storing said raw image data prior to said compression step.

15. The method of any of claims 12 to 14, characterised by transmitting said compressed image data and said character-coded word data to, and receiving from, a remote site.

16. The method of any of claims 12 to 15, characterised in that said scanning step further comprises a halftoning step to produce said raw image data in halftone form.

17. The method of claim 13 or any claim dependent therefrom, characterised by a first repetition of the scanning, compressing, creating and storing steps prior to a second repetition of the converting, decompression, imaging and printing steps, to produce a collated document.

18. The method of claim 17, characterised by a further repetition of said first and second repetitions to produce a plurality of collated copy sets.

19. A method of producing a copy medium bearing image and word data from an original image and character-coded word inputs, comprising the steps of scanning the original image to produce raw image data, operating on said raw image data with a compressor (975) which may either compress or expand said raw data, creating the word data in character-coded form, storing said word data and either the raw image data resulting from the operating step if compression occurred, or the raw image data if expansion occurred, converting said character-coded word data into fonts and decompressing said compressed image data if said image data were stored in compressed form, characterised by merging either said compressed data (if compression occurred) or said stored raw image data, and said fonts into a bit map, where a bit map is defined as a block of memory corresponding to a number of lines of raster-output-scanner (ROS) output, and wherein each consecutive bit of memory corresponds to each consecutive dot on the raster, the fonts and images being loaded into said bit map in the position in which they will appear on the final output, and printing said bit map by means of a serial printer.

20. A method of producing a copy medium bearing image and word data from an original image and character-coded word inputs, comprising the steps of scanning the original image to produce raw image data, operating on said raw image data with a compressor to produce a first set of compressed image data, periodically deleting lines of raw image data to reduce said raw data by a predetermined factor, operating on said reduced data with a compressor to produce a second set of compressed image data, creating word data in character-coded form, storing said text and data and said first set of compressed image data if a predetermined compression ratio has been achieved, or said second set if said ratio has not been achieved by said first set, converting said character-coded word data to fonts, decompressing said selected set of stored image data, and replicating the remaining uncompressed image data to replace the deleted lines, if any, of image data, characterised by merging said decompressed image data and said fonts into a bit map, a bit map being defined as a block of memory corresponding to a number of lines of raster-output-scanner (ROS) output, and wherein each consecutive bit of memory corresponds to each consecutive dot on the raster, the fonts and images being loaded into said bit map in the positions in which they will appear on the final output, and printing the bit map by means of a serial printer.

21. The method of claim 20, characterised by the step of coupling stored data between a local and a remote site.

22. The method of claim 20 or 21, characterised in that said step of periodically deleting lines further comprises periodically deleting pixels in each remaining line to reduce further the volume of image data, and in that the step of replicating further comprises the step of replacing said deleted pixels of image data.

## Patentansprüche

1. System zum Verschmelzen von Text- und Bilddaten mit einem Eingangsabtaster (950) zum Abtasten eines Originalbildes, um unkomprimierte Bilddaten zu erzeugen; einem Kompressor (975) zum Komprimieren der unkomprimierten Bilddaten vor einer Aussendung oder Speicherung; einem Dehner (953) zum Dehnen der komprimierten Bilddaten; einem Speichermedium (962) zum Empfangen von zeichencodierten Wortdaten und einem Zeichenvorratgenerator zum Umwandeln zeichencodierter Daten in mehrere Zeichenvorräte, gekennzeichnet durch ein Ausgangsmodul zum Zusammensetzen der Zeichenvorräte und der gedehnten Bilddaten in eine Bitkarte, die definiert wird als ein Speicherblock entsprechend mehrerer Zeilen eines Rasterausgang-Abtaster-Ausgangssignal (ROS) und wobei jedes aufeinanderfolgende Speicherbit jedem aufeinanderfolgenden Punkt in dem Raster entspricht, wobei die Zeichenvorräte und -bilder in die Bitkarte in die jenigen Positionen geladen werden, in denen sie in der endgültigen Ausgangsinformation erscheinen werden, und einen Seriendrucker zum Ausdrucken -Zeile um Zeile- des Bitkarteninhalts.

2. System nach Anspruch 1, gekennzeichnet durch eine Datensammelleitung (973), die den Kompressor (975), das Speichermedium (962) und den Ausgangsmodul verbinden und einen Prozessor (956), der mit der Datensammelleitung (973) zur Steuerung des Systems verbunden ist.

3. System nach Anspruch 2, gekennzeichnet durch einen Speicher (955), der mit der Datensammelleitung (973) zum Speichern von zeichencodierten Wort- und komprimierten Bilddaten gekoppelt ist.

4. System nach Anspruch 2 oder 3, gekennzeichnet durch eine Anzeige (958) und eine Informationseingangsmatrix (959), die mit der Datensammelleitung (973) gekoppelt ist, um dem Benutzer die Eingabe von Steuerinformation zu dem Prozessor (956) zu ermöglichen.

5. System nach Anspruch 3 oder 4, dadurch gekennzeichnet, daß der Kompressor (975) ferner einen Signalweg (976) zum Koppeln des Eingangsabtasters (950) und der Datensammelleitung (973) aufweist, um die unmittelbare Speicherung von Bilddaten in unkomprimierter Form in dem Speicher (955) zu ermöglichen, und daß der Signalweg (976) zwischen dem Speicher (955) und dem Kompressor (975) bidirektional ist, um eine anschließende Komprimierung und Speicherung der unkomprimierten Speicherbilddaten zu ermöglichen.

6. System nach Anspruch 5, gekennzeichnet durch eine Übertragungsverbindung (969) zum bidirektionalen Koppeln der Datensammelleitung (973) mit einer entfernten Stelle, um eine elektronische Brieffunktion durch Aussenden und Empfangen gespeicherter Daten durchzuführen.

7. System nach Anspruch 5 oder 6, dadurch gekennzeichnet, daß der Kompressor (975) die unkomprimierten Bilddaten von dem Abtaster (950) an den Datenbus (973) koppeln kann, wenn der Kompressor die Daten gedehnt hat und daß der Ausgangsmodul (953) die unkomprimierten Bilddaten in die Bitkarte verschmelzen kann.

8. System nach einem der Ansprüche 5 bis 7, dadurch gekennzeichnet, daß der Kompressor (975) unter Weglassen der erforderlichen Menge an unkomprimierten Bilddaten und Ankoppeln der übrigen unkomprimierten Bilddaten an die Datensammelleitung (973) ein vorbestimmtes Komprimierungsverhältnis annehmen kann, wenn die Komprimierung der Bilddaten nicht zumindest zu einem vorbestimmten Komprimierungswert führt und daß der Ausgangsmodul (953) die übrigen unkomprimierten Bilddaten wiedergeben kann, um die weggelassenen Bilddaten vor dem Verschmelzen zu ersetzen.

9. System nach Anspruch 6 oder einem davon abhängigen Anspruch, dadurch gekennzeichnet, daß die Übertragungsverbindung (969) Telefonleitungen aufweist.

10. System nach Anspruch 3 oder einem davon abhängigen Anspruch, dadurch gekennzeichnet, daß der Speicher (955) Daten speichern kann, die äquivalent zu einer Vielzahl von Bitkarten sind, um eine Vielzahl von Vielseitendokumenten durch den Drucker (954) in kollationierter Ordnung ausdrucken zu lassen.

11. System nach Anspruch 3 oder einem davon abhängigen Anspruch, dadurch gekennzeichnet, daß der Ausgangsmodul (953) über die Datenverbindungsleitung (973) mit dem Kompressor (975) verbunden ist, um die Komprimierung und Speicherung in dem Speicher und eine nachfolgende Dekomprimierung und das Drucken der Bitkarte zu ermöglichen.

12. Verfahren zum Erzeugen eines Bild- und Wortdaten tragenden Kopiermediums an einem Originalbild und zeichencodierten Worteingaben unter Abtasten des Originalbildes zum Erzeugen von Rohbilddaten, Komprimieren der Rohbilddaten vor der Speicherung oder Aussendung, Dehnen der komprimierten Bilddaten, Erzeugen von Wortdaten in zeichencodierter Form und Umwandeln der zeichencodierten Wortdaten in Zeichenvorräte, gekennzeichnet durch Verschmelzen der gedehnten Bilddaten und der Zeichenvorräte in eine Bildkarte, wobei eine Bitkarte definiert wird als ein Speicherblock entsprechend mehreren Zeilen der Rasterausgangsabtaster-Kammer (ROS)-Ausgangsinformation und wobei jedes aufeinanderfolgende Speicherbit jedem aufeinanderfolgenden Punkt auf dem Raster entspricht, Laden der Zeichenvorräte und Bilder in die Bitkarte in denjenigen Positionen, in denen sie in der endgültigen Ausgangsinformation erscheint und Drucken der Bitkarte mittels eines Seriendruckers.

13. Verfahren nach Anspruch 12, gekennzeichnet durch den Zwischenschritt zweitweiliges Speichern der komprimierten Bilddaten und es zeichencodierten Textes.

14. Verfahren nach Anspruch 13, gekennzeichnet durch den Zwischenschritt Speichern der Rohbilddaten vor dem Komprimierungsschritt.

15. Verfahren nach einem der Ansprüche 12 bis 14, gekennzeichnet durch Senden der komprimierten Bilddaten und der zeichencodierten Wortdaten zu einer entfernten Stelle und dortiges Empfangen.

16. Verfahren nach einem der Ansprüche 12 bis 15, dadurch gekennzeichnet, daß der Abtastschritt ferner einen Halbtonungsschritt zum Erzeugen der Rohbilddaten in Halbtonform aufweist.

17. Verfahren nach Anspruch 13 oder einem davon abhängigen Anspruch, gekennzeichnet durch eine erste Wiederholung der Abtast-Komprimier-Erzeugungs- und Speicherschritte vor einer zweiten Wiederholung der Umwandlungs-Dehnungs-Bilderzeugungs- und Druckschritte, um ein kollationiertes Element zu erzeugen.

18. Verfahren nach Anspruch 17, gekennzeichnet durch eine weitere Wiederholung der ersten und zweiten Wiederholung, um eine Vielzahl von kollationierten Kopiesätzen zu erzeugen.

19. Verfahren zum Erzeugen eines Bild- und Wortdaten tragenden Kopiermediums aus einem Originalbild und zeichencodierten Worteingaben mit den Schritten Abtasten des Originalbildes zum Erzeugen von Rohbilddaten, Bearbeiten der Rohbilddaten mit einem Kompressor (975), der die Rohdaten entweder komprimieren oder dehnen kann, Erzeugen der Wortdaten in zeichencodierter Form, Speichern der Wortdaten und entweder der sich bei dem Bearbeitungsschritt ergebenden Rohbilddaten, falls eine Komprimierung aufgetreten ist, oder der Rohbilddaten, wenn eine Dehnung aufgetreten ist, Umwandeln der zeichencodierten Wortdaten in Zeichenvorräte und Dehnen der komprimierten Bilddaten, wenn die Bilddaten in komprimierter Form gespeichert worden sind, gekennzeichnet durch Verschmelzen entweder der komprimierten Daten (falls eine Komprimierung aufgetreten ist) oder der gespeicherten Rohbilddaten und der Zeichenvorräte in einer Bitkarte, wobei eine Bitkarte definiert ist als ein Speicheblock entsprechend einer Anzahl von Zeilen einer Rasterausgangsabtast-(ROS) Ausgangsinformation und wobei jedes aufeinanderfolgende Speicherbit jedem aufeinanderfolgenden Punkt in dem Raster entspricht, wobei die Zeichenvorräte und -bilder in die Bitkarte in der Position geladen werden, in der sie in der endgültigen Ausgangsinformation erscheinen werden, und Drucken der Bitkarte mittels eines Seriendruckers.

20. Verfahren zum Erzeugen eines Bild- und Wortdaten tragenden Kopiermediums aus einem Originalbild und zeichencodierten Worteingaben mit den Schritten Abtasten des Originalbildes zum Erzeugen von Rohbilddaten, Bearbeiten der Rohbilddaten mit einem Kompressor, um eine erste Gruppe komprimierter Bilddaten zu erzeugen, periodisches Weglassen von Zeilen von Rohbilddaten, um die Rohdaten um einen vorbestimmten Faktor zu reduzieren. Bearbeiten der reduzierten Daten mit einem Kompressor, um eine zweite Gruppe komprimierter Bilddaten zu erzeugen, Erzeugen von Wortdaten in zeichencodierter Form, Speichern des Textes und von Daten und der ersten Gruppe komprimierter Bilddaten, wenn ein vorbestimmtes Komprimierungsverhältnis erzielt wurde, oder der zweiten Gruppe, wenn das Verhältnis bei der ersten Gruppe nicht erzielt wurde, Umwandeln der zeichencodierten Wortdaten in Zeichenvorräte, denen der ausgewählten Gruppe gespeicherter Bilddaten und Wiedergeben der restlichen unkomprimierten Bilddaten, um die weggelassenen Zeilen von bilddaten, falls vorhanden, zu ersetzen, gekennzeichnet, durch Verschmelzen der gedehnten Bilddaten und der Zeichenvorräte in eine Bitkarte, wobei eine Bitkarte definiert wird als ein Speicherblock entsprechend einer Anzahl von Zeilen einer Rasterausgangs-Abtaster-(ROS)-Ausgangsinformation, und wobei jedes aufeinanderfolgende Speicherbit jedem aufeinanderfolgenden Punkt in dem Raster entspricht, die Zeichenvorräte und Bilder in die Bitkarte in denjenigen Positionen geladen werden, in denen sie in der endgültigen Ausgangsinformation erscheinen und Drucken der Bitkarte mittels eines Seriendruckers.

21. Verfahren nach Anspruch 20, gekennzeichnet durch den Schritt Koppeln der gespeicherten Daten zwischen einer örtlichen und einer entfernten Stelle.

22. Verfahren nach Anspruch 20 oder 21, dadurch gekennzeichnet, daß der Schritt des periodischen Weglassens von Zeilen ferner aufweist periodisches Weglassen von Bildelementen in jeder übrigen Zeile, um das Bilddatenvolumen weiter zu reduzieren und daß der Schritt Wiedergeben ferner aufweist den Schritt des Ersetzens der weggelassenen Bildelemente von Bilddaten.

**Revendications**

1. Système pour la fusion de données de texte et d'image comprenant: un dispositif de balayage d'entrée (950) pour balayer une image originale afin de produire des données d'image non comprimées; un compresseur (975) pour comprimer les données d'image non comprimées avant leur transmission ou leur stockage; un décompresseur (953) pour décomprimer les données d'image comprimées; un milieu de stockage (962) pour recevoir les données de mot à caractères codés, et un générateur de police pour convertir en police les données à caractères codées, caractérisé par un module de sortie pour assembler les polices et les données d'image décomprimées en un plan d'implantation binaire, un plan d'implantation étant défini comme un bloc de mémoire correspondant à plusieurs lignes de sortie du dispositif de balayage à sortie récurrente, et où chaque bit consécutif de mémoire correspond à chaque point consécutif du balayage récurrent, les polices et les images étant chargées dans le plan d'implantation dans les positions où elles apparaîtront sur la sortie finale, et une imprimante sérielle pour l'impression, ligne par ligne, du contenu du plan d'implantation binaire.

2. Système selon la revendication 1, caractérisé par un bus de données (973) connectant le compresseur (975), le milieu de stockage (962) et le module de sortie; et

— un processeur (956) couplé au bus de données (973) pour commander le système.

3. Système selon la revendication 2, caractérisé par une mémoire (955) couplée au bus de données (973) pour stocker des données d'image comprimées et de mot à caractères codés.

4. Système selon la revendication 2 ou 3, caractérisé par un dispositif d'affichage (958) et une matrice d'entrée d'information (959) couplés au bus de données (973) afin de permettre à un opérateur d'entrer une information de commande dans le processeur (956).

5. Système selon la revendication 3 ou 4, caractérisé en ce que le compresseur (975) comprend en outre un trajet de signal (976) pour coupler le dispositif de balayage d'entrée (950) et le bus de données (973) afin de permettre le stockage immédiat en mémoire (955) de données d'image sous forme non comprimée, et en ce que le trajet de signal (976) entre la mémoire (955) et le compresseur (975) est bidirectionnel, afin de permettre la compression et le stockage ultérieurs des données d'image de stockage non comprimées.

6. Système selon la revendication 5, caractérisé par une liaison de communication (969) pour un couplage bidirectionnel du bus de données (973) avec un emplacement situé à distance afin d'exécuter une fonction de correspondance par courrier électronique par transmission et réception de données stockées.

7. Système selon la revendication 5 ou 6, caractérisé en ce que le compresseur (975) est destiné à coupler des données d'image non comprimées provenant du dispositif de balayage (950) au bus de données (973) si le compresseur a étendu les données, et en ce que le module de sortie (953) est destiné à fondre les données d'image non comprimées pour donner un plan d'implantation binaire.

8. Système selon l'une quelconque des revendications 5 à 7, caractérisé en ce que le compresseur (975) est destiné à atteindre un rapport de compression prédéterminé en éliminant la quantité nécessaire de données d'image non comprimées et en couplant les données d'image non comprimées restantes au bus de données (973) si la compression des données d'image ne se traduit pas par au moins la quantité prédéterminée de compression, et en ce que le module de sortie (953) est destiné à faire une réplique des données d'image non comprimées restantes afin de remplacer les données d'image éliminées avant la fusion.

9. Système selon la revendication 6 ou l'une quelconque des revendications dépendantes, caractérisé en ce que la liaison de communication (969) comprend des lignes téléphoniques.

10. Système selon la revendication 3 ou l'une quelconque des revendications dépendantes, caractérisé en ce que la mémoire (955) est destinée à stocker des données équivalent à une pluralité de plans d'implantation binaires afin de permettre à une pluralité de documents multipages d'être imprimés par l'imprimante (954) dans l'ordre assemblé.

11. Système selon la revendication 3 ou l'une quelconque des revendications dépendantes, caractérisé en ce que le module de sortie (953) est couplé par l'intermédiaire du bus de données (973) au compresseur (975) afin de permettre la compression et le stockage dans la mémoire, et une décompression et impression ultérieures du plan d'implantation binaire.

12. Procédé de production d'un milieu de copie portant des données d'image et de mot à partir d'entrées d'image et de mots à caractères codés originaux, comprenant le balayage de l'image originale pour produire des données d'image brutes, la compression des données d'image brutes avant stockage ou transmission, la décompression des données d'image comprimées, la création de mots de données sous forme de caractères codés et la conversion en polices des données de mots à caractères codés, caractérisé par la fusion des données d'image décomprimées et des polices en plan d'implantation binaire, un plan d'implantation binaire étant défini par un bloc de mémoire correspondant à plusieurs lignes de la sortie du dispositif de balayage à sortie récurrente, et où chaque bit consécutif de mémoire correspond à chaque point consécutif du balayage, le chargement des polices et des images dans le plan d'implantation binaire dans les positions où elles apparaîtront dans la sortie finale, et l'impression du plan d'implantation au moyen d'une imprimante sérielle.

13. Procédé selon la revendication 12, caractérisé par l'étape intermédiaire de stockage temporaire des données d'image comprimées et du texte à caractères codés.

14. Procédé selon la revendication 13, caractérisé par l'étape intermédiaire de stockage des données d'image brutes avant l'étape de compression.

15. Procédé selon l'une quelconque des revendications 12 à 14, caractérisé par la transmission des données d'image comprimées et des données de mots à caractères codés vers un emplacement situé à distance, et la réception en provenance de cet emplacement.

16. Procédé selon l'une quelconque des revendications 12 à 15, caractérisé en ce que l'étape de balayage comprend en outre une étape de mise en demi-teinte afin de produire des données d'image brutes sous forme de demi-teinte.

17. Procédé selon la revendication 13 ou l'une quelconque des revendications dépendantes, caractérisé par une première répétition des étapes de balayage, compression, création et stockage avant une seconde répétition des étapes de conversion, décompression, formation d'image et impressions, afin de produire un document assemblé.

18. Procédé selon la revendication 17, caractérisé par une nouvelle répétition des première et seconde répétitions afin de produire une pluralité de jeux de copies assemblés.

19. Procédé de production d'un milieu de copie portant des données d'image et de mots à partir d'entrées d'image et de mots à caractères codés originaux, comprent les étapes de balayage de l'image originale afin de produire des données d'image brutes, de traitement des données d'image brutes avec un compresseur (975) qui peut soit comprimer soit étendre les données brutes, de création des données de mot sous forme de caractères codés, de stockage des données de mot et soit des données d'image brutes résultant de l'étape de traitement si la compression a eu lieu, soit des données d'image brutes si l'extension a eu lieu, de conversion des données de mot à caractères codés en polices et de décompression des données d'image comprimées si les données d'image ont été stockées sous forme comprimée, caractérisé par la fusion soit des données comprimées (si la compression a eu lieu), soit des données d'image brutes stockées, et des polices en un plan d'implantation binaire, où un plan d'implantation binaire est défini par un bloc de mémoire correspondant à un certain nombre de lignes de la sortie du dispositif de balayage à sortie récurrente, et où chaque bit consécutif de mémoire correspond à chaque point consécutif du balayage, les polices et les images étant chargées dans le plan d'implantation binaire dans la position où elles apparaîtront à la sortie finale et l'impression du plan d'implantation binaire au moyen d'une imprimante sérielle.

20. Procédé de production d'un milieu de copie portant des données d'image et de mot à partir d'entrées d'images et de mots à caractères codés originaux, comprenant les étapes de balayage de l'image originale afin de produire des données d'image brutes, de traitement des données d'image brutes avec un compresseur afin de produire un premier jeu de données d'image comprimées, d'élimination périodique de lignes de données d'image brutes afin de réduire les données brutes suivant un facteur prédéterminé, de traitement des données réduites avec un compresseur afin de produire un second jeu de données d'image comprimées, de création de données de mot sous forme de caractères codés, de stockage du texte et de données et du premier jeu de données d'image comprimées si un rapport de compression prédéterminé a été obtenu, ou du second jeu si ce rapport n'a pas été atteint par le premier jeu, de conversion des données de mot à caractères codés en polices, de décompression du jeu sélectionné de données d'image stockées, et de reproduction des données d'image non comprimées restantes afin de remplacer les lignes abandonnées, si tel est le cas, de données d'image, caractérisé par la fusion de données d'image décomprimées et des polices en un plan d'implantation binaire, un plan d'implantation binaire étant défini comme un bloc de mémoire correspondant à un certain nombre de lignes de la sortie du dispositif de balayage à sortie récurrente, et où chaque bit consécutif de mémoire correspond à chaque point consécutif du balayage, les polices et les images étant chargées dans le plan d'implantation binaire dans les positions où elles apparaîtront à la sortie finale, et l'impression du plan d'implantation binaire au moyen d'une imprimante sérielle.

21. Procédé selon la revendication 20, caractérisé par l'étape de couplage de données stockées entre un emplacement local et un emplacement situé à distance.

22. Procédé selon la revendication 20 ou 21, caractérisé en ce que l'étape de suppression périodique de lignes comprend en outre la suppression périodique d'éléments d'image dans chaque ligne restante afin de réduire encore le volume des données d'image et

— en ce que l'étape de reproduction comprend en outre l'étape de remplacement des éléments d'image supprimés des données d'image.

12
18
26
25
39
27
32
22
69
65
67
29
70
28
30
24
36
35
38
37
57
20
41
40
59
56
58
55
54
62
61
34
66
56
36
21


FIG. 1

FIG. 2
10
81
57
28
32
40
41
39
37
35
55
58
59
65
56
900
70

FIG.3
22
18
35
24
27
10
37
70
25
55
40,41
39
(X)
(Y)
58
34
65
12
21
20

FIG. 4
57
40
41
55
28
58
62
61
59
54
65
69
66
8
67
72
54
56
75
74
70
73

FIG. 5
124
101
117
106
100
104
115
113
102
120
128
40
116
127
121
140
120'
112
120
130
115
116
52
52
108
41
117
127
112
109
121
142
127
126

FIG. 6
52
175
156
158
128
174
154
152
151
171
170
165
161
162
160
101

160
160
170
101
130
164
128
159
151
156
132
152
162
161
143
111
171
165
174
158
154
55
FIG. 7
52

FIG. 8

FIG. 9
293
296
201
204
297
232
216
216
235
299
236
238
230
298
240
206
205
241
265
233
300
260

200
205
206
232
233
235
FIG. 10

FIG. 11
24
204
296
293
294
288
292
291
290

FIG. 12
FIG. 13
200
281
215
287
284
287
288
289
283
282
28
302
305
303
266
900
28

ADH
SCANNER
14
12
41
40
300
C.C.D. SENSOR BOARD (S.B)
304
IMAGE PROCESSING MODULE (I.P.M.)
I/O 721
306
VIDEO OUTPUT BOARD (V.O.B.)
VIDEO OUT
16
308
MPU CONTROLLER (M.P.U.)
302
SCAN ELECTRONICS MODULE (S.E.M.)
PPI 405
309
OPERATOR CONTROL PANEL

FIG. 14

FIG. 15
ØR
Ø2-1
Ø1-1
ØXA
ØXA
Ø2-1
Ø1-1
321
313
329
322
318
316
310
311
315
318
318
322
326
OUTPUT GATE
328
VIDEO IMAGE SIGNALS OUT
40
320
ENABLE

ØR
Ø1-1
Ø2-1
Ø1-2
Ø2-2
ØXA
ØXB
GOOD DATA
VALID VIDEO ARRAY 40
VALID VIDEO ARRAY 41
COUNT
STITCH
PIXEL COUNT
0
1
1716
1724
1732


FIG. 16A

$\phi_{1-1}$
$\phi_{2-1}$
$\phi_{1-2}$
$\phi_{2-2}$
$\phi_{XA}$
$\phi_{XB}$
GOOD DATA
VALID VIDEO ARRAY 41
ZERO LEVEL RESTORE
TRANSFER
TRANSFER
3447
3462
3473
3478
3489


FIG. 16b

Ø2-2
ØXB
Ø1-2
41
ØXA
Ø1-1
Ø2-1
40
333
333
331
337
336
336
336
330
335
335


FIG. 17a

FIG. 17b
S/H
CROSS-OVER SWITCH & ZERO RESTORE
SAMPLE
SAMPLE
(SAMPLE)
(AGC)
(AGC)
(Z,R)
ANALOG VIDEO
(STITCH)
335
339
345
345
340
340
331
330
425
341
341
342
342
342
343
343
344
344
350
351
353

FIG. 18a
780
782
8
712
784
8
BUFFER
TO: 290,260,225
291, 65
801
SCAN DIRECTION
799
795
791
790
PHASE
LOCK
LOOP
800
MUX
796
794
798
MPU
308
(SPEED)
PROG.
FREQUENCY
GENERATOR
OPEN LOOP
DRIVER
POWER
AMP.
I/O
39
MOTOR
806
FORWARD
SCAN
COUNTER
803
786
ENCODER
787
788
REVERSE
RE-TRACE
COUNTER
(FOR.)
(REV.)
DIRECTION
DETECTOR
808
(DIRECTION)

FIG. 18b
405
400
409
(2 IPS)
TO: IPM 304
CRYSTAL CLOCK GENERATOR
6ØR
402
SUB ØR CLOCK GEN.
(SHSMP)
(2ØR)
(ØR)
553
TO: IPM 304
(ØR)
TO: SB 300
SPEED SELECT
POWER REGULATOR
TO: SB 300
SUB ØR
MPU 308
I/O
406
408
410
ØR
MASTER PIXEL COUNTER
407
12
COUNT DECODE
EVENT TIMER
ØL
LINE SYNC.
GOOD DATA
ØXA, ØXB
Ø1-1, Ø1-2, Ø2-1, Ø2-2
ØXA, ØXB
420
424
423
421
(START LINE)
ADDRESS COUNTER
BAD PIXEL RAM
SAMPLE
422
425
416
(SELECT)
A.G.C PULSE GENERATOR
(RDVR, RDDR)
TO: IPM 304
(ENABLE)
(READ/WRITE)
915
CONTROLS VIDEO AMPLIFIER GAIN (912, 913)
(GAIN)
TO: SB 300
916

406
437
REGISTER
407
12
437
REGISTER
407
12
437
REGISTER
407
12
+
+
+
$\phi_R$
FROM: 402

FIG. 19

FIG. 20
MPU
SWITCH
502
VOB
RAM
D / A
503
CALIBRATION VIDEO
500
SWITCH
ANALOG VIDEO FROM SB 300
550
501
DETECT AND HOLD
504
SWITCH
560
506
520
A/D
522
SWITCH
6
TO: VOB 306
8
TO: MPU 308
525
SHADING
526
D/A
516
REDUCE
SCREEN/ THRESH
581
517
D/A
508
SWITCH
505
LINEAR INTERPOLATOR FILTER
512
I-D ENHANCE FILTER
510
LINEAR INTERPOLATOR FILTER
I-D ENHANCE FILTER
509
SWITCH
514
THRESHOLDER
591
TO: VOB 306
519
8
TO: MPU 308

FIG. 21
FROM: MOU 308
DIAGONISTIC (MODE)
CALIBRATION VIDEO
VIDEO
FROM: SB 300
500
501
550
552
553
555
557
558
559
DIGITAL DELAY
DELAY
(DSHSMP)
(SHSMP)
(S.H.E.)
SAMPLE COMMAND
VIDEO OUT
TO: 504

FIG. 22
(PULL UP)
(EADTB) A D TIME BASE
SHSMP
553
N DSHSMP
ADMODE
559
800
2Ø MHZ
ADMODE
SBYTRQ
N 2Ø MHZ
802
(STADTB)
801
553
(SHSMP)
552
(S.H.E)
START A/D CONVRERSION (STCNN)
TO:520
(ADRGLD)
TO:595
(DRGI)

SW.
SW.
SW.
DELAY LINE
DELAY LINE
OUTPUT
TO: 514
TO: A/D 520
(SPEED)
511
ADMODE
800
VIDEO
IN
FROM: 501
504
508
509
510
512
560
561
562
564
566
567
568
569
570
571
572
576

FIG. 23

FIG. 24
TO:520
930
928
D/A
FROM: 926
(SHADING SIGNAL)
929
SAMPLER
590
BINARY OUTPUT
TO: VOB 306
1
591
579
(XCLKM)
575
514
578
576
(VIDEO)
FROM:509
517
D/A
SCREEN THRESHOLD
516
581

FIG. 25a
516
MUX
742
MUX
744
W.E.
RAM
741
TRI-STATE
LATCH
740
FIXED
THRESHOLD
746
745
581
SELECT
READ ENABLE
(DISABLE)
738
743
714
712
716
739
LOCAL READ ENABLE
COLUMN
748
ROW
749
RESET
RESET
747
714'
$\emptyset_R$
$\emptyset_L$

FIG. 25b
721
724
716
714
712
ADDRESS
DECODER
731
SCALE
COEFF.
LATCH
726
732
(A/D MODE)
MODE
CONTROL
LATCH
727
714
712
CONTROL
BUS
ADDRESS
BUS
DATA
BUS

FIG. 26
519
593
REGISTER
593
REGISTER
592
REGISTER
592
REGISTER
8
597
TO: MPU 308
TO: VOB 306
(RDVR) READ VIDEO REGISTER
(PULL UP 1)
NRDVR
NDVRCLK
NXCLKM
(VIDEO)
591
1
1

TO: 522
8
A/D
520
FROM: 501
(VIDEO)
560
(A/D CLK)
(STCNN)
START A/D CONVERSION
(SHADING SIGNALS)
FROM: 928
930

FIG. 27

FIG. 28
A/D REGISTER
REGISTER READ
(RDDR)
REGISTER LOAD
(ADRGLD)
+V
REGISTER
REGISTER
REGISTER
REGISTER
595
595
596
596
(PULL UP)
TO:592,593
(VIDEO)
TO:VOB
306
(VIDEO)
TO: MPU
308
(VIDEO)
FROM:
520

(2ips)
409
AD MODE
DRG I
SBYTRQ
RESET
NXCLKM
NRDVR
NRDDR
GOOD DATA
FRAMED PAGE
2ØMH 20
TO: FIG. 22
(PULL UP)
AD CLK
TO: 520
AD MODE
TO: FIG. 22
800
NDVRCLK
TO: 592
EADTB
TO: FIG. 22
GOOD DATA

FIG. 29

FIG. 30
308
710
700
DECODE COMMAND & STATUS LOGIC
C.P.U.
OTHER APPARATUS
718
708
R.T.C.
INTERRUPT
LATCH
I / O
D.M.A.
COUNTER
702
719
720
DRIVER
BI-DIRECTIONAL DRIVER
717
717
DRIVER
16
(ADDRESS BUS)
714
8
712
(DATA BUS)
716
(CONTROL BUS)
704
706
721
302
ROM
RAM
I/O
S.E.M.
304
10
IPM
IIT

FIG. 31

750
480
2Ø
BRM
(XCLKM)
591
ff
590
(VIDEO)
LINE SYN.
DIGITAL DELAY
BRM
GATED LINE SYNC.
751
731
SCALE COEFF. LATCH

FIG. 34

INPUT Ø
OUTPUT Øs

INPUT / OUTPUT OF A TWO STAGE BRM

FIG. 32
912
913
915
916
D/A
CONVERTER
D/A
CONVERTER
FROM:
MPU 308
FROM:
MPU 308
TO: FIG. 17
(A.G.C.)
TO: FIG. 17
(A.G.C.)

FIG. 33
28
65
40,41
900
300
S.B.
425
(SAMPLE)
423
422
424
SAMPLE CLOCK
420
BAD PIXEL RAM
READ
WRITE
FROM: MPU 308
PIXEL CLOCK Ø
421
ADDRESS COUNTER
(START LINE)
926
SHADING RAM
READ
WRITE
FROM: MPU 308
931
FIXED REF.
932
928
D/A
930
940
∝1
941
∝2
929
925
ADDER DIVIDER
DATA OUT
6
594
595
520
A/D
514
THRESHOLDER
1
DATA OUT
591

FIG. 35

Ø
755
CLK
4
306
756
CLK.
591
1
DATA
FORMATTER
DATA 4
INTERFACE
DATA
4
LINE
CLK
715
MPU
INTERFACE
761
754
716
GRAY
SCALE
VIDEO
6
DPCM
4
760
714
DELAY
BUFFER
CODE
STORAGE
LINE LENGTH
SYNC SIGNAL
CODE
GATED LINE
SYNC SIGNAL
(757)
SWITCHING
SIGNAL
(759)
LINESYNC.
& SCAN
BOUNDRY
CONTROL
RESET
DELAYED LINE
SYNC SIGNAL(758)
753

GATED LINE SYNC. SIGNAL
INPUT
757
DELAYED LINE SYNC. SIGNAL
758
LINE & PICTORIAL
INPUT .MODE
OUTPUT
SWITCHING SIGNAL
759
PICTORIAL
ENHANCEMENT
MODE

DIRECTION DETECTOR
788
787
786
SHAFT ENCODER
E.O.S
28
37
32
HOME
39
POWER AMP.
798
V.
801
800
L.P.E. AMP.
796
799
797
PHASE DETECTOR
792
MULTIPLEXER
793
795
(FOR)
(REV.)
(REF.)
791
PROG. FREQ. GENERATOR
790
(SPEED)
M.P.U.
308
DIRECTION
(MODE)
309
REV. CO.
FOR. CO.
808
806

FIG. 36

950
951
952
953
954
IIT
EIM
DISC.
CONTROL
EOM
IOT
973
BUS (~150 MBPS)
MEMORY
PROCESSOR
STANDARD PERIPH.
BIT MAP DISPLAY
955
956
957
958
958
965
966
971
ESS
ESS POWER SUPPLIES
968
967
SYS FLOPPY DISK
RIGID DISK
EMI
RFI

FIG. 37

FIG. 39

958
OPERATOR
PANEL
960
SADH
970
961
RIS
965
962
962
MAG MEDIA
OR
COMMUNICATION
MAG MEDIA
OR
COMMUNICATION
ESS
971
963
964
967
IIT
POWER
SUPPLS
IIT
LOGIC
BOARDS
RIGID DISK

FIG. 38

CONTROL
ALU
MISC
MEMORY CONTROL
956
973
1.5 mb STORAGE
1.5 mb STORAGE
955
SPARE 1
SPARE 2
SPARE 3
HIGH BANDWIDTH
CAMPUS COMMUNICATIONS OPTION
970
WIRE
974
IDC
DISK CONTROL
DISK DATA
971
EIM
IPC
COMPRESSOR
951
IIT 1
IIT 2
UIB
972
SCB
969
MAGNETIC MEDIA
SYSTEM POWER SEQUENCE
SYSTEM MONITOR
CCITT V.35 56 kb/s
RS232C
RS366
SYSTEM FLOPPY
KEYBOARD & CURSOR
CRT DISPLAY & TOUCH PANEL
EOM
INPUT
OUTPUT
ASSEMBLY
BANDS
DECOMPRESSOR
953
IOT 1
IOT 2
BUS STRUCTURE ON ESS BACKPANEL

FIG. 40

976
950
IMAGE INPUT TERMINAL (IIT) SUBSYSTEM
FROM I/O BUS
44
INPUT PORT CONTROLLER (IPC)
2
7
TO I/O BUS
19
7
DATA COMPRESSOR MODULE
14
973
FROM I/O BUS
18
TO I/O BUS
17
975

FIG. 41

SYSTEM FLOPPY DISK
968
POWER CONTROL RELAYS
POWER/TEMP. MONITOR PANEL
CCITT V.35 56kb/s
DATA SERVICE UNIT
10
8
6
18
10
969
SYSTEM CONTROL BOARD (SCB)
15
KEYBOARD AND CURSOR
977
RS366
14
AUTO DIALER
979
14
17
RS232
MODEM
ADAPTER
978
PHONE LINES
SCB VIDEO
12
SCB CONTROL
DC POWER
2
ESS CARD CAGE
USERS INTERFACE BOARD (UIB) (AN EXTENSION OF STAR IUTFP BOARD)
972
I/O BUS
973
973
956
955
PROCESSOR AND MEMORY
959
OPERATOR PANEL
· CRT DISPLAY
· TOUCH PANEL
· POWER ON/OFF


FIG. 42

PHONE LINE
978
ADAPTER
983
MODEM
980
DATA SERVICE UNIT
DDS
986
AUTO DIAL
979
RS232C
5
9
CCITT V.35 56kb/s
5
9
EIA DRI/REC CHANNEL B
984
EIA & DIFFERENTIAL DRI & REC. CHANNEL A
985
5
6
EIA. REC.
989
EIA. DRI.
990
5
6
ZILOG Z80-S10 (RS232C, SDKC, HDLC, BISYNC, ASYNC, 56kb/s)
982
8212 INPUT PORT (RS366)
987
8212 OUTPUT PORT (RS366)
988
5
5
SCB BUS
981

FIG. 43

FIG. 44A
PROCESSOR INTERFACE
993
OUTPUT CHANNEL BUFFER 512 x 16
1008
INPUT PARAMETER BUFFER 512x16
994
EOM COMMAND & STATUS
INPUT CHANNEL BUFFER 256 x 16
992
INPUT CHANNEL BUFFER 256 x 16
16
IOT COMMAND & STATUS
1012
PARAMETER TRANSFER CONTROL
ICB TEST
OPC
TO FIG. 44B

TO AND FROM FIG. 44A
OCB BUS
16
IPB BUS
16
TTL/ECL
ECL/TTL
8
TTL TO ECL
1002
PARAMETER TRANSFER LOGIC
1003
DECOMP CONTROL
REG
8
DEPREDICTION LINE BUFFER 1K x 8
1000
995
TTI TO ECL
996
UNPACKER
4
RAW DATA BYPASS
997
DECODER
998
DEPREDICTOR
999
REG
1000
ECL TO TTL
4
DECOMPRESSOR
TO & FROM FIG. 44C

FIG. 44B

FIG. 44C
TO FIG. 44B
INPUT REG
1004
SHIFTER, MASKER & ASSEMBLER
1005
MEMORY REG.
32
BAND BUFFER MEMORY 8K x 64
991
32
REG
OUTPUT DATA FORMATTER
4
ESS/IOT DRIVER/REC
1011
IOT
LAST LINE DATA FORMATTER
1007
INK WELL
1006
BAND BUFFER MEMORY 8K x 64
991
BAND BUFFER CONTROL
PARAMETER TRANSFER LOGIC
BIT MAP DATA FORMATTER
1009
OCB BUS
16
IPB BUS
16
16
BAND BUFFER